# EUROPÄISCHE PATENTSCHRIFT

(11) **EP 0 929 864 B1**
(45) Veröffentlichungstag und Bekanntmachung des Hinweises auf die Patenterteilung: **21.03.2001**
(21) Anmeldenummer: 97941728.4
(22) Anmeldetag: 24.09.1997
(51) Int. Cl.: G06F 9/46

(54) **KOORDINATIONS-SYSTEM**
COORDINATION SYSTEM
SYSTEME DE COORDINATION

(30) Priorität: 30.09.1996 AT 57396
(43) Veröffentlichungstag der Anmeldung: 21.07.1999
(73) Patentinhaber: Kühn, Eva, 1040 Wien (AT)
(72) Erfinder: Kühn, Eva, 1040 Wien (AT)
(74) Vertreter: Weinzinger, Arnulf, Dipl.-Ing.
(86) Internationale Anmeldenummer: AT9700209
(87) Internationale Veröffentlichungsnummer: WO9814870

(56) Entgegenhaltungen:
- KUHN E: "Fault-tolerance for communicating multidatabase transactions" PROCEEDINGS OF THE TWENTY-SEVENTH HAWAII INTERNATIONAL CONFERENCE ON SYSTEM SCIENCES. VOL.II: SOFTWARE TECHNOLOGY (CAT. NO.94TH0607-2), PROCEEDINGS OF THE TWENTY-SEVENTH ANNUAL HAWAII INTERNATIONAL CONFERENCE ON SYSTEM SCIENCES, WAILEA, HI, USA, 4-7 , ISBN 0-8186-5060-5, 1994, LOS ALAMITOS, CA, USA, IEEE COMPUT. SOC. PRESS, USA, Seiten 323-332, XP002046419 in der Anmeldung erwähnt

## Beschreibung

Die Erfindung betrifft ein System zur Koordination verteilter Programme, Dienstleistungen und Daten mit Hilfe von Anwendungsprogrammen in einem Netzwerk mit Rechnern, auf denen lokale Softwaresysteme bedienende Koordinations-Server laufen, gemäß dem einleitenden Teil von Anspruch 1.

Unter Objekten sind allgemein für sich abgeschlossene Einheiten zur verstehen, die sowohl Daten als auch bestimmte Verhaltensweisen enthalten, und die mit der Außenwelt durch Austauschen von Nachrichten kommunizieren bzw. zusammenarbeiten. Die Außenwelt ist dabei insbesondere wiederum durch andere Objekte gebildet. Beispielsweise können Kunden(-Dateien), aber auch Rechnungen oder Lieferscheine Objekte bilden. Unter Transaktionen sind andererseits Einheiten von Aktionen zu verstehen, die üblicherweise bestimmte Eigenschaften, nämlich Atomizität, Konsistenz, Isoliertheit und Dauerhaftigkeit, erfüllen müssen. Die Ergebnisse von Transaktionen müssen gegen Fehler jeglicher Art geschützt werden. Diese Forderungen werden in der Literatur als ACID-Eigenschaften bezeichnet und sind in der Praxis vor allem bei Datenbankzugriffen von Bedeutung, insbesondere wenn parallele und koordinierte Veränderungen verschiedener Einträge erfolgen sollen. Wenn nun in diesem Fall eine Transaktion nicht vollständig durchführbar sein sollte, so könnte dieser Umstand zu einem inkonsistenten Datenbestand führen. Wesentlich ist hier demgemäß, daß eine derartige Transaktion entweder zur Gänze richtig oder gar nicht durchgeführt wird (Atomizität).

Die rasante Entwicklung von Netzwerktechnologien, die auch zur weltweiten Einführung von Internet geführt hat, bringt immer mehr neue Anwendungsgebiete mit sich, wie etwa das Erstellen von Programmen durch Koordinieren von im Netz verteilten Programmstücken und Ressourcen anstatt der Erstellung von sequentiellen Programmen, und das Einkaufen von Dienstleistungen im Netzwerk. Die hierfür erforderliche Softwareunterstützung muß ein hohes Maß an Zuverlässigkeit und Verfügbarkeit garantieren.

Bei bekannten Systemen (siehe z.B. EP 574 303 A oder US 5 555 427 A) werden in erster Linie Nachrichten zur Kommunikation und zur Synchronisation von parallel laufenden Aktivitäten ausgetauscht (sog. "message passing"). Beispielsweise wird bei vielen bekannten Systemen mit speziellen Aufrufen, den RPC-Aufrufen ("Remote Procedure Call"), eine Funktion auf einem anderen Rechner im Netz - mit Parameterübergabe usw., ähnlich wie bei Aufrufen einer lokalen Funktion - aufgerufen. Diese Form von Nachrichtenaustausch zwecks Kommunikation und Synchronisation zieht jedoch verschiedene Nachteile nach sich. So ist es notwendig, auf zugrundeliegende Hardware-Architekturen eingehen zu müssen, wobei auch zumeist die Anpassung von Anwendungsprogrammen an neue Hardware-Umgebungen oder aber neue Anwendungsanforderungen hinsichtlich Effizienz, Zuverlässigkeit und Verfügbarkeit das Modifizieren des Programmcodes erfordert. Weiters nehmen diese in der Literatur als Client/Server-Architekturen bezeichneten Systeme (siehe z.B. US 5 381 534 A) dem Programmierer weder die Synchronisation von gleichzeitigem Datenzugriff noch die Replikation von Daten ab. Programme, die mit solchen Systemen erstellt werden, weisen natürlicherweise eine hierarchische Struktur auf und zerfallen in Client-Komponenten und in Server-Komponenten, die beide vom Programmierer zu erstellen sind. Die hierarchische Struktur führt bei großen Anwendungen auch zu Performance-Problemen.

Alternative Ansätze zum Nachrichtenaustausch basieren auf der Verwendung gemeinsamer Daten (Objekte) für die Kommunikation und Synchronisation parallel laufender, verteilter Prozesse. Der Vorteil dieses Ansatzes ist, daß bei gleicher Mächtigkeit eine konzeptionell höhere Abstraktion der zugrundeliegenden Hardware geboten wird. Programme, die auf diesem Paradigma basieren, können kürzer und besser wartbar sein. Weiters können Systeme, die gemeinsame Daten bieten, dem Programmierer bei der Erstellung von Programmen deren "Server"-Komponente abnehmen.

Allerdings weisen die existierenden Ansätze, die auf gemeinsamen Daten beruhen, in der Regel mehrere der folgenden Nachteile auf:
(a) Es gibt globale Namen für die Objekte, was bei großen Datenmengen sehr schnell zu Namenskonflikten führt und die Möglichkeit, automatisch Objekte aufzuräumen, unterbindet.
(b) Die Verwaltung der Objekte bietet keine Ausfallsicherheit bei Netzwerk- und Systemfehlern.
(c) Der Lösungsansatz ist nicht in jede beliebige Programmiersprache einbettbar, d.h. möglicherweise nur in Form einer neuen Sprache verfügbar.
(d) Die Atomizität mehrerer Kommunikationsschritte wird nicht geboten.
(e) Transaktionen werden in der Regel nicht unterstützt. In den wenigen Ausnahmen werden nur klassische Transaktionen unterstützt, was für die Koordination verteilter Systeme nicht ausreichend ist. Ein frühzeitiges (nicht isoliertes) "Kommit" (Vollzugsmeldung) von Untertransaktionen ist nicht möglich, so daß Zwischenergebnisse von kooperierenden Transaktionen nicht sichtbar gemacht und Sperren in lokalen Systemen nicht frühzeitig aufgehoben werden können; gerade diese beiden Möglichkeiten wären aber wesentlich für die Autonomie lokaler Systeme. Weitere in Zusammenhang mit Transaktionen wünschenswerte Eigenschaften wären eine semantische Kompensation (die benötigt würde, um trotz Aufhebung der Isolation von Transaktionen Atomizität garantieren zu können) und eine Funktionsreplikation, die vorsieht, Teiltransaktionen im Fehlerfall durch andere ersetzen zu können.
(f) Es wird genau ein Verfahren zur Verwaltung der konsistenten Sicht des logisch gemeinsamen Objektraums auf der verteilten Hardware geboten. Damit ist der Programmierer dem System hinsichtlich erreichbarer Fehlertoleranz und Performancemöglichkeiten ausgeliefert.
(g) Das Anbieten von Dienstleistungen, die mit Hilfe der gemeinsamen Daten realisiert wurden, wird nicht unterstützt. Eine benutzerspezifische Unterscheidung wäre besonders wünschenswert.
(h) Das Entfernen nicht länger benötigter Daten wird nicht automatisch unterstützt.
(i) Es gibt keine Zugriffskontrolle: jeder, der den Namen eines Objekts errät, darf darauf zugreifen.
(j) Es gibt keine Möglichkeit, die Berechnungen, die die Objekte verwenden, hinsichtlich Wiederherstellbarkeit, nachdem Fehler auftreten, zu unterstützen.
(k) Das Verhalten des Systems ist unspezifiziert bzw. sind alle Daten verloren, wenn ein partieller Fehler auftritt, d.h. wenn beispielsweise auch nur einer der beteiligten verteilten Rechner einen fatalen Systemabsturz aufweist, bei dem z.B. die Daten der Festplatte zerstört wurden.

In den Aufsätzen "Fault-Tolerance for Communicating Multidatabase Transactions", eva Kühn, Proceedings of the 27th Hawaii International Conference on System Sciences, ACM, IEEE, 4 bis 7 Jänner, Hawaii, 1994, Seiten 323-332; "General Purpose Work Flow Languages", Alexander Forst, eva Kühn und Omran Bukhres, International Journal on Parallel and Distributed Databases, Software Support for Work Flow Management, Kluwer Adademic Publishers, Band 3, Nr. 2, April 1995, Seiten 187-218; "Logic Based and Imperative Coordination Languages", Alexander Forst, eva Kühn, Herbert Pohlai und Konrad Schwarz, Proceedings of the PDCS'94, Seventh International Conference on Parallel and Distributed Computing Systems, ISCA, IEEE, Las Vegas, Nevada, Oktober 6-8, 1994, Seiten 152-159; und "A Parallel Logic Language for Transaction Specification in Multidatabase Systems", eva Kühn, Ahmed K. Elmagarmid, Yungho Leu, Noureddine Boudriga, International Journal of Systems Integration, Vol. 5, 1995, Kluwer Academic Publishers, Boston, Seiten 219-252, sind bereits Anregungen für darüber hinaus gehende Lösungen enthalten, wie insbesondere der Einsatz von lokalen Koordinations-Servern, welche lokale Software-Systeme bedienen, und über die die Transaktionen zur Realisierung von Kommunikation zwischen Objekten durchgeführt werden sollen. Insbesondere ist im erstgenannten Aufsatz "Fault-Tolerance for Communicating Multidatabase Transactions" von Eva Kühn bereits ein Koordinations-System von der Art, wie im einleitenden Teil von Anspruch 1 definiert, erläutert, d.h. ein System zur Koordination verteilter Programme, Dienstleistungen und Daten mit Hilfe von Anwendungsprogrammen in einem Netzwerk mit Rechnern, auf denen lokale Softwaresysteme (LSYS) bedienende Koordinations-Server (CoKe) laufen, wobei gemeinsame Objekte als Kommunikationsobjekte zum Austausch von Nachrichten eingesetzt und Transaktionen zur Realisierung von Kommunikation verwendet werden, und die Kommunikationsobjekte durch Objektidentifikationsnummern (OID) eindeutig identifiziert werden und nur Prozesse mit einer Referenz auf ein Kommunikationsobjekt auf dieses über den jeweiligen lokalen Koordinations-Server zugreifen dürfen, wobei die lokalen Software-Systeme zumindest durch Funktionen zur Kontrolle von Transaktionen, zum Anlegen, Schreiben und Lesen von Kommunikationsobjekten, sowie zur Erzeugung und Überwachung von eindeutig identifizierten Prozessen erweitert sind, und wobei die Kommunikationsobjekte mit Hilfe von Replikationsstrategien verwaltet werden.

Im Zusammenhang mit den vorgenannten Koordinations-Servern und der Kommunikation zwischen Objekten wurden auch verschiedene Sprachen-unabhängige bzw. in beliebige Programmiersprachen einzubettende Prozeduren gefordert, wie etwa um Transaktionen zu beginnen, zu beenden oder abzubrechen. Überdies wurde bereits allgemein eine Replikationsstrategie angesprochen, gemäß welcher jede Stelle, die auf ein Kommunikationsobjekt zugreift, ihre eigene Kopie erhält, wobei jedoch eine Kopie als Hauptkopie oder primäre Kopie von den übrigen Kopien, den sekundären Kopien, unterschieden wird. Eine solche primäre Kopie wird angelegt, wenn ein Kommunikationsobjekt angelegt wird. Wenn dieses Kommunikationsobjekt zu einer anderen Stelle gesendet wird, wird eine sekundäre Kopie angelegt und dem Koordinations-Server an der anderen Stelle gesendet. Dadurch wird letztlich eine Baumstruktur erhalten, in der jeder Knoten jene Knoten kennt, an die eine Kopie gesandt wurde, und jeder nachfolgende Knoten (Sohn) den übergeordneten Knoten (Vater) kennt, von dem er die Kopie erhalten hat. Am Wurzelpunkt des Baumes liegt die primäre Kopie des Kommunikationsobjektes vor.

Diese in den genannten Artikeln enthaltenen Anregungen waren richtungsweisend, jedoch ermöglichten sie noch keine praktische Durchführung der Koordination von verteilten Software-Systemen, Dienstleistungen oder Daten. Insbesondere wurden von diesen Ansätzen zwar bereits die obengenannten Nachteile (a) bis (e) angesprochen, jedoch vor allem für die Probleme (f) bis (k) noch keine Lösungen aufgezeigt. Von den zu lösenden Problemen ist das Problem (f) von ganz besonderer Wichtigkeit, da das Argument, daß nur mit Low-Level-Nachrichtensenden bzw. Client/Serverorientierten Architekturen eine maximale Performance - allerdings auf Kosten von wesentlich mehr und aufwendigerer Implementierungsarbeit - erreicht werden kann, der Hauptgrund dafür ist, daß sich bisher Ansätze mit gemeinsamen Objekten nicht durchsetzen konnten.

Aufgabe der Erfindung war es daher, ein neues System der eingangs angeführten Art vorzusehen, das die Erstellung von robusten verteilten Anwendungen, wie z.B. sog. Arbeitsprozeß-("Work Flow")-Managementsystemen, Systemen für verteiltes kooperatives Arbeiten ("CSCW"), Mulitdatenbanksystemen, verteilten Hypertext-Systemen usw., in einfacher und zuverlässiger Weise ermöglicht, wobei die vorstehend genannten Nachteile bekannter Vorschläge durch besondere Transaktionskonzepte auf der Kommunikationsschicht sowie durch die Auswählbarkeit von mehreren Verteilungsstrategien vermieden werden sollen.

Diese Aufgabe wird durch die in Anspruch 1 angegebenen Merkmale gelöst; vorteilhafte Ausführungsformen und Weiterbildungen sind in den Unteransprüchen angegeben.

Mit dem erfindungsgemäßen System bzw. mit dem damit geschaffenen Koordinationsparadigma wird eine vorteilhafte Alternative zu den herkömmlichen Client/Server-Architekturen erhalten, wobei zahlreiche, nachstehend erläuterte Vorteile erzielt werden.

Durch das Verhalten der Gesamtheit aller Koordinations-Server als weltweites, einheitliches Betriebssystem - wozu die Koordinations-Server hinsichtlich der Grundfunktionalität untereinander ident sind - werden unter anderem die Vorteile erzielt, daß eine einheitliche Behandlung gesichert ist, daß Anzahl und Orte der Rechner - oder Agenten - keine Rolle spielen (es wird mit dem vorliegenden System ein spezifisches Netzwerk erhalten), und daß im Falle von verlorenen Objekten zumindest jene Teile, die von den verlorenen Objekten unabhängig sind, repariert bzw. als konsistente Gesamtheit gerettet werden können. Ferner wird die Programmerstellung mit Hilfe des globalen Betriebssystems wesentlich einfacher. Die Programmierung der Synchronisation und Replikation von Daten wird dem Programmierer abgenommen. Die Programme werden einfacher, kürzer und daher besser wartbar.

Beim vorliegenden System werden globale Namen für Objekte vermieden - jeder Prozeß bekommt in seiner Argumentliste die Objektidentifikationsnummern aller fremden Objekte mit, die er sehen darf, wobei er nur über diese Objektidentifikationsnummern zugreifen kann; andererseits müssen in verteilten Systemen gewisse Objekte doch aufgrund einer Bezeichnung bezogen werden können (z.B. "WWW Browser" etc.), und dies ist beim vorliegenden System möglich. In der geschlossenen Koordinations-Server-Welt werden nur Objektidentifikationsnummern verwendet, und diese können nach außen beispielsweise über an sich bekannte bzw. vorhandene Unterstützungen, die über Datenbankmechanismen eine Referenz auf ein Objekt (sowie ein Zugriffsrecht) retournieren, und die hier der Einfachheit halber "Nameserver" genannt werden, exportiert werden. Diese Nameserver können auf Basis von vorhandenen Unterstützungen, unter Verwendung von bekannten Datenbanktechnologien, auf Applikationsebene realisiert werden, und dabei kann, auf die jeweiligen Bedürfnisse zugeschnitten, ein entsprechender Paßwortschutz bzw. ein Accounting- und Indexingmechanismus etc., der über die Koordinations-Server-Mechanismen noch hinausgeht, hinzugefügt werden. Die technische Realisierung nutzt die Tatsache permanenter Server aus, bei denen ein unendlich lange laufender Prozeß als autonomer und automatisch wiederherzustellender Prozeß läuft, dessen Argument der Startpunkt zur Liste aller verwalteten Namen/Objekte ist. Dieser Prozeß darf nie terminieren und exportiert die gewünschte Objektidentifikationsnummer an Anfrager, die den Namen der Objektidentifikationsnummer angeben und deren Anfrage als Prozeß auf eben diesem Server durchgeführt wird. Damit sind beliebige Domänen von Nameservern realisierbar, die in eingeschränkten Bereichen kontrolliert globale Namen verwalten.

Das Sicherheitsproblem ist ausreichend gelöst, indem nur Prozesse, die rechtmäßig eine Objektidentifikationsnummer besitzen - die ihnen entweder mitgegeben wurde, die von ihnen selbst erzeugt wurde, oder die erlaubterweise über einen Nameserver bezogen wurde -, auf Objekte zugreifen dürfen. Damit wird über die Mechanismen des Betriebssystem hinaus - die vom Koordinations-Server-Modell auch gewahrt werden - noch weitere Datensicherheit garantiert.

Ein weiterer Vorteil der erfindungsgemäßen Lösung ist, daß das Spezifizieren von Dienstleistungen und das Exportieren dieser Dienstleistungen an spezifische Benutzer und Gruppen unterstützt wird. Das erfolgt beim Konfigurieren der (x/transienten) Server, bei denen angegeben werden kann, wer die jeweilige Dienstleistung konsumieren darf.

Eine wichtige neue Eigenschaft ist die Unterstützung von Kommit-Aktionen, deren wesentlicher Vorteil darin liegt, daß der Programmierer Berechnungen und das Schreiben von Daten atomar zusammengruppieren kann. Es kann beispielsweise zum Ausdruck gebracht werden, daß ein neuer "Worker" gestartet werden muß, wenn ein bestimmter Wert kommuniziert wurde. Dieser Sachverhalt, der auch, wenn die gewählte Verteilungsstrategie zuverlässig ist, über System- und Netzwerkfehler hinweg garantiert wird, macht die Entwicklung von fehlertoleranten Applikationen sehr einfach. Darüber hinaus kann man davon ausgehen, daß alle benötigten Daten automatisch wiederhergestellt werden, und daß alle autonomen Prozesse, die noch nicht terminiert hatten, automatisch wieder angestartet werden.

Durch die wählbaren Verteilungsstrategien (Kommunikationsprotokolle) ist ein Fein-Abstimmen von Zuverlässigkeit, Verfügbarkeit, Replikationsverhalten bzw. Performance der Kommunikationsobjekte je nach Bedarf und Zielsetzung möglich, z.B. durch wahlweise bestimmbare Protokollflags, wie "zuverlässig (reliable)"/"nicht-zuverlässig (unreliable)"; es können auchin einem Programm - verschiedene Verteilungsstrategien gleichzeitig, für verschiedene Kommunikationsobjekte, existieren.

Darüber hinaus werden sowohl nur einmal beschreibbare als auch aktualisierbare Objekte unterstützt, die unterschiedliche Vorteile bieten - diese Ko-Existenz ist sonst von keinem existierenden System bekannt.

Ferner wird durch die Funktionserweiterung bzw.-ergänzung der lokalen Softwaresysteme, somit die Erweiterung von deren Sprachen zu sog. Koordinations-Sprachen, nicht nur die Kommunikation mit dem globalen Betriebssystem bei Verwenden von ansonsten herkömmlichen Programmiersprachen (z.B. C, Prolog, Java, Fortran, ...) ermöglicht (abgesehen vom gewünschten Operieren mit den Kommunikationsobjekten, Transaktionen etc.), sondern auch - über das globale Betriebssystem - eine Übersetzung zwischen den verschiedenen Sprachparadigmen erhalten, so daß die Kommunikationsobjekte sprachunabhängig sind (und jede beliebige Art von Daten enthalten können); das globale Betriebssystem besorgt auch die eventuell erforderlichen Umsetzungen bei verschiedenen Datenformaten (z.B. 32 Bit-/64 Bit-Datenworte) und Endiantypen ("big"/"little"). Hinsichtlich dieser Funktionserweiterung bzw. -ergänzung existieren als Möglichkeiten der "Bibliotheks-Ansatz" (bei dem der Programmiersprache die gewünschten Funktionen hinzugefügt werden) oder insbesondere der "Einbettungs-Ansatz" (bei dem die Koordinationseigenschaften in die Programmiersprache "eingebettet", d.h. integriert werden).

Die Erfindung ergibt somit ein in einer ganz spezifischen Weise operierendes System bzw. Netzwerk, in dem die verteilten Rechner gemäß einem gemeinsamen, globalen Betriebssystem laufen; insgesamt erbringt die Erfindung eine wesentliche Vereinfachung in der Koordination von Software-Systemen, Dienstleistungen und Ressourcen.

Als besonders günstig hat es sich erfindungsgemäß erwiesen, wenn bei der Wahl der jeweiligen Verteilungsstrategie eine Basis-Strategie in Verbindung mit zusätzlichen, optionalen Strategieflags gewählt wird. Für die Feinabstimmung der jeweiligen Verteilungsstrategie können hier zumindest verschiedene zusätzliche Strategieflags gewählt werden, bevorzugt aber auch eine von mehreren möglichen Basis-Strategien.

Weiters ist es von Vorteil, wenn die lokalen Softwaresysteme vom jeweiligen Koordinations-Server startbar sind. Hierbei ist es möglich, den Server als permanenten Server einmal zu starten, der dann an bleibt und weiteren Funktionen dienen kann, und der auch im Fall von verschiedenen Anwendern nur einen Namen erhält; es ist aber auch denkbar, den Server als (x/-) transienten Server für jeden Aufruf gesondert (bzw. auf einem Rechner zu einer bestimmten Zeit als alleinigen Server) zu starten.

Um den Speicher nicht über Gebühr zu belegen, ist es weiters vorteilhaft, wenn Kommunikationsobjekte, auf die kein lokal laufender Prozeß mehr eine Referenz hat, vom jeweiligen Koordinations-Server automatisch Löschbar oder ausdrücklich freigebbar sind. Dadurch werden nicht mehr benötigte Kommunikationsobjekte in der Art eines "Aufräumens" (sog. "Garbage Colllection") selbsttätig aus dem Speicher gelöscht, so daß Speicherplatz gespart wird; dies wird durch die Verwendung der nicht-globalen Objektidentifikationsnummern ermöglicht und auch dadurch begünstigt, daß die lokalen Softwaresysteme vom Koordinations-Server gestartet werden. Damit kann der Koordinations-Server leicht erkennen, wann ein Prozeß terminiert hat, und dann die Referenzähler aller Objekte, die dieser Prozeß besitzt - das sind alle Objekte, die durch ihm übergebene Objektidentifikationsnummern bezeichnet werden, ferner alle Objekte, die der Prozeß selbst angelegt hat, sowie alle Objekte, die Unterobjekte von dem Prozeß zugängigen Objekten sind - dekrementieren. Die Löschung ist selbstverständlich abhängig von der jeweiligen Verteilungsstrategie, die diese Löschung verzögern kann, bis Strategie-spezifische Bedingungen erfüllt sind.

Im Hinblick auf eine optimale Nutzung von Möglichkeiten bzw. Ressourcen im Netz ist es auch von Vorteil, wenn über die sich in ihrer Gesamtheit als globales Betriebssystem verhaltenden Koordinations-Server heterogene Transaktionen bzw. Unter-Transaktionen auf verschiedene Rechner verteilt werden.

Vorzugsweise wird im Falle von aktualisierbaren Objekten ("updateable objects") ein nicht-blockierendes transaktionales Lesen dieser Objekte vorgesehen. Auf diese Weise kann beim Kommit der Transaktion überprüft werden, ob der gelesene Wert noch aktuell ist.

Unter den transaktionalen Prädikaten wird vorzugsweise das Schreiben in ein Objekt, das Starten einer Untertransaktion, das Verteilen eines Teils einer Transaktion auf einen anderen Rechner, das Spezifizieren einer Kompensationsaktion bzw. einer Kommit-Aktion vorgesehen. Andere transaktionale Prädikate können beispielsweise das Testen eines Objekts im Hinblick auf (Un-)Definiertheit, das Lesen eines aktualisierbaren Objekts oder das Löschen einer transaktionalen Anforderung (eines transaktionalen Requests) sein. Insbesondere ist es hier auch vorteilhaft, daß dann, wenn sicher ist, daß eine jeweilige Transaktion eine Vollzugsmeldung abgeben (kommitten) wird, eine Kommit-Aktion als Berechnung angestartet wird.

Im Zusammenhang mit der Kontrolle von Transaktionen können nicht nur das Starten und Abbrechen bzw. Zurücknehmen von Transaktionen schlechthin vorgesehen werden, ebenso wie das Kommitten einer Transaktion in einer Form, in der eine Transaktion automatisch abgebrochen wird, wenn das Kommitten nicht erfolgreich ist: um Transaktionen unter Rettung von bereits erfolgter Transaktionsarbeit reparieren zu können, kann mit Vorteil unter den Funktionen für Transaktionen auch ein programmierbares Rücksetzen von transaktionalen Operationen, wie z.B. das Lesen oder Schreiben von Kommunikationsobjekten, für den Fall, Fehler bzw. Ausfällen in den Transaktionen dynamisch reparieren zu können vorgesehen werden. Der Grund dafür liegt darin, daß koordinierende Transaktionen im Gegensatz zu klassischen Transaktionen oft eine sehr lange Lebensdauer haben können und mit Hilfe der beschriebenen Rücknahmeeigenschaft beispielsweise eine Transaktion, die schon lange, z.B. viele Monate, gelaufen ist und teure Systemressourcen konsumiert hat, in der aber eine eher unwichtige Operation oder Untertransaktion nicht erfolgreich war, dynamisch repariert werden kann, ohne damit auf die bereits geleistete Transaktionsarbeit verzichten zu müssen (in früheren Lösungen wäre ein Abbruch unabdingbar). Dafür wird eine "schwache" Form der Kommit-Funktion, die nicht automatisch den Transaktions-abbruch bedingt, sondern eine Information darüber retourniert, welcher transaktionale Befehl nicht erfolgreich abgeschlossen wurde, in Kombination mit dem dynamischen Rücksetzen von transaktionalen Befehlen verwendet.

Die Erfindung wird nachstehend anhand von bevorzugten Ausführungsbeispielen, die insbesondere Einzelheiten einer zumindest derzeit als besonders vorteilhaft angesehenen Ausführungsform der Erfindung betreffen, auf die sie jedoch nicht beschränkt sein soll, sowie unter Bezugnahme auf die Zeichnung noch näher erläutert. Im einzelnen zeigen in der Zeichnung:
Fig.1 ein Prinzipschema zur Veranschaulichung eines Systems, in dem Kommunikationsobjekte für autonome lokale Softwaresysteme in einem globalen Raum zugänglich sind;
Fig.2 ein Schema, das die grundsätzliche Architektur einer Konfiguration mit Rechnern an verschiedenen Orten veranschaulicht, wobei in den einzelnen Rechnern installierte Koordinations-Server zusammen ein globales Betriebssystem definieren;
Fig.3. ein logisches Ablaufschema zur Veranschaulichung des prinzipiellen Betriebs der Koordinations-Server, und damit des globalen Betriebssystems;
Fig.4 in einem logischen Ablaufschema die Behandlung lokaler Requests;
Fig.5 den allgemeinen Ablauf beim Anlegen und Inspizieren von Kommunikationsobjekten;
die Fig.6 bis 8 zu Fig.5 gehörige Funktionen in Flußdiagrammen;
Fig.9 mehr im Detail den Ablauf der aus Fig.4 ersichtlichen Transaktionskontrolle;
die Fig.10 bis 16 zugehörige Transaktionen;
Fig.17 den Ablauf von Transaktionalen Befehlen (gemäß Fig.4) mehr im Detail;
die Fig.18 bis 23 zugehörige Transaktionale Befehle (Transaktionsmanager) sowie Unter-Prozeduren hierzu;
Fig.24 den Ablauf im Fall von aus Fig.4 ersichtlichen Prozeß-Befehlen mehr im einzelnen;
die Fig.25 bis 31 den Ablauf der zugehörigen Prozesse, die zusammen den Prozeßmanager ergeben; und
die Fig.32 bis 40 den Strategiemanager, d.h. verschiedene Prozeduren, die eine sog. Verteilungsstrategie (ein Kommunikationsprotokoll) definieren.

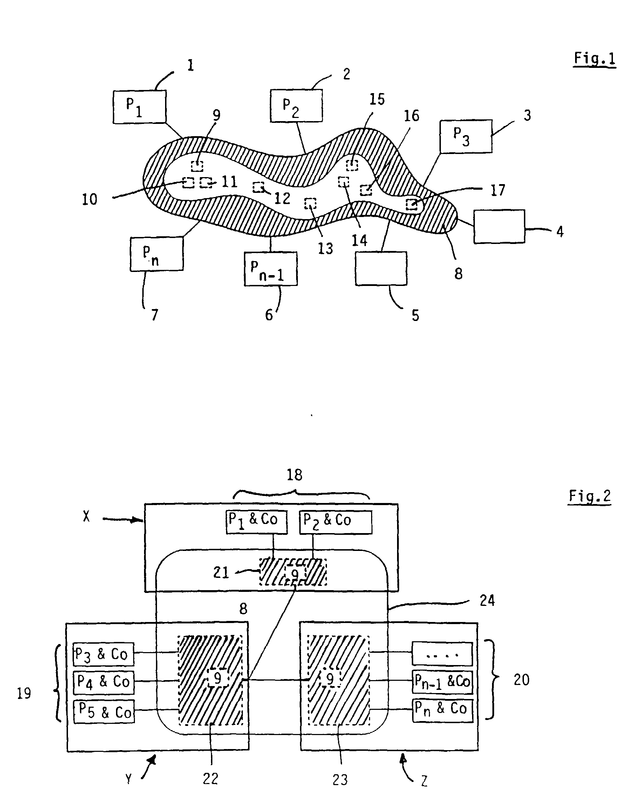

In Fig.1 sind schematisch verschiedene autonome Software-systeme (lokale Softwaresysteme - LSYS) 1 bis 7 veranschaulicht, denen verschiedene herkömmliche Programmiersprachen P₁, P₂, P₃....Pₙ₋₁, Pₙ (wie z.B. C, Prolog, Lisp, Pascal, Fortran, Cobol, C++ usw.) zugrundeliegen können. Die autonomen Software-systeme 1 bis 7 können dabei als gleichzeitig laufende Prozesse dargestellt werden, und sie können jeweils als eindeutig definiertes System mit einer solchen Programmiersprache angesehen werden; die Systeme 1 bis 7 können insbesondere je ein lokales Softwaresystem sein, in dem jeweils eine andere Programmiersprache zugrundeliegt, so daß diese Systeme 1 bis 7 nicht direkt miteinander arbeiten können. (Theoretisch wäre es auch denkbar, daß zwei Systeme direkt interaktiv sein könnendiese direkt interaktiven Systeme werden hier der Einfachheit halber als ein System angesehen, und es können gegebenenfalls auch mehr Systeme, z.B. drei, so zusammengefaßt sein.)

Mit 8 ist in Fig.1 weiter ein sog. Agentenraum veranschaulicht, wobei die jeweiligen, nachstehend noch näher zu erläuternden Agenten Objekte 9 bis 17 zur Verfügung stellen. Diese Objekte 9 bis 17 sind hier beispielsweise einmal beschreibbare ("write-once") Objekte, gegebenenfalls auch aktualisierbare ("updateable") Objekte, und sie können als Einheiten oder Behälter mit Kommunikationsdaten angesehen werden; sie bilden Kommunikationsobjekte, die in dem gemeinsamen, den verschiedenen lokalen Systemen 1 bis 7 zugänglichen "Objektraum" enthalten sind. Zugang zu den einzelnen Kommunikationsobjekten 9 bis 17 ist dabei nur über einen der Agenten möglich.

Eine Hauptaufgabe der Agenten besteht darin, den gleichzeitigen Zugang zu Objekten 9 bis 17 so zu ermöglichen, daß alle Teilhaber, die diese Objekte 9 bis 17 sehen dürfen, zu jeder Zeit die selbe konsistente Sicht von ihnen haben. Insofern liegt eine Ähnlichkeit zu einem verteilten Datenbanksystem vor, das Transaktionen an den, mehreren Teilnehmern zugänglichen Datenobjekten bietet.

Das Management von Aktivitäten umfaßt auch die Spezifikation von Aufgaben, d.h. von Programmen, die durch bestimmte Software-systeme auszuführen sind. Eine abgegebene Prozeß-Anforderung (Prozeß-"Request") kann als Vertrag zwischen dem anfordernden Softwaresystem und einem der Agenten betrachtet werden, der dafür verantwortlich ist, daß die Aufgabe von einem bestimmten (anderen) Softwaresystem durchgeführt werden wird. Der Start einer Berechnung ist der Beginn einer neuen Interaktion zwischen dem Anfragenden und dem Durchführenden.

Die Objekte sollen alle Arten von kontrollierbaren Ausfällen in den Systemen überleben. Wenn bestimmte Umstände eingetreten sind, müssen sie bestehen bleiben, da global sichtbare Umstände nicht gelöscht oder geändert werden können, nachdem andere Prozesse sie gesehen und ihre Berechnungen auf ihnen aufgebaut haben. Es ist notwendig, sich auf die übermittelten Daten verlassen zu können. Sobald ein write-once Objekt ein definiertes Objekt (d.h. ein "nicht-leerer Behälter") wird, ist es eine konstante "Größe" mit hoher Zuverlässigkeit. Es kann beispielsweise (im Falle der write-once-Objekte) nicht derart manipuliert werden, daß es zu einem späteren Zeitpunkt andere Daten enthält.

Aktivitäten werden implizit synchronisiert, da dann, wenn ein System vom Ergebnis eines anderen Systems abhängig ist, es weiß, welches Objekt die Daten enthält, und es einfach darauf zugreifen kann. Wenn die Daten noch nicht bereit sind, wird ein System, das auf sie zugreifen will, einfach eine längere Zugriffszeit benötigen.

Für die vorstehenden Anforderungen werden im vorliegenden System die nachfolgenden, nachstehend noch näher erläuterten Koordinations"werkzeuge" vorgesehen, die in die einzelnen lokalen Systeme und Programmiersprachen eingebaut werden:
- die Kommunikationsobjekte bilden einen zuverlässigen; abstrakten Kommunikationsmechanismus
- es werden spezifische Transaktionsfunktionen vorgesehen; und
- es werden spezielle Sprachkonstrukte zur Sicherung von Parallelität vorgesehen.

Alle Stellen, die an einer Kommunikation teilnehmen, haben eine einheitliche Sicht der von ihnen geteilten ("shared") Datenobjekte. Auf die Objekte kann zugegriffen werden, als würden sie in einem lokalen Rechner vorliegen und in das jeweilige Softwaresystem derartig eingebettet sein, daß sie von lokalen Daten praktisch nicht unterschieden werden können. Insofern kann dann, bei entsprechender Einbettung in die lokale Software (was eine entsprechende Ergänzung derselben hinsichtlich Funktionen bedingt; Ausführungsbeispiele zur Ergänzung der Semantik der Basisfunktionen der Softwaresysteme, um mit den Kommunikationsobjekten zu operieren, werden nachfolgend noch näher erläutert), die Kommunikation über diese Objekte als Kommunikationsmedien erfolgen, wobei über diese Kommunikationsobjekte auch verschiedene Softwaresysteme kommunizieren können, da aus ihrer Sicht diese Kommunikationsobjekte wie lokale Objekte erscheinen. Für den Programmierer stellt sich das System als global verfügbarer Raum dar, auch wenn dieser tatsächlich über eine Vielzahl von Stellen verteilt ist, vergleichbar einer großen verteilten Datenbasis. Jeder interaktive Prozeß hat sein eigenes Fenster in diesen globalen Raum, aber alle Prozesse haben dieselbe Sicht auf das Objekt. Wenn Daten noch nicht verfügbar sind, muß ein Prozeß warten, anstatt mit nichtaktuellen Daten zu operieren. In einem derartigen lokalen Raum hält der Prozeß in üblicher Weise lokale Daten. Die Datentypen im lokalen Raum und im globalen Raum müssen selbstverständlich kompatibel sein.

Die Kommunikationsobjekte können von beliebigem Typ sein, d.h. es kann nur einmal ein Wert zugeordnet werden, oder sie können wie Variable aktualisierbar sein. Jeder Prozeß kann sich auf die aus dem globalen Raum ausgelesenen Daten verlassen, da sie (im Fall von write-once Objekten) sich nicht ändern bzw. wiederherstellbar sind. Die Kommunikationsobjekte haben weiters eine eindeutige Identifikationsnummer, jedoch keinen globalen Namen. Diese Objektidentifikationsnummern (OID) werden zweckmäßig über die bereits erwähnten Nameserver exportiert, die auf Applikationsebene unter Verwendung bekannter Datenbanktechnologien realisiert werden. Die Kommunikationsobjekte werden zwischen Prozessen durch Übergabe als Argumente geteilt. Ein Prozeß, der keine Referenz auf ein Kommunikationsobjekt besitzt, erhält keinen Zugang zu diesem. Der Agent, der die Kommunikationsobjekte unterhält, hindert Prozesse daran, den Bezug auf ein Kommunikationsobjekt zu "erschleichen". Auf diese Weise wird eine Sicherheit insofern gewährleistet, als nur berechtigte Prozesse Zugriff zu den Daten haben.

Ein Kommunikationsobjekt kann strukturiert sein, und es kann andere Kommunikationsobjekte als Komponenten enthalten. Derartige Sub-Kommunikationsobjekte sind neue "Kommunikationsbehälter", die Werte unabhängig vom sie umschließenden Kommunikationsobjekt erhalten können. Dies wird nachstehend anhand eines Beispiels (Beispiel 1: Produzent-Konsument-Problem) noch mehr im Detail aufgezeigt werden.

Damit alle Prozesse, denen Kommunikationsobjekte gemeinsam sind, eine konsistente Sicht dieser Objekte haben, können Werte nur durch Transaktionen in den global geteilten Raum geschrieben werden.

In vorteilhafter Weise möglich sind beim vorliegenden Koordinations-System weiters Funktionsreplikation, Aufgabe der Isolations-Eigenschaft von ineinander geschachtelten Transaktionen sowie eine semantische Kompensation.

Die Funktionsreplikation fußt auf der Notwendigkeit, eine Dienstleistung, die nicht gutging, durch eine andere zu ersetzen, die dieselbe Aufgabe in äquivalenter Weise erfüllt. Auf diese Weise kann eine komplexe Aufgabe, die aus einer Anzahl von Unteraufgaben zusammengesetzt ist, zu Ende geführt werden, selbst wenn ein lokales System ausfällt.

Die Aufgabe der Isolations-Eigenschaft ist aus zwei Gründen von Bedeutung: Zum einen würde dann, wenn beim Koordinieren von lokalen Datenbanksystemen eine Unteraktion Sperren im lokalen Datenbanksystem sowie das Halten dieser Sperren bis zum Ende der globalen Aktion erfordern würde, das Autonomieprinzip wesentlich beeinträchtigt werden. Insbesondere wären dann langlebende oder auch "ewige" Prozesse (wie der Produzent-Konsument-Prozeß, s. nachfolgendes Beispiel 1) ein bedeutendes Problem. Aus diesem Grund dürfen Sub-Transaktionen vollenden (in der Datenbank-Terminologie: Kommitten), bevor der Gesamtprozeß beendet wird. Zum anderen erfordert ein kooperatives Arbeiten, daß Zwischenergebnisse sichtbar werden, bevor der globale Prozeß terminiert. Unteraufgaben können nicht auf Daten von anderen Unteraufgaben warten, bis der globale Prozeß zu Ende geführt ist.

Die semantische Kompensation ist sodann die logische Folge der Aufgabe der Isolations-Eigenschaft. Es kann beispielsweise der Fall eintreten, daß nach erfolgreichem Abschluß eine Aktion nicht benötigt wird (etwa zufolge Funktionsreplikation) oder eine Aktion verworfen werden muß (wenn die globale Aufgabe endgültig scheitert). Eine Transaktion, die "kommittet" wurde, darf jedoch nicht rückgängig gemacht werden, da andere autonome Prozesse möglicherweise bereits ihre Ergebnisse "gesehen" und ihren Berechnungen zugrunde gelegt haben. Wenn ein Prozeß später entscheidet, daß eine Transaktion nicht benötigt wird, muß hierfür eine semantische Kompensation vorgesehen werden. Eine vom Benutzer definierte Kompensationsaktion kann für diesen Zweck spezifiziert werden, und sie wird dann automatisch aktiviert und kann ein anderes Kommunikationsobjekt schreiben.

Da die zu koordinierenden Softwaresysteme bereits existieren und an verschiedenen Stellen parallel laufen, ist Parallelität im System erforderlich.

Die Parallelität zwischen Prozessen ist wesentlich für die gegenseitige Koordination, und sie kann durch entsprechende Spracherweiterung vorgesehen werden, wodurch ein Prozeß (an einer anderen Stelle) erzeugt und gesteuert werden kann, und wodurch Kommunikationsobjekte übergeben werden können, die zwischen der einen Stelle und der anderen Stelle, wo der neue Prozeß hervorgerufen wird, geteilt (ge"shared") werden. Die Rechner-Stelle und das Softwaresystem, wo der Prozeß ausgeführt werden soll, können spezifiziert werden. Von vornherein wird die jeweilige lokale Stelle als solche angenommen, und der Prozeß wird als Prozeß (wenn möglich als sog. "thread") des Systems, durch das er aufgerufen wurde, durchgeführt. Dadurch wird eine ausreichende Parallelität zwischen den Prozessen sichergestellt. An sich ist Parallelität innerhalb eines Prozesses nicht notwendig für das vorliegende Koordinations-System, wohl aber Parallelität zwischen Prozessen.

Die vorstehend im Zusammenhang mit Fig.1 erwähnten Agenten werden durch lokale Serverprozesse dargestellt, die Koordinations-Server genannt werden. Überall, wo das vorliegende Koordinations-System laufen soll, muß ein derartiger Koordinations-Server vorhanden sein, der das jeweilige lokale Softwaresystem ergänzt und bedient, wie sich auch aus dem Architektur-Schema von Fig.2 ergibt.

Im einzelnen ist gemäß Fig.2 an verschiedenen Stellen bzw. Rechnern X, Y, Z zusätzlich zu den lokalen Softwaresystemen 18, 19, 20, die durch die nachstehend noch näher zu erläuternden Ergänzungen für das vorliegende Koordinations-System erweitert sind (was durch die Bezeichnung "& Co" bei den jeweiligen Programmiersprachen P₁ , P₂.....Pₙ₋₁, Pₙ; also P₁ & Co, P₂ & Co, P₃ & Co....Pₙ₋₁ & Co, Pₙ & Co, angedeutet ist) jeweils ein Koordinations-Server 21, 22 bzw. 23 vorhanden. Diese Koordinations-Server 21, 22, 23 sind die vorerwähnten "Agenten" (s. auch Schraffur in Fig.1 und 2) und definieren so den vorstehend anhand von Fig.1 erläuterten "Agentenraum", und sie bilden zusammen ein globales Betriebssystem 24. Zu diesem Zweck sind die Koordinations-Server ("CoKe"-"Coordination Kernel") 21, 22, 23 untereinander gleich ausgebildet, und es ist gleichgültig für die Bildung des globalen Betriebssystems, wie viele Koordinations-Server 21, 22, 23 im Einzelfall vorhanden sind. Dieses globale Betriebssystem 24 führt dazu, daß es für den Benützer gleich ist, ob ein Prozeß lokal oder an einer entfernten Stelle läuft; die identen Koordinations-Server 21, 22, 23 verhalten sich gleich, und durch diese Globalität ergibt sich eine Datenabstraktion; ein Zugriff auf ein Objekt an einer entfernten Stelle verhält sich wie ein Zugriff auf ein lokales Objekt - der Benützer merkt hier keinen Unterschied, und er sieht in diesem Zusammenhang keine Nachrichten.

Gemäß Fig.2 wird beispielsweise das Objekt 9 vom Agenten (Koordinations-Server) 21 angelegt und sodann zu den Agenten 22 und 23 weitergereicht. Die Agenten fungieren dabei als verteilte "Transaktionsmanager". Ganz allgemein kann jeder Koordinations-Server als die Module (1) Transaktionsmanager; (2) Prozeßmanager; (3) Strategiemanager; (4) Recovery-(Wiederherstell-) manager enthaltend angesehen werden.

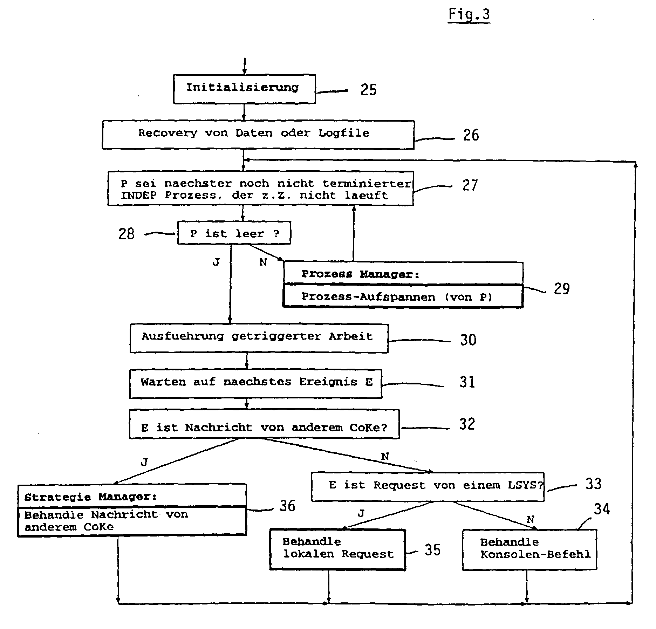

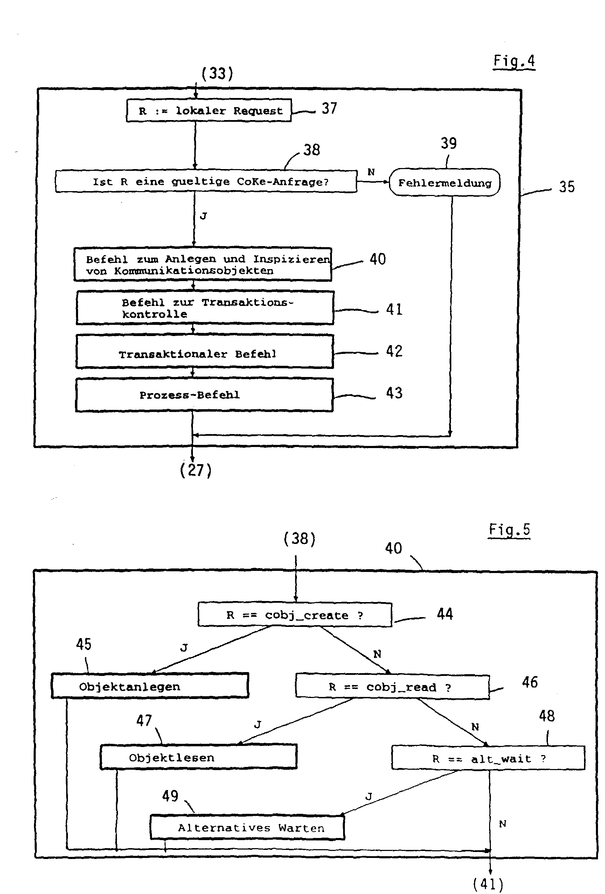

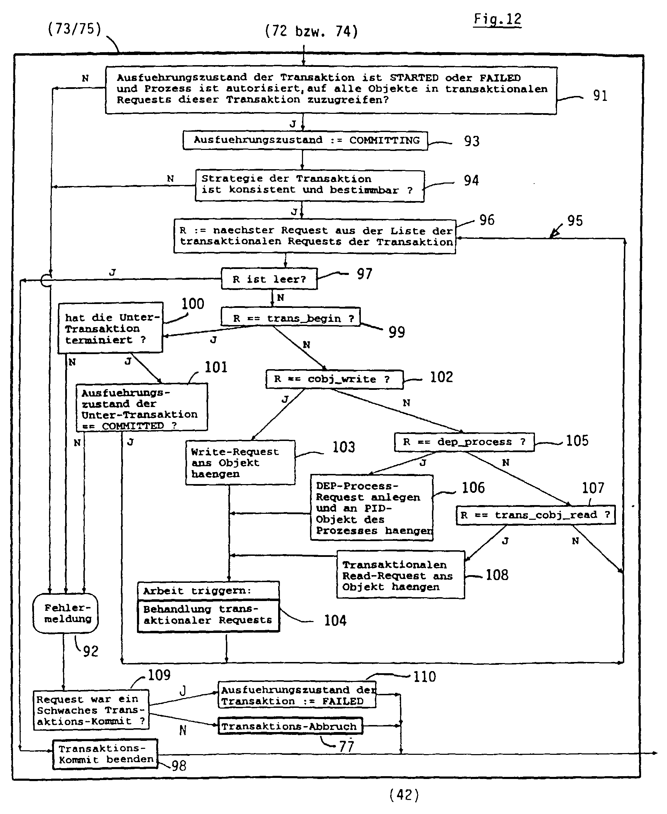

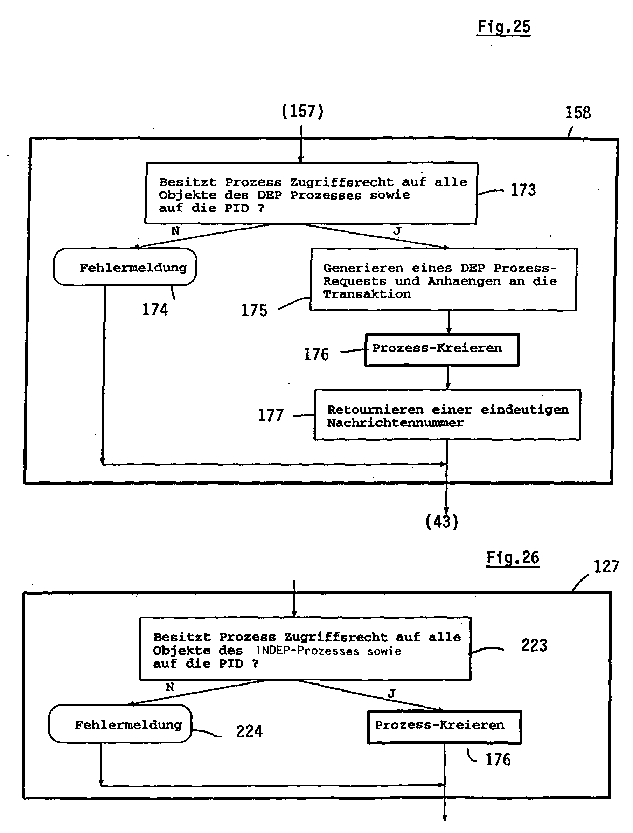

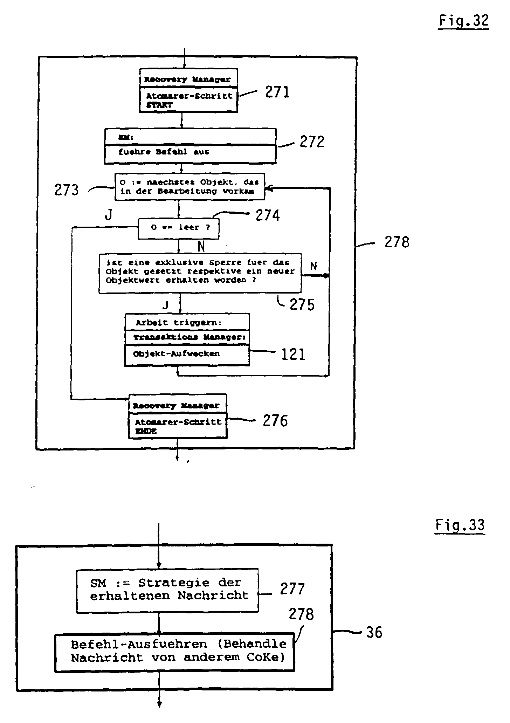

Das globale Betriebssystem 24 ergibt sich hinsichtlich seiner allgemeinen Funktion aus Fig.3 und mehr im Detail hinsichtlich der Transaktionskontrolle aus Fig.4 bis 9 in Verbindung mit den Fig.10 bis 23 (Transaktionsmanager); der Prozeßmanager ist aus Fig.24 in Verbindung mit den Fig.25 bis 31 ersichtlich, und der Strategiemanager (der aus Einzel-Managern SMi für die jeweilige Verteilungsstrategie besteht) aus den Fig.32 bis 40.

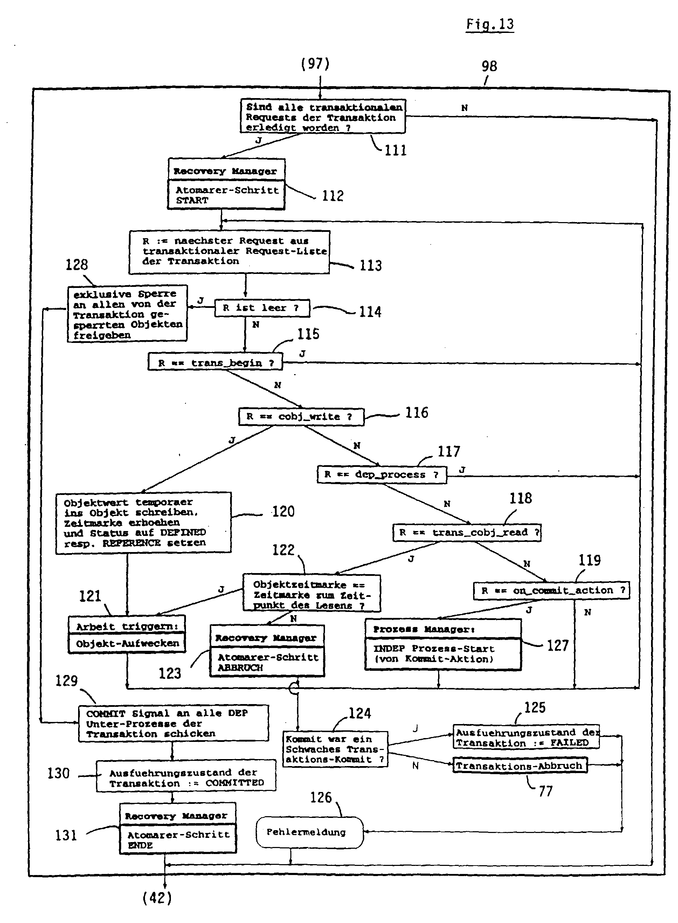

Der Recoverymanager, auf den z.B. in den Fig.13, 14, 15 sowie 28, 30 und 32 bezug genommen wird, enthält die folgenden wesentlichen Elemente:
Atomarer Schritt START
Atomarer Schritt ENDE
Atomarer Schritt ABBRUCH

Dabei werden Aktionen, die zwischen START und ENDE passieren, entweder alle ausgeführt, oder keine davon; d.h. bei einem Systemfehler zwischen START und ENDE wird keine Aktion durchgeführt.

Je nach der verwendeten Strategie (unter Setzen von Flags) erfolgt die Ausführung zuverlässig (ausfallsicher), d.h. Effekte werden im Log- und Datenfile protokolliert (gespeichert), oder nicht zuverlässig.

Bei einem Aufruf von "Atomarer Schritt ABBRUCH" werden alle Effekte annuliert.

In Fig.3 ist der prinzipielle Arbeitsablauf, nämlich die Hauptschleife, des vorliegenden Systems, und zwar im Bereich des globalen Betriebssystems 24 bzw. des jeweiligen Koordinations-Servers 21, 22 oder 23, in Form eines Flußdiagramms schematisch veranschaulicht. Wie dabei ersichtlich ist, wird nach einem Initialisierschritt 25 und einem Wiederherstellschritt 26, in dem alle vom Koordinations-Server 21, 22 bzw. 23 benötigten Daten vom Datenfile oder vom "Logfile" wiederhergestellt werden, sowie einem Schritt 27, in dem ein unabhängiger, noch nicht terminierter, momentan nicht aktiver Prozeß P definiert wird, beim Schritt 28 abgefragt, ob die Prozeßliste P leer ist, d.h. ob kein solcher Prozeß P gefunden wurde. Wenn dies nicht zutrifft, wird der Prozeßmanager aufgerufen, um - gemäß Block 29 - den Prozeß P aufzuspannen, wonach zum Schritt 27 zurückgekehrt wird. Das Aufspannen eines Prozesses ist ein Unterprogramm, das nachstehend anhand der Fig.31 noch näher erläutert werden wird.

Wenn das Abfrageergebnis bei 28 positiv ist, d.h. kein Prozeß P vorliegt, wird im Schritt 30 zur Ausführung getriggerter Arbeit übergegangen, und im Schritt 31 wird auf ein nächstes Ereignis E gewartet. Im Schritt 32 wird dann abgefragt, ob dieses Ereignis E eine Nachricht von einem anderen Koordinations-Server ist. Falls dies nicht zutrifft, wird sodann bei 33 abgefragt, ob das Ereignis E ein Request von einem lokalen Softwaresystem ist; falls nein, wird das Ereignis E im Schritt 34 als Konsolen-Befehl behandelt; falls ja, wird das Ereignis E als lokaler Request behandelt, und zwar gemäß einer mit Block 35 angegebenen Prozedur, welche nachstehend anhand der Fig.4 noch näher erläutert wird. Ist hingegen das Ereignis E eine Nachricht von einem anderen Koordinations-Server, so wird gemäß Block 36 der Strategiemanager aufgerufen, um das Ereignis E als Nachricht von einem anderen Koordinations-Server zu verarbeiten, wie nachstehend anhand der Fig.33 noch näher erläutert werden wird.

Nach allen drei Schritten 34, 35 bzw. 36 wird in der Programm-Hauptschleife gemäß Fig.3 anschließend zum Block 27 zurückgekehrt, um den selben Zyklus hinsichtlich eines nächsten unabhängigen Prozesses P zu durchlaufen.

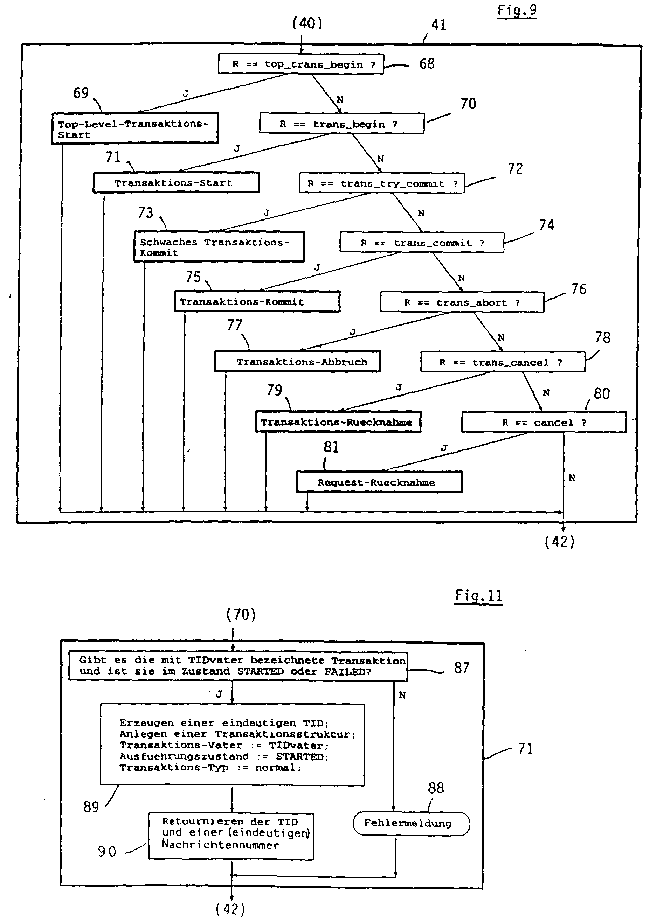

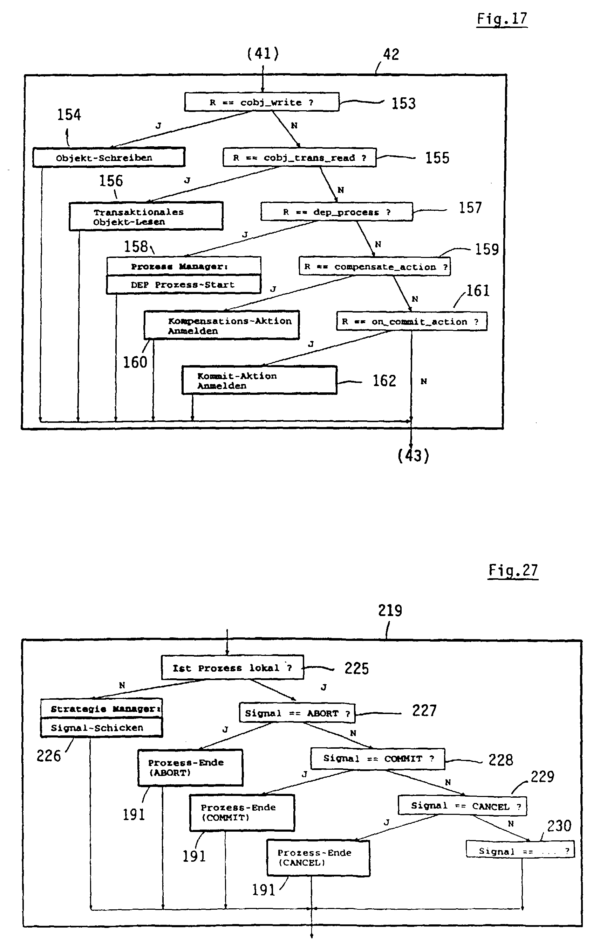

Wie aus Fig.4 ersichtlich ist, wird im Unterprogramm, Block 35 in Fig.3, einleitend im Schritt 37 der Request (Ereignis E in Fig.3) als lokaler Request R definiert. Bei 38 wird sodann abgefragt, ob der Request R eine gültige Anfrage eines Koordinations-Servers ist. Falls nein, wird im Schritt 39 eine Fehlermeldung erzeugt, und es wird sofort zum Ende dieses Unterprogramms 35 übergegangen. Falls R jedoch eine gültige Anfrage ist, wird gemäß Block 40 (s. auch nachstehende Erläuterung zu Fig.5) zu einem Unterprogramm betreffend Anlegen und Inspizieren von Kommunikationsobjekten übergegangen; weiters folgt ein Unterprogramm, Block 41 (s. auch Fig.9), betreffend Transaktionskontrolle, sodann ein Unterprogramm, Block 42, betreffend transaktionale Befehle (s. Fig.17) und schließlich im Block 43 ein Unterprogramm "Prozeß-Befehl" (s. auch nachstehende Erläuterung zu Fig.24. Mit diesen Teilen 40 bis 43 wird somit die Art des jeweiligen lokalen Request R untersucht, und es werden die gewünschten Vorgänge bewirkt.

Nachstehend werden anhand der Fig.5 bis 40 die zum Teil bereits allgemein angesprochenen, zum Teil noch nicht erwähnten Befehle bzw. Funktionen näher erläutert, wobei ganz allgemein, wie bereits auch aus den Fig.3 und 4 zu erkennen war, für die Darstellung in den Zeichnungsfiguren gilt, daß mit stärkeren Linien dargestellte Blöcke auf in der Folge zu erläuternde Figuren verwiesen wird, die entsprechende Blöcke mit starker Umrandung, zwecks Verdeutlichung des Zusammenhangs, zeigen.

Die nachfolgend unter Bezugnahme auf die Fig.5 bis 40 beschriebenen Befehle können als Erweiterung einer traditionellen Sprache zu einer "Koordinations"sprache (im Wege einer Bibliothekserweiterung oder einer Einbettung in die jeweilige Programmiersprache) angesehen werden. Die hier angegebenen Bezeichnungen der Befehle sind aber selbstverständlich beliebig und nur als Beispiele zu verstehen. Die verwendete Beschreibung stützt sich im allgemeinen auf eine Programmiersprachen-neutrale Syntax und ist unabhängig von den Datentypen der jeweiligen "Gast"sprache. Die Durchführung der Befehle erfolgt in den Koordinations-Servern oder Agenten; die als bloße Beispiele angegebenen Befehlsbezeichnungen (wie "cobj_create" etc.) gehören zur Anwender-Schnittstelle, wobei damit die Bedeutung der Erweiterung der Programmiersprachen (Pᵢ wird zu Pᵢ & Co) erkennbar wird.

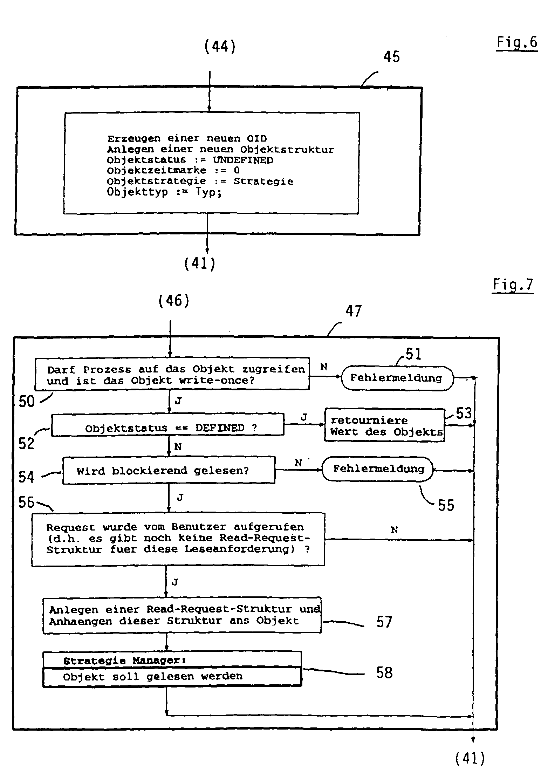

Als erstes wird nun der allgemeine Ablauf beim Befehl zum Anlegen und Inspizieren von Kommunikationsobjekten, Block 40 in Fig.4, anhand der Fig.5 näher erläutert. Dabei wird in verschiedenen Abfragen die Art des lokalen Requests R eruiert, und abhängig davon werden unterschiedliche, im folgenden anhand der Fig.6, 7 und 8 näher erläuterte Funktionen im Zusammenhang mit Objekten bewirkt.

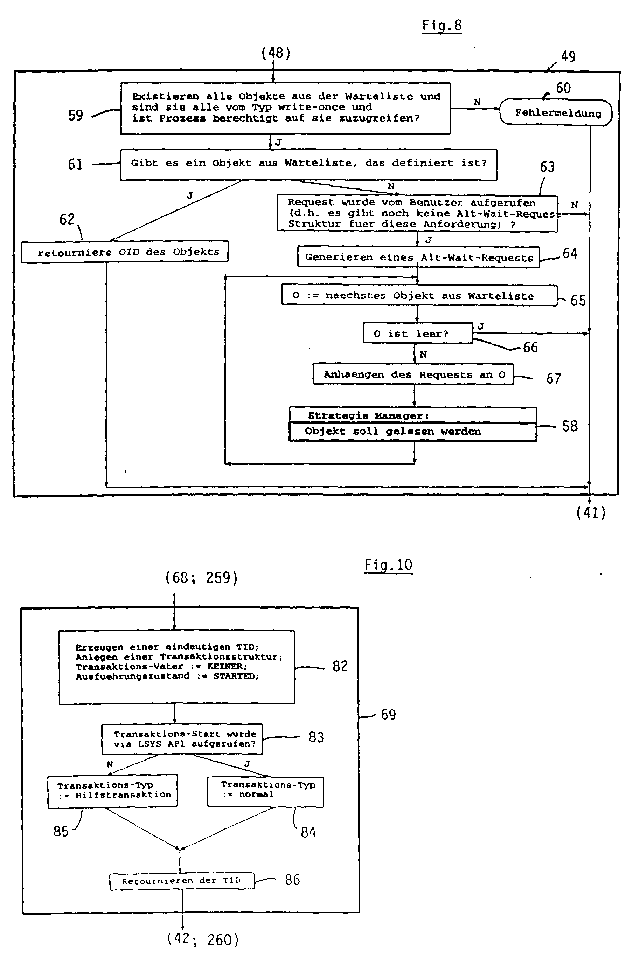

Im einzelnen wird einleitend bei 44 abgefragt, ob der lokale Request R ein Request zum Anlegen eines neuen Objekts ist. Wenn ja, wird zum Block 45 "Objektanlegen" (s. Fig.6) übergegangen. Wenn nein, wird als nächstes abgefragt, ob der eingelangte lokale Request ein Request zum "Objektlesen" ist (Abfrage 46). Wenn ja, wird im Block 47 (s. Fig.7) der Befehl "Lesen eines Objekts" ausgeführt. Wenn nein, wird als dritte Abfrage bei 48 geprüft, ob der lokale Request R ein Request zum alternativen Warten (Überwachung von Objekten) ist. Wenn ja, wird das Unterprogramm alternatives Warten, Block 49 (s. Fig.8) aufgerufen; wenn nein, wird im Ablauf gemäß Fig.4 zum Block 41 übergegangen.

Es folgt nun eine Erläuterung der vorstehend angesprochenen Funktionen, wobei nur für jene, die an die Anwender-Schnittstelle exportiert werden, Namensbeispiele angegeben werden.

### - Anlegen eines Objekts: OID <- cobj_create(Typ, Strategie) (s. Fig.6)

Diese Funktion dient dazu, ein neues Kommunikationsobjekt anzulegen, wobei als Antwort eine eindeutige Objektidentifikationsnummer (OID) für das neue Objekt retourniert wird. Diese OID wird an andere Befehle als Argument weitergereicht. Gewünschtenfalls kann beim Anlegen des neuen Objekts - als sog. Option - eine Verteilungsstrategie selektiert werden, "default"mäßig (d.h. vom System vorgeschlagen) wird eine Standardstrategie verwendet. Der beim Anlegen definierte Typ spezifiziert, ob es sich um ein nur einmal beschreibbares Objekt (write-once-Objekt) oder um ein aktualisierbares Objekt ("up-dateble"-Objekt) handelt. Weiters wird, wie aus Fig.6, Block 45, ersichtlich ist, eine neue Objektstruktur angelegt, die vom lokalen Agenten verwaltet wird, die durch die OID eindeutig gekennzeichnet ist, und die ein neues Kommunikationsobjekt darstellt. Der Objektstatus ist zunächst nicht definiert ("UNDEFINED"), und es wird eine Objektzeitmarke definiert (und gleich Null gesetzt).

### - Lesen eines Objekts: Value <- cobj_read(BlockingFlag, OID) (s. Fig. 7)

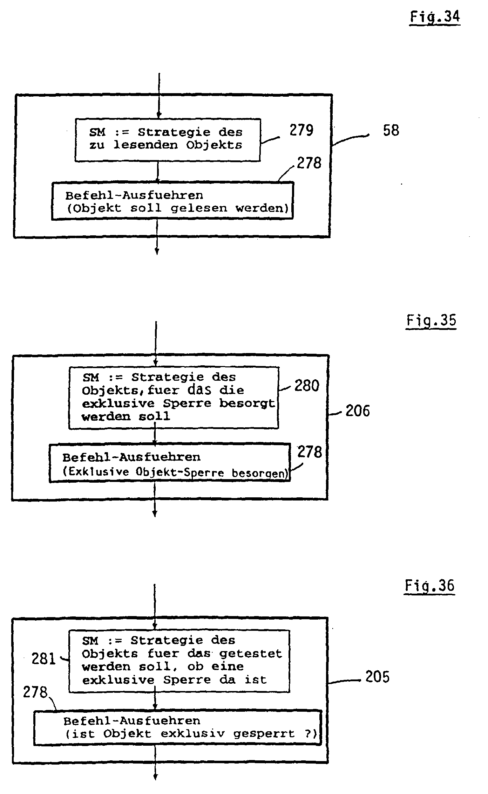

Diese Funktion wird für nicht aktualisierbare Kommunikationsobjekte verwendet und retourniert den Inhalt des gewünschten Kommunikationsobjekts, falls dieses bereits definiert ist (d.h. in einer Transaktion geschrieben wurde). Falls das Kommunikationsobjekt noch undefiniert ist und ein blockierendes Kennzeichen-Bit, das BlockingFlag, gesetzt ist, wartet der Befehl, bis das Objekt beschrieben wird, ansonst retourniert er eine Fehlermeldung.
Auch falls der Prozeß nicht berechtigt ist, auf das Objekt OID zuzugreifen, erfolgt eine Fehlermeldung.
Falls jedoch das Objekt definiert und zugreifbar ist, wird sein Wert retourniert; ansonst wird, falls das Kennzeichen "BlockingFlag" gesetzt ist, die Lese-Anfrage an das Objekt angehängt, wo sie automatisch aufgeweckt wird, sobald das Objekt beschrieben wird.
Es hängt von der jeweiligen Verteilungsstrategie und ihren Flags ab, ob es bei einer Leseanforderung ausreicht, die lokale Objektstruktur zu testen, oder ob Kommunikationsschritte durchgeführt werden müssen, die andere Agenten nach dem Zustand und Wert des Objekts befragen.
Im einzelnen wird beim "Objekt-Lesen" gemäß Fig.7 einleitend bei 50 abgefragt, ob der Prozeß auf das Objekt zugreifen darf, und ob das Objekt von write-once-Typ ist. Wenn das Abfrageergebnis negativ ist, erfolgt bei 51 eine Fehlermeldung, wenn das Ergebnis jedoch positiv ist, dann wird bei 52 abgefragt, ob der Objektstatus definiert ist. Wenn ja, wird bei 53 der Wert des Objekts retourniert, und es wird zum Ende der Funktion (bzw. Block 41 in Fig.5) weitergegangen. Wenn jedoch der Objektstatus nicht definiert ist, wird bei 54 abgefragt, ob blockierend gelesen wird (d.h. ob das BlockingFlag gesetzt ist), und wenn nein, erfolgt bei 55 eine Fehlermeldung; wenn ja, wird im Schritt 56 weiters abgefragt, ob der Request vom Benutzer aufgerufen wurde, was bedeutet, daß für diesen Lese-Request noch keine Lese-Request-Struktur existiert. Bei negativem Ergebnis wird zum Schritt 41 weitergegangen; bei positivem Abfrageergebnis wird jedoch gemäß Block 57 eine Read-Request-Struktur angelegt, die dann an das Objekt angehängt wird. Danach wird gemäß Block 58 der Strategiemanager aufgerufen, um die Funktion, daß das Objekt gelesen werden soll, auszuführen. Dieser Schritt 58 wird nachstehend anhand der Fig.34 noch näher erläutert werden.

### - Alternatives Warten: FiredOID <- alt_wait(ListOfOIDs) (s. Fig.8)

Dieser Befehl wird für nicht aktualisierbare Kommunikationsobjekte verwendet und wartet wie ein blockierendes Lesen auf eine Gruppe von Kommunikationsobjekten. Sobald eines dieser Kommunikationsobjekte aus der Liste ListOfOIDs definiert ist, retourniert der Befehl die entsprechende OID-Nummer des Objekts. Damit kann bequem (und ohne "busy-waiting") eine Synchronisation mehrerer Kommunikationsobjekte programmiert werden.
Falls eines der in der Liste (ListOfOIDs) bezeichneten Objekte nicht existiert oder nicht vom write-once-Typ ist, oder der Prozeß nicht berechtigt ist, auf eines dieser Objekte zuzugreifen (s. Block 59), erfolgt - gemäß Schritt 60 - eine Fehlermeldung.
Für jede OID aus der Liste ListOfOIDs gilt, daß - falls das durch die OID bezeichnete Objekt definiert ist (Abfrage 61), - dieses Objekt als das "gefeuerte Objekt" retourniert wird (bzw. sein Listenindex), s. Block 62 in Fig.8.
Falls kein Objekt aus der ListOfOIDs-Liste definiert ist, wird an jedes Objekt (d.h. an seine vom lokalen Agenten-21, 22 oder 23 gemäß Fig.2 - verwaltete Objektstruktur) aus dieser Liste, falls gemäß Abfrage 63 der Request vom Benutzer aufgerufen wurde, eine "alt_wait"-Anfrage angehängt (Schritte 64 bis 67, Fig.8).
Dabei wird bei 64 ein "Alternatives Warten"-Request erzeugt, bei 65 wird das nächste Objekt O aus der Warteliste (ListOfOIDs) definiert, und bei 66 wird abgefragt, ob dieses Objekt O leer ist; wenn nein, wird der "alt_wait"-Request an das Objekt O angehängt (Schritt 67). Sodann wird der Strategiemanager informiert, daß das Objekt O gelesen werden soll, s. Schritt 58 (der wie erwähnt nachfolgend anhand der Fig.34 noch näher erläutert werden soll). Die Schritte 65 bis 67 und 58 werden für alle Objekte der Liste wiederholt. Sobald ein Objekt aus der Liste ListOfOIDs definiert (d.h. in einer Transaktion geschrieben) wurde, wird automatisch diese Anfrage erfüllt, die Nummer des Objekts in der Liste retourniert und die Anfrage am aktuellen Objekt sowie alle Anfragen, die an den anderen Objekten hängen, entfernt.

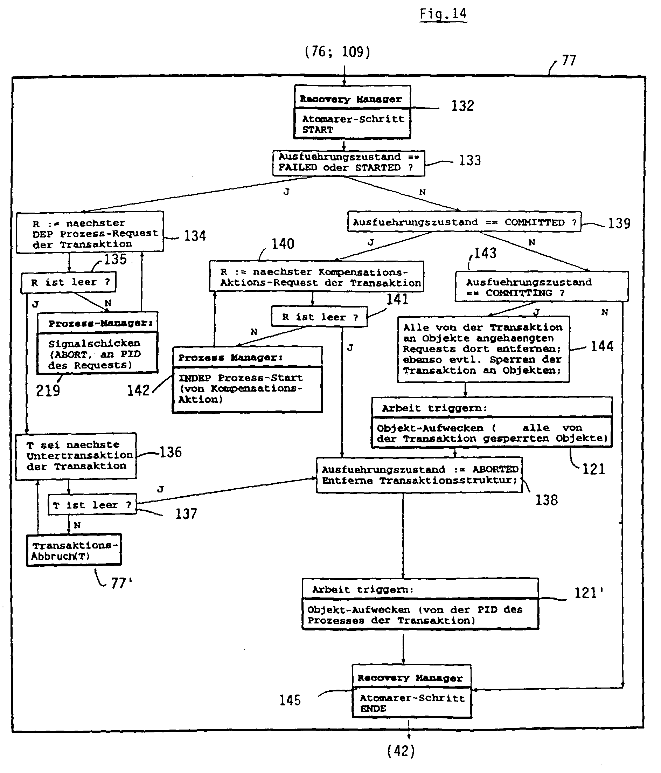

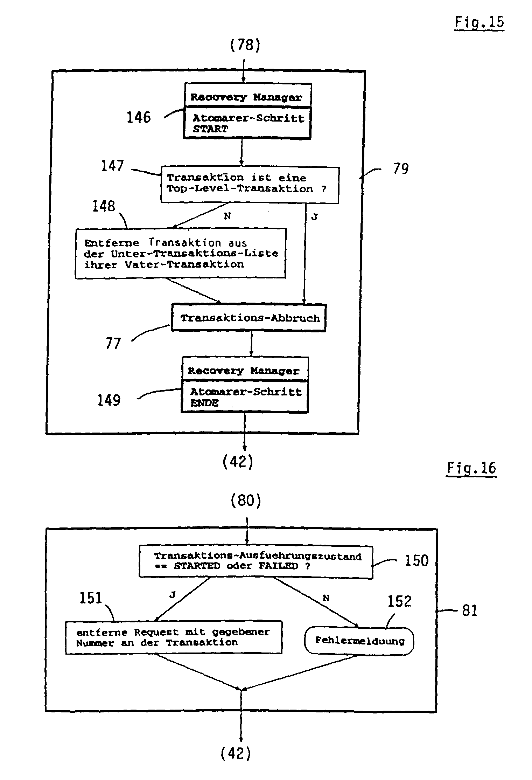

Der Ablauf der Transaktionskontrolle ergibt sich allgemein aus dem Schema, Block 41, von Fig.9, wobei der jeweils eingelangte Request R nun im Zusammenhang mit eventuell in ihm enthaltenen Transaktions-Befehlen untersucht wird. Dabei wird einleitend bei 68 abgefragt, ob eine Top-Level-Transaktion gestartet werden soll, und wenn ja, wird dies gemäß Block 69 (s. nachfolgend Erläuterung zu Fig.10) durchgeführt; wenn nein, wird bei 70 abgefragt, ob eine Unter-Transaktion gestartet werden soll, und wenn ja, wird dies gemäß Block 71 (s. Fig.11) durchgeführt; wenn nein, wird bei 72 abgefragt, ob ein schwaches Transaktions-Kommit erfolgen soll; wenn ja, wird das schwache Transaktions-Kommit gemäß Block 73 (s. Fig.12, in Verbindung mit Fig.13) durchgeführt; wenn nein, wird nach einem Transaktions-Kommit mit eventuellem Abbruch abgefragt, s. Block 74 in Fig.9; wenn das Ergebnis ja ist, wird das Transaktions-Kommit gemäß Block 75 durchgeführt, welches ebenfalls, zusammen mit dem schwachen Transaktions-Kommit, in Fig.12 veranschaulicht ist. Falls der Request R kein Transaktions-Kommit-Request ist, wird als nächstes bei 76 abgefragt, ob ein Abbruch einer Transaktion gewünscht wird, und wenn ja, wird dieser Transaktions-Abbruch gemäß Block 77 (s. auch Fig.14) durchgeführt; wenn nein, wird als nächstes bei 78 abgefragt, ob der Request eine Transaktions-Rücknahme betrifft, und wenn ja, wird diese Rücknahme gemäß Block 79 (s. auch Fig.15) durchgeführt; im anderen Fall wird bei 80 abschließend abgefragt, ob der Request eine Rücknahme eines transaktionalen Befehls betrifft, und wenn ja, wird bei 81 diese Request-Rücknahme durchgeführt (s. auch Fig.16); wenn nein, wird ebenso wie nach Durchführung der einzelnen TransaktionsFunktionen 69, 71, 73, 75, 77, 79 oder 81 zum Block 42 in Fig.4 weitergegangen, bei dem es sich um die nachstehend anhand der Fig.17 näher erläuterten transaktionalen Befehle handelt.

Zuvor sollen jedoch noch die einzelnen Transaktions-Befehle, 69, 71, 73, 75, 77, 79 oder 81 anhand der Fig.10, 11, 12 (mit 13), 14, 15 und 16 näher erläutert werden.

### - Start einer Top-Level-Transaktion: TID <- top_trans_begin (s. Fig.10)

Mit dieser Funktion wird eine neue Top-Level-Transaktion angelegt und ihre eindeutige Identifizierungsnummer (TID) retourniert. Die TID wird als Argument an andere Befehle weitergegeben.
Im einzelnen wird bei dieser Funktion im Schritt 82 eine eindeutige TID erzeugt und eine durch diese TID eindeutig gekennzeichnete Transaktionsstruktur angelegt, in der vermerkt ist, daß es sich um eine Top-Level-Transaktion handelt (d.h. sie besitzt keine Vater-Transaktion). Der Ausführungszustand von TID wird auf gestartet ("STARTED") gesetzt. Sodann wird bei 83 abgefragt, ob der Transaktions-Start über das Applikations-Interface (API) des lokalen Softwaresystems aufgerufen wurde; wenn ja, wird der Transaktions-Typ als normal definiert (Schritt 84); wenn nein, wird der Transaktions-Typ als Hilfstransaktion festgelegt (Schritt 85). In beiden Fällen wird anschließend die TID retourniert (Schritt 86).

### - Start einer (Unter-)Transaktion: (TID, MsgNr) <- trans_ begin(TIDᵥₐₜₑᵣ) (s. Fig.ll)

Diese Funktion, Block 71 in Fig.ll, dient dazu, eine neue geschachtelte Untertransaktion anzulegen; retourniert wird ihre TID sowie eine eindeutige Kennzeichnung dieses Untertransaktions-Befehls. (Genaugenommen ist trans_begin auch ein transaktionaler Befehl.) Das Argument TIDᵥₐₜₑᵣ muß eine gültige TID enthalten, in der diese Transaktion als Unter-transaktion gestartet wird, und dies wird bei 87 einleitend abgefragt. TIDᵥₐₜₑᵣ ist abhängig vom Erfolg von TID und umgekehrt muß TID abgebrochen werden, wenn TIDᵥₐₜₑᵣ nicht gutgeht. Da die Isolationseigenschaft von Transaktionen aufgelöst wurde, kann TID kommitten, bevor TIDᵥₐₜₑᵣ fertig ist. Sollte jedoch TIDᵥₐₜₑᵣ danach fehlschlagen, wird TID kompensiert.
Im wesentlichen läuft die Prozedur wie bei top_trans_begin ab, nur daß in der Transaktionsstruktur vermerkt wird, daß TIDᵥₐₜₑᵣ die Vater-Transaktion von TID ist.
Abgesehen von der Abfrage nach einer TIDᵥₐₜₑᵣ-Transaktion wird bei 87 auch überprüft, ob diese TIDᵥₐₜₑᵣ-Transaktion im Zustand gestartet ("STARTED") ist, oder ob sie nicht gutgegangen ist ("FAILED"). Wenn das Abfrageergebnis bei 87 negativ ist, wird im Schritt 88 eine Fehlermeldung abgegeben. Ansonsten wird im Schritt 89 eine eindeutige TID erzeugt, die zugehörige Transaktions-Struktur angelegt, der Transaktions-Vater (TIDᵥₐₜₑᵣ) definiert, der Ausführungszustand der Transaktion auf gestartet ("STARTED") gesetzt und der Transaktions-Typ als normal definiert. Anschließend werden bei 90 die TID und die eindeutige Nachrichtennummer retourniert, und danach wird - ebenso wie im Fall der Fehlermeldung gemäß Schritt 88 - zum Block 42 (Fig.4) weitergegangen.

### - Schwaches Transaktions-Kommit: Result <- trans_try_ commit (TID)

und

### - Transaktions-Kommit: Result <- trans_commit(TID) (s. Fig.12)

Beim Start des schwachen Transaktions-Kommits (d.i. eine Kommit-Aktion ohne Abbruch) einer Transaktion TID wird (ebenso wie beim "starken" oder bedingungslosen Transaktions-Kommit, bei dem gegebenenfalls ein Abbruch erfolgt) die Ausführung aller transaktionalen Befehle bewirkt, die in dieser Transaktion angegeben wurden; wenn nur einer dieser Befehle nicht ausführbar ist, kann das Kommit nicht gutgehen, und es wird als Ergebnis hiervon die Nummer des fehlgeschlagenen Befehls retourniert. Ansonst werden, wenn das Kommit erfolgreich ist, die Effekte aller Befehle atomar sichtbar gemacht und alle spezifizierten Kommit-Aktionen angestartet; weiters wird eine Erfolgsmeldung retourniert. Wenn die Prozedur für ein (Schwaches) Transaktions-Kommit vom Benutzer aufgerufen wird, dann darf ferner die Transaktions-Identifikation TID keine Hilfstransaktion bezeichnen.
Im einzelnen wird, wenn die Transaktion, die durch TID bezeichnet wird, nicht existiert, oder wenn ihr Ausführungszustand nicht "STARTED" oder "FAILED" ist, oder wenn der Prozeß nicht berechtigt ist, auf die in den transaktionalen Anfragen verwendeten Objekte zuzugreifen (s. Abfrage-Block 91 in Fig.12), eine Fehlermeldung (Schritt 92 in Fig.12) erzeugt. Überdies wird der Ausführungszustand der Transaktion auf "COMMITTING" gesetzt (s. Block 93).
Sodann wird - gemäß Block 94 - die Strategie der Transaktion aufgrund der in ihr abgesetzten Anfragen bestimmt bzw. überprüft, d.h. die Strategien aller in dieser Transaktion von Schreib-Anfragen geschriebenen Objekte, aller von cobj_trans_read (s. unten) gelesenen Objekte, aller Objekte, die als PIDs oder in Einträgen in den nachstehend erläuterten Anfragen dep_process, compensate_action und on_commit_action dienen, sowie die Strategien aller Untertransaktionen müssen dieselbe Zuverlässigkeitsklasse haben und derselben Basis-Strategie angehören. Falls dies nicht zutrifft, wird wiederum eine Fehlermeldung erzeugt (s. Block 92).
Nun wird versucht, jede transaktionale Anfrage dieser Transaktion zu erfüllen. Dabei werden gegebenenfalls alle transaktionalen Anfragen (Requests) R der Reihe nach in einer Schleife 95 mit dem Eingangsschritt 96 (in dem immer auf den nächsten Request weitergeschaltet wird) behandelt, bis die Liste der Requests abgearbeitet, d.h. leer ist (Abfrage 97), wobei dann auf eine Prozedur "Transaktions-Kommit beenden" (s. Block 98 bzw. Fig.13) übergegangen wird.

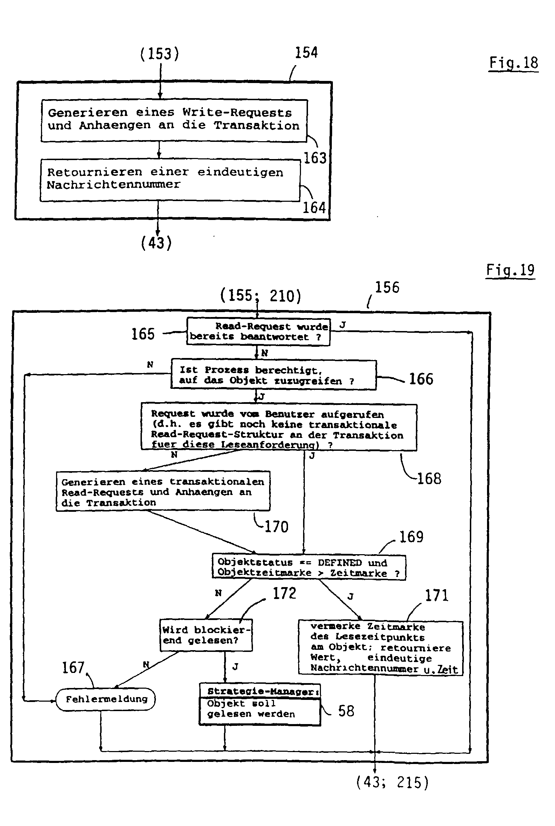

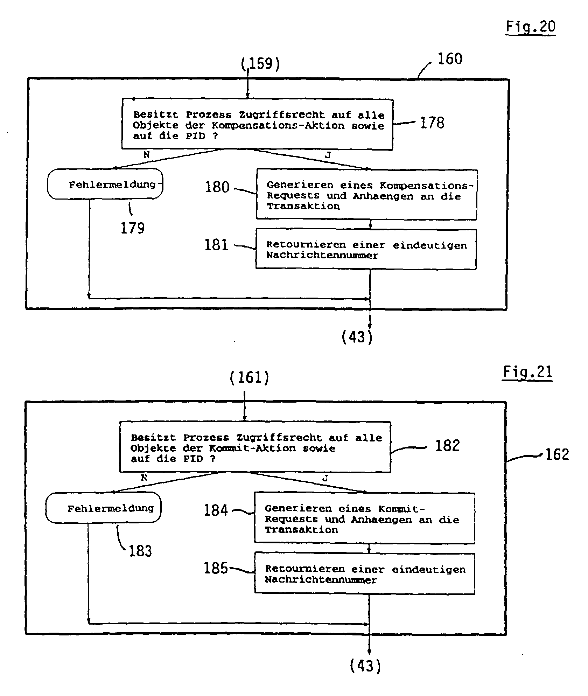

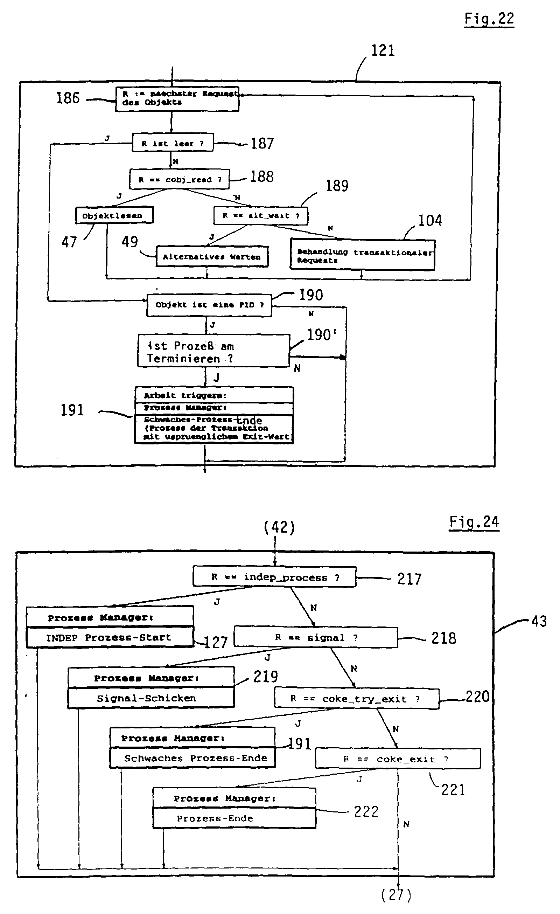

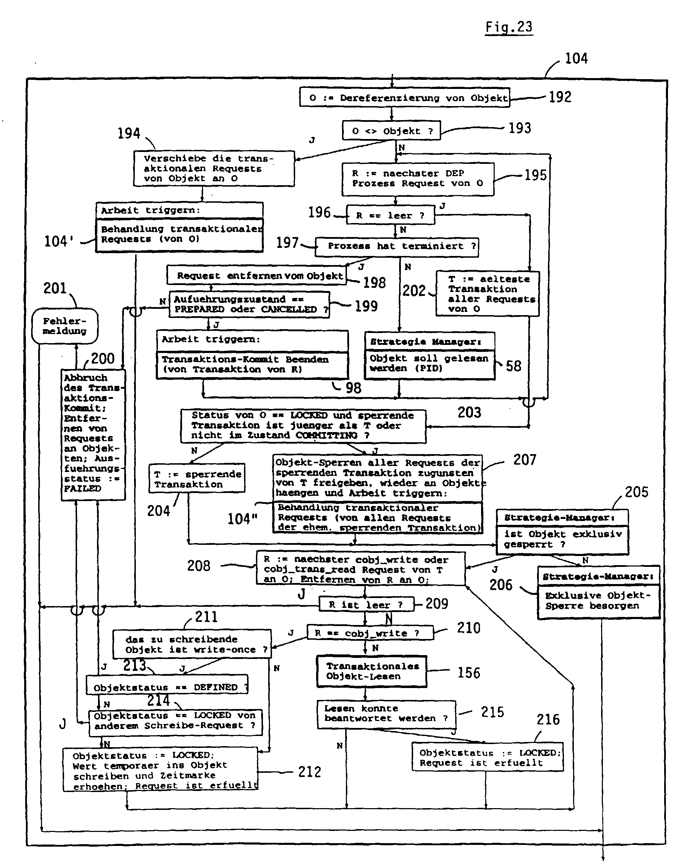

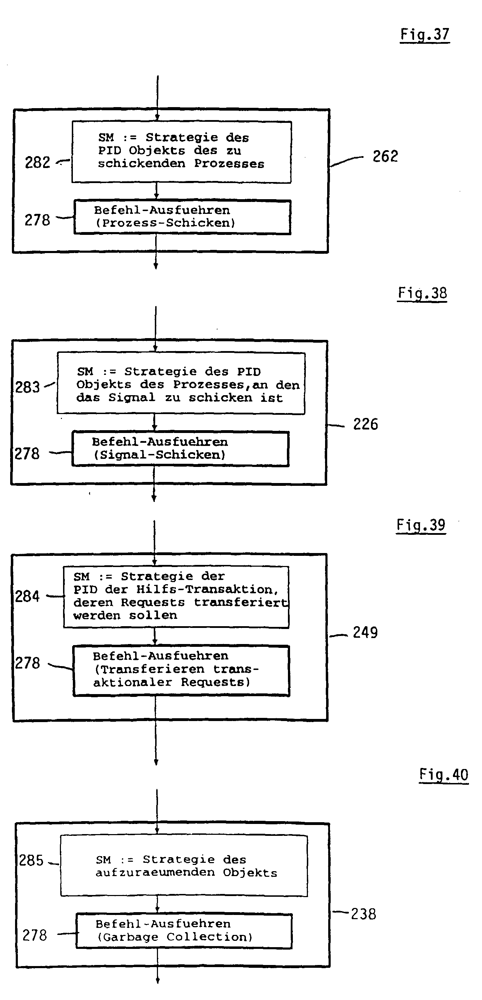

Solange noch Requests vorliegen, d.h. R nicht leer ist (Abfrage 97), passiert folgendes:
-- Wenn es sich bei R um eine Untertransaktion handelt (Abfrage 99), dann muß die Anfrage terminiert (Abfrage 100) und erfolgreich "committed" haben (Abfrage 101); ansonst wird eine Fehlermeldung erzeugt (Block 92).
-- Wenn die Anfrage R eine Schreib-Anfrage ist (Abfrage 102), so wird sie an die Objektstruktur des zu schreibenden Objekts OID angehängt (Block 103), und es wird versucht, das Objekt zu beschreiben (Block 104); diese Prozedur wird nachstehend anhand der Fig.23 erläutert werden, hier genügen vorerst folgende Erläuterungen: es wird die entsprechende Verteilungsstrategie aufgerufen, um eine exklusive Sperre auf OID zu bekommen (d.h. die "Hauptkopie" bei Replikationsprotokollen); falls die OID bereits von einer anderen Transaktion gesperrt ist und die sperrende Transaktion jünger als die vorliegende Transaktion TID ist, muß die jüngere Transaktion die Sperre temporär für TID freigeben ("Deadlock"-Vermeidung!) ; die Anfrage der jüngeren Transaktionen wird automatisch später wieder aufgeweckt; wenn die OID bereits definiert ist und es sich um ein nur einmal beschreibbares Objekt handelt, erfolgt eine Fehler-Meldung; ansonst wird das Objekt mit der Nr. OID nun für TID gesperrt und provisorisch wird der Wert in OID geschrieben (d.h. er ist noch nicht offiziell sichtbar); dabei sind alle bisher in der Transaktion TID angemeldeten Schreib-Anfragen bereits zu berücksichtigen; Kommunikationsobjekte, die in einem überschriebenen Wert eines aktualisierbaren Objekts vorkommen, werden protokollabhängig der Garbage-Collection (s. Fig.40) unterworfen, sofern ihr Referenzzähler 0 geworden ist;
-- Wenn der Request einen abhängigen Prozeß betrifft (der nachfolgend anhand von Fig.25 noch näher erläutert wird), d.h. eine dep_rocess-Anfrage ist, was mit der Abfrage 105 in Fig.12 festgestellt wird, so wird im Schritt 106 ein entsprechender dep_process-Request angelegt, der an das PID-Objekt des Prozesses angehängt wird, und danach wird dieser transaktionale Request wieder im Block 104 (s. Fig.23) behandelt; dabei wird gewartet, bis diese dep_process-Anfrage terminiert hat. Falls der Ausführungszustand dieser Anfrage nicht "PREPARED" oder "CANCELLED" ist, erfolgt eine Fehlermeldung.
-- Wenn die Anfrage R eine Anfrage für transaktionales Lesen (s. Fig.19), d.h. ein cobj_trans_read-Request ist, was bei 107 in Fig.12 abgefragt wird, dann wird diese Anfrage (gemäß Schritt 108) an die Objektstruktur des zu schreibenden Objekts OID angehängt, und es wird wieder zur Prozedur gemäß Block 104 übergegangen (s. Fig.23), wobei dort die entsprechende Verteilungsstrategie aufgerufen wird, um eine exklusive Sperre auf das Objekt OID zu bekommen (vgl. oben den Vorgang bei Schreib-Anfragen); es wird dann getestet, ob der gelesene Wert noch immer aktuell ist; falls nicht, oder falls bereits anfänglich der trans_cobj _read-Befehl fehlgeschlagen hat, erfolgt eine Fehlermeldung.
-- Sobald, wie oben beschrieben, alle Anfragen erfolgreich durchgeführt wurden (Abfrage R ist leer, Block 97), wird die Prozedur "Transaktions-Kommit Beenden" Block 98 (s. Fig.13) aufgerufen; es darf keine Sperre mehr zugunsten einer anderen Transaktion aufgegeben werden; alle Effekte (in Objekte geschriebenen Werte) werden nun in einem Schritt (atomar) sichtbar gemacht; dazu gehört auch das Anstarten aller "on_commit_action"-Befehle dieser Transaktion (dieselbe Prozedur wie das Anstarten eines - noch zu beschreibenden - unabhängigen Prozesses) und das Schicken eines Signals "COMMIT" an alle dep_process-Prozeduren dieser Transaktion. Die Zuverlässigkeit der Effekte der Transaktion hängt von der jeweiligen Verteilungsstrategie der Transaktion ab.
   Falls die Transaktion eine Top-Level-Transaktion war, kann nun ihre Transaktionsstruktur entfernt werden (was in Fig.12 der Einfachheit halber nicht dargestellt ist). Ansonst wird ihr Ausführungszustand auf "COMMITTED" gesetzt, und sie muß aufgehoben werden, bis ihre Vater-Transaktion terminiert, da bis dahin Kompensations-Aktions-Prozeduren noch benötigt werden. Wenn es sich um eine Hilfstransaktion handelt, wird nun das Beenden (exit) des entsprechenden unabhängigen Prozesses aufgeweckt.
   Der Aufruf der Verteilungsstrategie, um eine exklusive Sperre zu bekommen, muß nicht sofort erfolgreich sein, sondern kann eine Reihe von Kommunikationsschritten verlangen. Sobald eine Entscheidung vorliegt, wird wieder automatisch der Transaktionsmanager aktiviert, um das Kommit (Fig.12) fortzusetzen.
   Eine Fehlermeldung - s. Block 92 in Fig.12 - bei der Ausführung von transaktionalen Anfragen bedeutet nicht, daß die Transaktion abgebrochen ("aborted") wird; im Falle eines schwachen Transaktions-Kommit (Abfrage 109) wird der Ausführungszustand der Transaktion auf "FAILED" gesetzt (Schritt 110), und die Nachrichtennummer (MsgNr) der Anfrage, die die Fehlermeldung verursacht hat, ist abfragbar; diese Anfrage kann mit dem Befehl "cancel" zurückgenommen werden, und es kann wiederholt versucht werden, die Transaktion zu kommitten.
   Falls die Strategie der Transaktion eine "zuverlässige" Strategie ist, so überleben die Effekte der Transaktion auch Systemfehler.
-- Wenn sich bei der Abfrage 109 ergibt, daß ein "starkes" Transaktions-Kommit betroffen ist, so verhält sich diese Funktion trans_commit wie die vorhergehende schwache Transaktions-Kommit-Funktion (trans_try_commit) mit dem Unterschied, daß dann, wenn das Kommit nicht erfolgreich ist, die Transaktion TID automatisch abgebrochen wird, s. Block 77 in Fig.12, "Transaktions-Abbruch" ("trans_abort"), der in Fig.14 näher veranschaulicht ist.
   Bevor nun der Abbruch einer Transaktion anhand der Fig.14 näher erläutert wird, sei noch auf die Prozedur "Transaktions-Kommit-Beenden" (s. Block 98 in Fig.12) anhand der Fig.13 eingegangen.
   Bei dieser Prozedur wird einleitend bei 111 abgefragt, ob alle transaktionalen Anfragen der Transaktion bereits erledigt wurden; wenn nein, wird sofort zum Ausgang dieser Prozedur (und beispielsweise zum Block 42 in Fig.4) übergegangen. Wenn das Abfrageergebnis bei 111 jedoch positiv ist, wird bei 112 der Recoverymanager aufgerufen, um den atomaren Schritt START durchzuführen. Danach wird die nächste Anfrage aus der Liste transaktionaler Request der Transaktion aufgegriffen (Schritt 113), und bei 114 wird abgefragt, ob es noch einen Request R in der Request-Liste gibt. Falls R nicht leer ist, d.h. solange transaktionale Anfragen vorhanden sind, wird sodann bei 115 abgefragt, ob der Request das Anlegen einer Untertransaktion betrifft; wenn ja, wird zum Schritt 113 zurückgekehrt; wenn nein, wird sodann bei 116 abgefragt, ob ein transaktionaler Befehl "Objekt-Schreiben" vom Request betroffen ist. Wenn nein, wird bei 117 abgefragt, ob der Request einen abhängigen Prozeß betrifft; falls ja, wird ebenfalls zum Schritt 113 zurückgekehrt, andernfalls wird bei 118 abgefragt, ob es sich bei dem Request um den transaktionalen Befehl "transaktionales Objekt-Lesen" handelt; falls nein, wird sodann bei 119 abgefragt, ob dieser Request den transaktionalen Befehl "Kommit-Aktion-Anmelden" betrifft; falls nein, wird nun ebenfalls zum Schritt 113 zurückgekehrt.
   Die transaktionalen Befehle "Objekt-Schreiben", "transaktionales Objekt-Lesen" und "Kommit-Aktion-Anmelden" werden nachstehend anhand der Fig.18, 19 und 21 noch näher erläutert werden.
   Wenn im Ablauf gemäß Fig.13 das Ergebnis der Abfrage nach "Objekt-Schreiben", Block 116, positiv ist, so wird in einem Schritt 120 der Wert des Objekts vorübergehend in das Objekt geschrieben, es wird die Zeitmarke des Objekts inkrementiert, und der Status des Objekts wird auf "definiert" ("defined") bzw. "Referenz" ("Reference") gesetzt. Im Anschluß daran wird bei 121 die transaktionale Prozedur "Objekt-Aufwecken" aufgerufen, welche nachstehend anhand der Fig.22 noch näher erläutert werden soll, und es wird danach zum Schritt 113 zurückgekehrt.
   Wenn sich bei der Abfrage 118 ergibt, daß der Request ein transaktionales Objekt-Lesen betrifft, so wird im Schritt 122 abgefragt, ob die Zeitmarke des betroffenen Objekts gleich der Zeitmarke zum Zeitpunkt des Lesens ist, und falls dies zutrifft, wird ebenfalls die Prozedur 121 "Objekt-Aufwecken" aufgerufen. Wenn dies hingegen nicht der Fall ist, dann wird bei 123 der Recoverymanager aufgerufen, um den atomaren Schritt ABBRUCH durchzuführen, wonach bei 124 abgefragt wird, ob das betroffene Kommit ein schwaches oder ein normales (starkes) Transaktions-Kommit war. Im Falle eines starken Transaktions-Kommits erfolgt dann gemäß Block 77 der Abbruch der Transaktion, im Fall eines schwachen Transaktions-Kommits wird hingegen der Ausführungszustand der Transaktion auf "Fehlgeschlagen" ("FAILED") gesetzt, s. Block 125 in Fig.13. In beiden Fällen folgt anschließend gemäß Schritt 126 eine Fehlermeldung.
   Wenn sich bei der Abfrage 119 ergibt, daß der Request R das Anmelden einer Kommit-Aktion betrifft, so wird gemäß Block 127 der Prozeßmanager aufgerufen, um einen unabhängigen Prozeß (wie nachfolgend anhand von Fig.26 erläutert werden soll) für die Kommit-Aktion anzustarten. Im Anschluß daran wird ebenfalls zum Schritt·113 zurückgekehrt.
   Falls bei der Abfrage 114 festgestellt wird, daß keine Requests mehr vorliegen (R ist leer), wird die zuvor vorgenommene exklusive Sperre an allen von der Transaktion gesperrten Objekten freigegeben, s. Schritt 128, und es wird ein Kommit-Signal an alle abhängigen Unter-Prozesse der Transaktion gesandt, Schritt 129, wonach im Schritt 130 der Ausführungszustand der Transaktion auf "COMMITTED" gesetzt wird. Nach dieser erfolgreichen Vollzugsmeldung der Transaktion wird abschließend der Recoverymanager für die Durchführung des atomaren Schritts "ENDE" aufgerufen (Block 131). Danach wird beispielsweise zur nächsten Prozedur (Transaktionale Befehle gemäß Block 42 in Fig.4) übergegangen.
   Im Ablauf gemäß Fig.9 ist nach dem Transaktions-Kommit als nächste Möglichkeit wie erwähnt ein Transaktions-Abbruch vorgesehen, s. Block 77, und ein solcher Transaktions-Abbruch ist auch am Ende der Prozedur gemäß Fig.12 (Transaktions-Kommit) vorzunehmen.

### - Abbruch einer Transaktion: trans_abort(TID) (s. Fig.14)

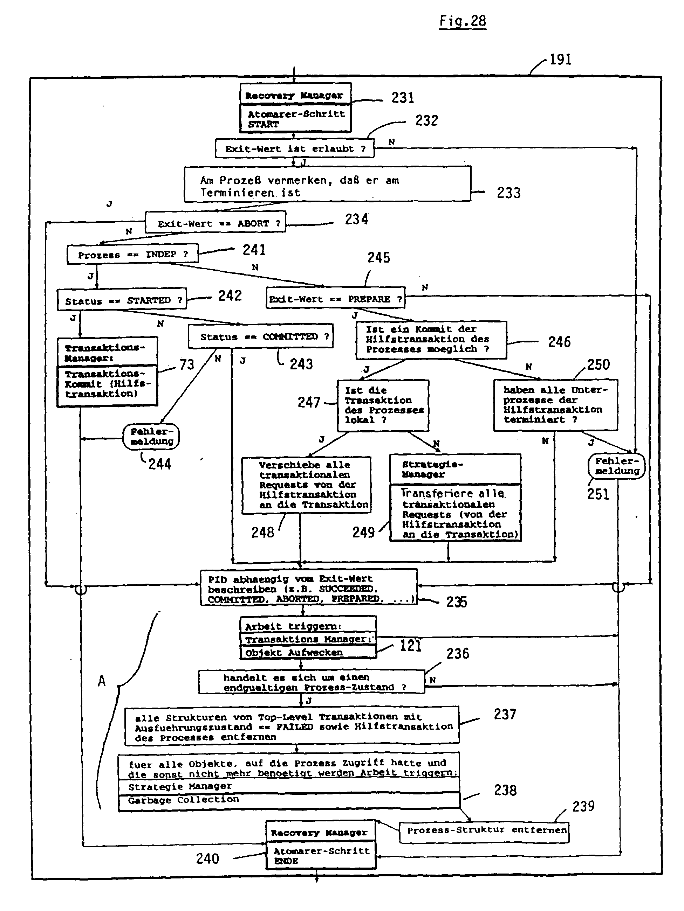

Diese Funktion verursacht den Abbruch der angegebenen Transaktion TID und - falls diese Transaktion Untertransaktionen besitzt - rekursiv auch deren Abbruch (s. Block 77' in Fig.14). Es ist zu beachten, daß dann, wenn eine oder mehrere Untertransaktion(en) bereits erfolgreich kommittet hat bzw. haben, ein Abbruch der Transaktion die Ausführung der Kompensationsaktion(en) von solchen Untertransaktionen bewirkt, von der/denen angenommen wird, daß sie auch alle Effekte ihrer Untertransaktionen kompensiert/en, d.h. in diesem Fall wird nicht mehr rekursiv abgebrochen. Wenn die abzubrechende Transaktion TID eine Vatertransaktion besitzt, so kann diese nicht mehr erfolgreich kommitten, außer die Transaktion TID wird noch ausdrücklich zurückgenommen (mit Hilfe von "trans- cancel(TID)", s. unten).
Im einzelnen ist der Ablauf gemäß Fig.14 wie folgt:
Nach einem einleitenden Aufruf des Recoverymanagers bei 132, um den atomaren Schritt START auszuführen, wird bei 133 abgefragt, ob der Ausgangszustand der Transaktion TID "FAILED" oder "STARTED" ist; wenn ja, dann wird "trans_abort" auch für alle Untertransaktionen dieser Transaktion TID aufgerufen, und das Signal "ABORT" wird an alle abhängigen ("dep_process"-)Prozesse (s. unten), die in der Transaktion TID gestartet wurden, gesendet. Dabei wird gemäß Schritt 134 der nächste abhängige Prozeß der Transaktion mit R bezeichnet, und bei 135 wird abgefragt, ob noch derartige Prozesse vorliegen; wenn R noch nicht leer ist, wird gemäß Block 219 der Prozeßmanager aufgerufen, um ein Signal "ABORT" an die PID des Requests zu schicken (zu "Signal schicken" s. auch nachstehend zu Fig.27); wenn gemäß Abfrage 135 keine Prozesse mehr vorliegen, d.h. wenn R ist leer ist, dann wird im Schritt 136 die nächste Untertransaktion der Transaktion mit T bezeichnet und bei 137 abgefragt, ob es noch eine gab. Wenn ja, wird diese Untertransaktion T gemäß Block 77' abgebrochen, und es wird zum Schritt 136 zurückgekehrt. Sobald keine Untertransaktionen mehr vorliegen (Ausgang J der Abfrage 137), wird gemäß Schritt 138 der Ausgangszustand der Transaktion TID auf "abgebrochen" ("ABORTED") gesetzt.
Wenn sich nach einem negativen Abfrageergebnis bei 133 in einer Abfrage 139 der Ausgangszustand der Transaktion TID als "COMMITTED" ergibt, dann werden gemäß Schritt 140 (Definition von nächstem R) ; Abfrage 141 ("Liste R leer ?") und Block 142 (Start eines unabhängigen Prozesses) alle Kompensationsaktionen dieser Transaktion TID aktiviert (dieselbe Prozedur wie das Anstarten eines unabhängigen (= INDEP-)Prozesses).
Wenn andererseits der Ausgangszustand der Transaktion TID nicht "COMMITTED" (Block 139), jedoch gemäß Abfrage 143 "COMMITTING" ist, dann sind alle transaktionalen Anfragen der Transaktion aufzufinden, die von der Kommit-Aktion an Objekte gehängt wurden, und dort zu entfernen. Auch sind mögliche durch die Transaktion TID verursachte Objektsperren zurückzusetzen (Schritt 144). Sodann wird die Prozedur "Objekt-Aufwecken" 121 (s. Fig.22) aufgerufen, um alle von der Transaktion gesperrten Objekte aufzuwecken. Sodann wird der Zustand der Transaktion auf "abgebrochen" ("ABORTED") gesetzt, und die Transaktionsstruktur kann nun entfernt werden (Schritt 138). Gemäß Schritt 121' wird anschließend wieder die Prozedur "Objekt-Aufwecken" aufgerufen (Fig.22), um die PID des Prozesses der Transaktion aufzuwecken. Danach wird bei 145 der Recoverymanager aufgerufen, um den Atomaren Schritt ENDE auszuführen. Zu diesem Schritt 145 gelangt man auch, wenn bei der Abfrage 143 festgestellt wurde, daß der Zustand der Transaktion nicht "COMMITTING" ist.

### - Rücknahme einer Transaktion: trans_cancel(TID) (s. Fig.15 bzw. Block 79 in Fig.9)

Dieser Request verhält sich wie "Transaktions-Abbruch" ("trans-abort(TID)"), (s. oben bzw. Block 77 in Fig.14) mit dem Unterschied, daß der Erfolg einer umschließenden Vater-transaktion davon nicht betroffen ist. Wenn also nach dem START-Schritt 146 bei der Abfrage 147 festgestellt wird, daß die betroffene Transaktion TID keine Top-Level-Transaktion ist, dann wird gemäß Schritt 148 die trans_begin(TIDᵥₐₜₑᵣ)-Anfrage aus der Liste der transaktionalen Anfragen ihrer Vater-Transaktion entfernt. Danach - oder wenn die Transaktion eine Top-Level-Transaktion ist (Abfrage 147) - folgt der Transaktions-Abbruch, Block 77, gefolgt vom Beendigungsschritt 149.

### - Rücknahme eines transaktionalen Befehls: cancel(TID, MsgNr) (Block 81 in Fig.9, s. Fig.16)

Der letzte Block im Ablauf von Fig.9 betrifft eine etwaige Requestrücknahme (Block 81), wobei in diesem Fall, gemäß Fig.16, einleitend bei 150 nach dem Zustand der Transaktion abgefragt wird; sofern dieser Zustand STARTED oder FAILED ist, wird der Request mit der angegebenen Nummer von der Transaktion TID entfernt, s. Schritt 151 in Fig.16. Sofern der Zustand der Transaktion nicht STARTED oder FAILED ist, wird gemäß Schritt 152 eine Fehlermeldung abgegeben.

Es wird somit gemäß Fig.16 der durch die Nachrichten-Nummer "MsgNr" spezifizierte transaktionale Befehl bzw. Request zurückgenommen. (Betrifft dieser Befehl das Anlegen einer Untertransaktion, so hat "cancel" denselben Effekt wie "trans_cancel", s. oben, und analog für abhängige Prozesse denselben Effekt wie "signal_(CANCEL)", s. unten; dies ist jedoch der Einfachheit halber in Fig.16 weggelassen worden.)

Wenn nun wieder zu Fig.4 zurückgekehrt wird, so ergibt sich aus dem dortigen Ablauf im Anschluß an Block 41, Befehl zur Transaktionskontrolle, der Block 42: Transaktionaler Befehl. Der Ablauf dieser Funktion 42 ist in Fig.17 näher veranschaulicht, wobei ersichtlich ist, daß einleitend abgefragt wird (bei 153), ob es sich um einen Befehl zum Objekt-Schreiben handelt. Wenn ja, wird die Prozedur "Objekt-Schreiben" gemäß Block 154 aufgerufen, wobei dieser transaktionale Befehl Objekt-Schreiben nachfolgend anhand der Fig.18 näher erläutert werden soll.

Wenn kein Befehl zum Beschreiben eines Objekts vorliegt, wird anschließend bei 155 abgefragt, ob ein Befehl zum transaktionalen Lesen vorliegt. Wenn ja, wird gemäß Block 156 die Prozedur "transaktionales Objekt-Lesen" aufgerufen, die nachfolgend anhand der Fig.19 beschrieben werden wird. Wenn nein, wird als nächstes bei 157 abgefragt, ob der Request einen abhängigen Prozeß betrifft. Wenn ja, wird bei 158 der Prozeßmanager aufgerufen, um den abhängigen Prozeß anzustarten; die entsprechende Prozedur ("dep_process-START") wird nachfolgend im Rahmen des Prozeßmanagers noch näher erläutert werden.

Wenn kein abhängiger Prozeß zu behandeln ist, wird im Schritt 159 abgefragt, ob der Request das Anmelden einer Kompensations-Aktion betrifft, und wenn ja, folgt gemäß Block 160 die Prozedur "Kompensations-Aktion Anmelden" (welche nachfolgend anhand der Fig.20 näher erläutert werden wird). Wenn nein, wird schließlich bei 161 abgefragt, ob der Request das Anmelden einer Kommit-Aktion betrifft, und wenn ja, folgt gemäß Block 162 die nachfolgend anhand der Fig.21 zu erläuternde Prozedur "Kommit-Aktion-Anmelden".

Im einzelnen sind die vorstehend bereits angesprochenen transaktionalen Befehle (s. Fig.17) noch folgendermaßen zu erläutern.

### - Anmelden des Beschreibens eines Objekts: MsgNr <-cobj_write(TID, OID, Value) (s. Block 154 in Fig.17; Fig.18)

Mit diesem Befehl wird innerhalb einer Transaktion TID das Schreiben eines Wertes ("Value") - s. Block 163 in Fig.18-in ein Kommunikationsobjekt OID angemeldet. Das Schreiben wird aber erst beim erfolgreichen Transaktions-Kommit ausgeführt (s. vorstehende Ausführungen zu Fig.12 und 13). Retourniert wird gemäß Schritt 164 eine lokal eindeutige Nachrichten-Nummer ("MsgNr"), mit der man sich im folgenden, z.B. zum Rücksetzen, auf diesen Schreibebefehl beziehen kann.
Es wird im einzelnen mit diesem Befehl eine transaktionale Anfragestruktur generiert, die besagt, daß der Wert ("Value") in das Kommunikationsobjekt OID geschrieben werden soll, und diese Anfragestruktur an die durch TID gekennzeichnete Transaktionsstruktur angehängt.

### - Transaktionales Objekt-Lesen: (Value, Time2, MsgNr) <-trans_cobj_read(BlockingFlag, OID, TID, Time1) (s. Block 156 in Fig.17; Fig.19)

Dieser Befehl wird für aktualisierbare Kommunikationsobjekte verwendet und verhält sich ähnlich wie "Objekt-Lesen" ("cobj_read"; s. oben zu Fig.7), wobei mit einer logischen Zeitmarke ("Time1") sichergestellt wird, daß der zu lesende Wert neuer als diese Zeitmarke sein muß. Andernfalls wird, abhängig vom BlockingFlag, entweder eine Fehlermeldung retourniert oder blockiert.
Es kann (im Unterschied zu "Objekt-Lesen") in dem Fall, daß ein BlockingFlag gesetzt ist, gewartet werden, bis die Zeitbedingung erfüllt ist, wobei dann neben einer lokal eindeutigen Kennung des Lesebefehls (= MsgNr) auch der aktuelle Wert von OID ("Value") sowie eine logische Zeitmarke ("Time2") des gelesenen Werts retourniert wird. Wenn ein BlockingFlag nicht gesetzt ist und die Zeitbedingung erfüllt ist, dann werden dieselben Daten wie beschrieben retourniert, ansonst kommt es zu einer Fehlermeldung, und es wird vermerkt, daß das Lesen nicht gutgegangen ist.
Die Transaktion TID prüft nach einem erfolgreichen Lesen beim Transaktions-Kommit, ob die Zeitmarke Time2 noch immer dem aktuellen Wert des Objekts entspricht, und macht den Erfolg des Kommits davon abhängig.
Die den Lesebefehl eindeutig identifizierende Nummer ("MsgNr") kann später zum Rücksetzen des Befehls verwendet werden. Analog zu "alt_wait" (s. Fig.8) gibt es auch einen transaktionalen Befehl für aktualisierbare Kommunikationsobjekte, der ebenfalls Zeitmarken verwendet.
Im einzelnen wird gemäß Fig.19 beim Transaktionalen Objekt-Lesen einleitend abgefragt (Schritt 165), ob der Lese-Request bereits beantwortet wurde; wenn ja, wird sofort zum Ausgang (z.B. zu 43 oder 215) der Prozedur 156 übergegangen; wenn nein, wird nachfolgend bei 166 abgefragt, ob eine Berechtigung für den Prozeß gegeben ist, auf das Objekt zuzugreifen; falls dies nicht zutrifft, wird gemäß Schritt 167 eine Fehlermeldung abgegeben, und es wird ebenfalls zum Ausgang der Prozedur 156 übergegangen. Wenn die Berechtigung jedoch gegeben ist, wird sodann abgefragt, ob der Request vom Benutzer aufgerufen wurde (was bedeutet, daß noch keine transaktionale Lese-Request-Struktur an der Transaktion für diese Leseanforderung existiert). Wenn der Request vom Benutzer aufgerufen wurde, so wird anschließend im Schritt 169 der Zustand des Objekts abgefragt, d.h. es wird abgefragt, ob der Zustand "definiert" ("DEFINED") ist, und weiters wird abgefragt, ob die Objekt-Zeitmarke älter, d.h. größer, ist als die Wert-Zeitmarke (Time1). Wenn sich jedoch bei der Abfrage 168 ergibt, daß noch keine transaktionale Lese-Request-struktur existiert, wird eine solche im Schritt 170 erzeugt und an die Transaktion angehängt, worauf ebenfalls zur Abfrage 169 übergegangen wird.
Wenn sodann das Ergebnis der Abfrage 169 positiv ist, wird gemäß Schritt 171 die Zeitmarke Time2 des Lesezeitpunkts am Objekt vermerkt, und es werden weiters der Wert ("Value"), die bereits erwähnte eindeutige Nachrichtennummer (MsgNr) und die Wert-Zeitmarke Time2 retourniert. Danach wird zum Ausgang der Prozedur 156 übergegangen.
Ist hingegen das Ergebnis der Abfrage bei 169 negativ, so wird bei 172 weiter abgefragt, ob blockierend gelesen wird (d.h. ob das vorerwähnte BlockingFlag gesetzt ist), und wenn nein, erfolgt gemäß Schritt 167 eine Fehlermeldung; wenn jedoch ja, wird der Strategiemanager aufgerufen, um die Prozedur "Objekt soll gelesen werden", Block 58 (s. auch Fig.34) durchzuführen.

### - DEP-Prozeß-Start: Generieren einer lokalen Prozeßstruktur (s. Block 158 in Fig.17) : MsgNr <-dep_process(TID, PID, LSYS, Site, Entry) (s.Fig.25)

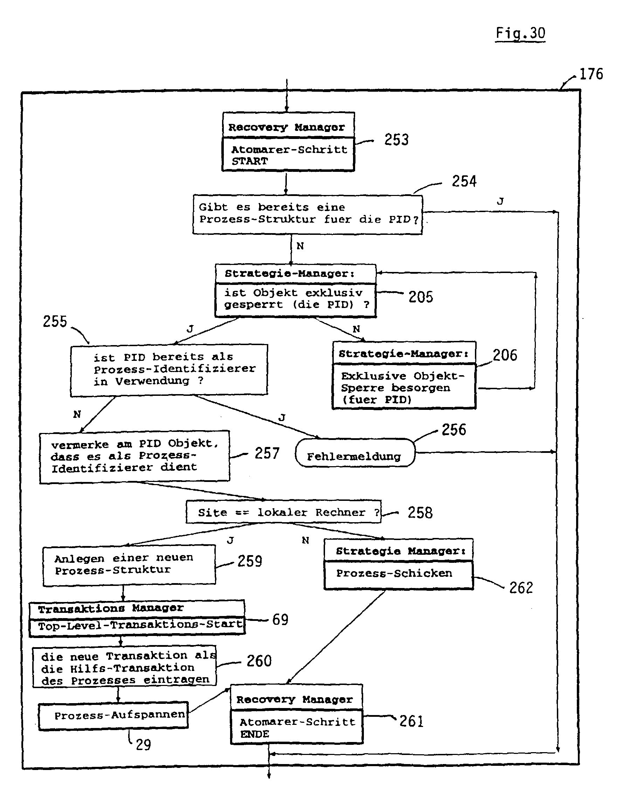

Diese Prozedur ist eigentlich dem Prozeßmanager zuzuordnen, wenngleich sie auch als Transaktionaler Befehl behandelt werden kann (s. Fig.17) und demgemäß hier in der Beschreibung vorgezogen werden soll.
Ganz allgemein wird nach Überprüfung von TID, PID, Entry und Site wie bei "indep_process" (s. unten bzw. Fig.26) eine neue Prozeßstruktur erzeugt, falls der Prozeß (mit der Nummer PID) auf dem lokalen Rechner (= "Site") laufen soll, und der Prozeß wird lokal angestartet, ansonst wird die Verteilungsstrategie von PID aufgerufen, um den Prozeß an den mit "Site" spezifizierten Rechner zu schicken.
Weiters wird eine transaktionale Anfragestruktur generiert, die besagt, daß ein abhängiger Prozeß gestartet wurde, und diese transaktionale Anfragestruktur wird an die durch TID gekennzeichnete Transaktionsstruktur angehängt. Eine lokal eindeutige Nummer wird retourniert, die zum Rücknehmen des Befehls verwendet werden kann.
Eine Transaktion TID kann nur dann erfolgreich kommitten, wenn alle ihre abhängigen Unterprozesse erfolgreich terminiert haben.
Eine Hilfstransaktion wird generiert, die als die Transaktion dieses Prozesses in seiner Prozeßstruktur vermerkt wird. Im einzelnen wird gemäß dem Ablauf von Fig.25 einleitend bei 173 abgefragt, ob der Prozeß auf alle Objekte des abhängigen Prozesses sowie auf den Prozeßidentifizierer PID zugreifen darf; wenn nein, erfolgt gemäß Schritt 174 eine Fehler-meldung, und es wird zum Ausgang der Prozedur (etwa zu 43) übergegangen. Wenn die Zugriffsberechtigung gegeben ist, wird im Schritt 175 ein dep_process-Request generiert und an die Transaktion angehängt, wonach bei 176 die Prozedur "Prozeßkreieren" aufgerufen wird, die nachfolgend anhand von Fig.30 noch näher erläutert werden wird. Danach wird im Schritt 177 eine eindeutige Nachrichtennummer retourniert.

### - Anmelden einer Kompensations-Aktion: MsgNr <-compensate_action(TID, PID, LSYS, Site, Entry) (s. Fig.20 bzw. Block 160 in Fig.17)

Vorweg wird hier bei 178 überprüft, ob der aktuelle Prozeß mit der Nummer PID ein Zugriffsrecht auf alle in "Entry" vorkommenden Objekte sowie auf die PID besitzt; falls nicht, wird eine Fehlermeldung erzeugt (Schritt 179).
Ansonst wird im Schritt 180 eine transaktionale Anfragestruktur generiert, die besagt, daß eine Kompensationsaktion definiert wurde, und diese wird an die durch TID gekennzeichnete Transaktionsstruktur angehängt. Sodann wird im Schritt 181 eine lokal eindeutige Nummer retourniert, die zum Rücksetzen des Befehls verwendet werden kann. Kompensationsaktionen werden gestartet, wenn die Transaktion TID erfolgreich kommittet hat und dann abgebrochen wird.

### - Kommit-Aktion-Anmelden: MsgNr <- on_commit_action(TID, PID, LSYS, Site, Entry) (s. Fig.21 bzw. Block 162 in Fig.17)

Im Prinzip ist dieser Befehl im Ablauf ähnlich dem Befehl "compensate_action" gemäß Fig.20, nur daß die Anfragestruktur besagt, daß eine Kommit-Aktion angemeldet wurde. So wird einleitend im Schritt 182 die Zugriffsberechtigung des Prozesses betreffend die Objekte der Kommit-Aktion sowie betreffend die PID abgefragt, und falls keine Zugriffsberechtigung gegeben ist, wird eine Fehlermeldung gemäß Schritt 183 abgesetzt. Ansonsten wird im Schritt 184 ein Kommit-Request generiert und an die betreffende Transaktion angehängt, wonach im Schritt 185 eine eindeutige Nachrichtennummer ("MsgNr") retourniert wird.
Kommit-Aktionen werden beim "Kommit" von TID gestartet.

Bevor nun auf die Prozeß-Befehle (s. Block 43 in Fig.4) bzw. auf den entsprechenden Prozeßmanager (Fig.25 bzw. Fig.26 und 28 bis 31) näher eingegangen wird, soll noch unter Bezugnahme auf Fig.22 und 23 das Aufwecken eines Objekts (vgl. z.B. Block 121 oder 121' in Fig.13 bzw. 14) sowie die Behandlung transaktionaler Requests (s. Block 104 in Fig.12) näher erläutert werden.

### - Objekt-Aufwecken: (Fig.22; Block 121)

Hier wird einleitend im Block 186 R als der nächste Request des Objekts definiert, und es wird anschließend bei 187 abgefragt, ob R leer ist; falls nein, wird bei 188 abgefragt, ob R das Lesen eines Objekts betrifft; wenn ja, wird die Prozedur Objekt-Lesen bei Block 47 aufgerufen, und anschließend wird zum Schritt 186 zurückgekehrt. Wenn das Abfrageergebnis bei 188 negativ ist, wird bei 189 abgefragt, ob R ein alternatives Warten betrifft, und wenn ja, wird die entsprechende Prozedur 49 aufgerufen, wonach ebenfalls zum Schritt 186 zwecks Prüfung des nächsten Requests zurückgekehrt wird. Wenn R auch nicht ein alternatives Warten betrifft, wird gemäß Block 104 die Behandlung transaktionaler Requests durchgeführt (s. nachfolgende Erläuterung zu Fig.23), wonach wiederum zum Schritt 186 zurückgekehrt wird.
Ist R bei der Abfrage 187 als leer festgestellt worden (Ausgang "J"), so wird bei 190 abgefragt, ob das Objekt eine Prozeßidentifikationsnummer ist, und wenn nein, wird zum Ausgang der Prozedur 121 übergegangen; wenn das Abfrageergebnis jedoch ja ist, wird gemäß Block 190' getestet, ob der mit PID bezeichnete Prozeß am Terminieren ist; falls ja, wird der Prozeßmanager aufgerufen, um ein "Schwaches Prozeß-Ende" durchzuführen, s. Block 191, welcher nachstehend anhand der Fig.28 noch näher beschrieben werden wird. Ist das Ergebnis des Tests in Block 190' negativ, so wird zum Ausgang der Prozedur 121 übergegangen.

### - Behandlung transaktionaler Requests: (Fig.23, Block 104)

Hier erfolgt einleitend bei 192 eine Dereferenzierung des Objekts zu O, und bei 193 wird das Verhältnis O < > Objekt abgefragt, d.h. untersucht, ob O ungleich dem Objekt ist. Bei einem positiven Abfrageergebnis werden im Schritt 194 die Transaktionalen Requests vom gegenständlichen Objekt an O verschoben, und es wird gemäß Block 104' neuerlich die Prozedur 104 zur Behandlung von Transaktionalen Requests-hier von O - aufgerufen, wonach zum Ende der Prozedur übergegangen wird.
Ist das Abfrageergebnis bei 193 hingegen negativ, so wird im Schritt 195 R als der nächste abhängige Prozeß-Request von O definiert, und bei 196 wird abgefragt, ob R leer ist. Wenn nein, wird bei 197 abgefragt, ob der Prozeß terminiert hat, und wenn nein, wird der Strategiemanager hinsichtlich der Prozedur "Objekt soll gelesen werden", und zwar entsprechend der jeweiligen Prozeßidentifikationsnummer PID, aufgerufen (Block 58). Hat jedoch der Prozeß bereits terminiert (s. Abfrage 197), so wird im Schritt 198 der Request vom Objekt entfernt, und im Schritt 199 wird abgefragt, ob der Zustand des Requests "bereit" oder "zurückgenommen" ("PREPARED" oder "CANCELLED") ist. Wenn nein, wird im Schritt 200 das Transaktions-Kommit abgebrochen, es werden die Requests an den Objekten entfernt, und der Ausführungszustand wird als "FAILED" (fehlgeschlagen) definiert, wonach bei 201 eine Fehlermeldung abgegeben und zum Ausgang der Prozedur übergegangen wird. Wenn hingegen das Abfrageergebnis bei 199 positiv war, wird die Prozedur 98 "Transaktions-Kommit-Beenden" (und zwar hinsichtlich der Transaktion des gerade behandelten unabhängigen Prozeß-Requests) aufgerufen, wonach zum Schritt 195 zurückgekehrt wird, um den nächsten abhängigen Prozeß-Request zu behandeln.
Wenn sich bei der Abfrage 196 ergibt, daß R leer ist, d.h. daß keine Anfragen hinsichtlich abhängiger Prozesse mehr vorliegen, dann wird im Schritt 202 T als die älteste Transaktion aller Requests von O definiert, und es wird bei 203 abgefragt, ob der Zustand von O gesperrt ("LOCKED") ist und die sperrende Transaktion jünger als T ist oder aber nicht im Zustand "COMMITTING" vorliegt. Wenn nein, wird T im Schritt 204 nun als die sperrende Transaktion definiert, und es wird bei 205 der Strategiemanager aufgerufen, um die nachstehend anhand der Fig.36 zu erläuternde Prozedur "ist Objekt exklusiv gesperrt" durchzuführen. Wenn eine derartige exklusive Sperre noch nicht vorliegt, wird weiter der Strategiemanager aufgerufen (Schritt 206, s. auch Fig.35 und die nachfolgende Erläuterung), um eine "exklusive Objekt-Sperre" zu besorgen. Danach wird zum Ausgang der Prozedur 104 übergegangen.
Die Strategiemanager-Aufrufe 205, 206 folgen auch, wenn sich bei der Abfrage 203 ein positives Ergebnis ergibt, wobei dann zuvor gemäß Schritt 207 die Objektsperren aller Requests der sperrenden Transaktion zugunsten von T (also der ältesten Transaktion aller Requests von O) freigegeben werden, die Requests wieder an die Objekte gehängt werden, wonach gemäß 104" die Prozedur 104 betreffend Behandlung Transaktionaler Requests, und zwar nun hinsichtlich aller Requests der ehemals sperrenden Transaktionen, aufgerufen wird. Danach wird wie erwähnt bei 205 und eventuell auch 206 der Strategiemanager zur Erzielung einer exklusiven Objektsperre aufgerufen.
Ist bei der Prozedur 205 festgestellt worden, daß das Objekt bereits exklusiv gesperrt ist, so wird im Schritt 208 R als der nächste Transaktionale Objekt-Schreib-Request oder Transaktionale Objekt-Lese-Request von T an O definiert, und es wird der Request R von O entfernt. Danach wird bei 209 abgefragt, ob R leer ist, und wenn ja, wird zum Ausgang der Prozedur übergegangen; wenn R noch nicht leer ist, wird bei 210 abgefragt, ob R das Beschreiben eines Objekts betrifft, und wenn ja, wird bei 211 sodann abgefragt, ob das zu schreibende Objekt ein nur einmal beschreibbares Objekt ist; wenn nein, d.h. wenn das Objekt ein aktualisierbares Objekt ist, wird sodann im Schritt 212 der Zustand des Objekts auf "gesperrt" ("LOCKED") gesetzt, der gewünschte Wert wird vorübergehend in das Objekt geschrieben, und es wird die Zeitmarke erhöht; der Request ist damit erfüllt, und es wird zum Schritt 208 zurückgekehrt, um den nächsten Request zu behandeln.
Ist hingegen bei der Abfrage 211 das Ergebnis, daß das zu schreibende Objekt ein write-once-Objekt ist, so wird bei 213 abgefragt, ob der Zustand des Objekts "definiert" ("defined") ist, und wenn ja, kommt es zum Abbruch des Transaktions-Kommits gemäß Schritt 200 und zur Fehlermeldung gemäß Schritt 201. Wenn jedoch der Zustand des Objekts nicht "definiert" ist, d.h. das Abfrageergebnis bei 213 negativ ist, dann wird im Schritt 214 abgefragt, ob der Objektstatus "gesperrt" ("LOCKED") ist, d.h. ob das betroffene Objekt von einem anderen Schreib-Request her gesperrt ist. Wenn ja, erfolgt ebenfalls ein Abbruch des Transaktions-Kommits gemäß Schritt 200 sowie eine Fehlermeldung gemäß Schritt 201; wenn nein, erfolgt der bereits beschriebene Vorgang gemäß 212, bevor zum Schritt 208 zurückgekehrt wird.
Wenn sich bei der Abfrage 210, ob R ein Objekt-Beschreiben-Request ist, ein negatives Ergebnis ergibt, wird die Prozedur "Transaktionales Objekt-Lesen" gemäß Block 156 aufgerufen (s. Fig.19 und zugehörige Beschreibung), wonach bei 215 abgefragt wird, ob die Lese-Anfrage beantwortet werden konnte. Wenn nein, wird zum Schritt 208 zurückgekehrt, und wenn ja, wird der Zustand des Objekts auf "gesperrt" ("LOCKED") gestellt, der Request ist erfüllt, s. Block 216, und es wird ebenfalls zum Schritt 208 zurückgekehrt.

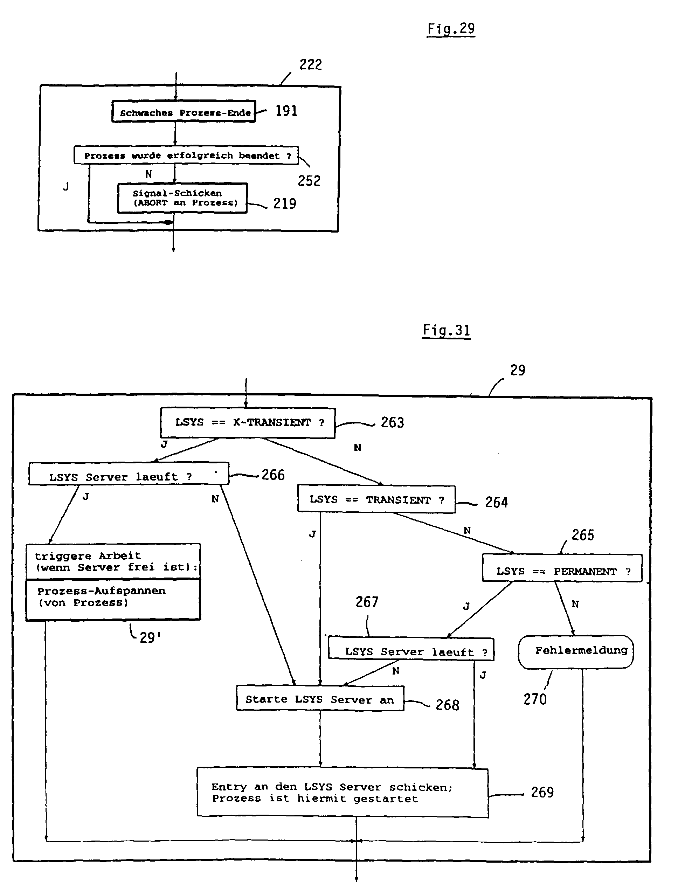

In Fig.24 ist der Prozeß-Befehl-Ablauf (s. Block 43 in Fig.4) näher veranschaulicht. Dabei wird als erstes bei 217 abgefragt, ob der Request einen unabhängigen Prozeß (indep_process) betrifft, und wenn ja, wird der bereits vorstehend im Zusammenhang mit Fig.13 angesprochene Prozeßmanager betreffend Start eines unabhängigen Prozesses, Block 127, aufgerufen. Betrifft der Request jedoch keinen unabhängigen Prozeß, so wird bei 218 abgefragt, ob der Request das Senden von Signalen betrifft, und wenn ja, wird bei 219 der Prozeßmanager betreffend Prozedur "Signal-Schicken" (s. nachfolgend zu erläuternde Fig.27) aufgerufen. Ansonsten wird bei 220 abgefragt, ob der Request ein "Schwaches-Prozeß-Ende" ("coke_try_exit") betrifft, d.h. das Beenden eines Prozesses mit Erlaubnis-Überprüfung; wenn ja, wird bei 191 der Prozeßmanager betreffend Durchführung dieses Prozesses "Schwaches Prozeß-Ende" aufgerufen; wenn nein, wird bei 221 abschließend abgefragt, ob ein unbedingtes Beenden eines Prozesses ("coke_exit") vom Request betroffen ist, und wenn ja, wird der Prozeßmanager zur Durchführung der Prozedur "Prozeß-Ende" aufgerufen. Die Prozeduren "Schwaches Prozeß-Ende" und "Prozeß-Ende" werden nachfolgend anhand der Fig.28 und 29 näher beschrieben werden.

Die vorstehend angesprochenen Prozesse sowie weiters die bereits früher erwähnten Prozesse "Prozeß-Kreieren" und "Prozeß-Aufspannen" werden nunmehr anhand der Fig.26 bis 31 erläutert.

### - Starten eines unabhängigen Prozesses INDEP-Prozeß-Start: indep_rocess(PID, LSYS, Site, Entry) (s.Fig.26)

Mit diesem Befehl wird ein unabhängiger (= autonomer) Prozeß gestartet, der eindeutig durch eine PID-Nummer (Prozeßidentifikationsnummer) bezeichnet wird. Diese PID-Nummer ist selbst ein Kommunikationsobjekt, dessen Wert den Ausführungszustand des Prozesses reflektiert. Der Prozeß wird auf dem Rechner an der Stelle "Site" (X, Y oder Z in Fig.2) auf dem lokalen Softwaresystem LSYS (18, 19 bzw. 20) gestartet, wobei zuvor - s. Schritt 223 in Fig.26 - überprüft wird, ob der aktuelle Prozeß ein Zugriffsrecht auf alle in "Entry" vorkommenden Objekte sowie auf die PID besitzt (sowie auch, ob diese Objekte und die PID hinsichtlich der verwendeten Strategie kompatibel sind, ob "Site" eine gültige Rechneradresse ist, und ob TID eine laufende (STARTED oder FAILED) Transaktion bezeichnet) ; falls dies nicht erfüllt ist, wird gemäß Schritt 224 eine Fehlermeldung erzeugt. Falls die PID bereits als solche in Verwendung ist, ergeht ebenfalls eine Fehlermeldung.
"Entry" spezifiziert die auszuführende Funktion, der als Argumente Kommunikationsobjekte mitgegeben werden können, die dieser neue Prozeß dann auch sehen darf.
Es wird gemäß Block 176 (s. auch nachstehend zu Fig.30) eine neue Prozeßstruktur generiert, falls der Prozeß auf dem lokalen Rechner (= "Site") laufen soll, und der Prozeß wird lokal angestartet; ansonst wird der Strategiemanager von PID aufgerufen, um dem Prozeß an den mit "Site" spezifizierten Rechner zu schicken. Die Zuverlässigkeit des Anstartens hängt von der jeweiligen Verteilungsstrategie ab.
Es wird ferner eine Hilfstransaktion generiert, die als die Transaktion dieses Prozesses in seiner Prozeßstruktur vermerkt wird.
Wenn ein unabhängiger Prozeß von einer zuverlässigen (Protokollflag "RELIABLE") Verteilungsstrategie ist, wird er nach einem Systemfehler wiederhergestellt, und falls er noch nicht terminiert hat, wird er dann auch automatisch wieder angestartet.
Unabhängige Prozesse werden vom Koordinations-Server solange gestartet, bis sie einen endgültigen Ausführungszustand erreicht haben.

### - Schicken von Signalen: signal (PID, Signal) (s. Fig.27)

Mit diesem Request wird ein spezifiziertes Signal (z.B. "ABORT", "COMMIT" oder "CANCEL" etc.), zu dem noch optional Flags spezifiziert werden können, die z.B. besagen, ob das Signal an Unterprozesse weitergereicht werden soll, an den Prozeß gesendet, der durch die PID-Nummer bezeichnet wird. Hierbei wird in den aufgerufenen Prozeduren zweckmäßig auch überprüft, ob PID ein Kommunikationsobjekt ist, das einen Prozeß bezeichnet, und ob es sich um ein gültiges Signal handelt (z.B. darf ein Benutzer an einen abhängigen Prozeß ( "dep_process") , der bereits "fertig" ("PREPARED") ist, nicht mehr ein Signal "Abbruch" ("ABORT") schicken).
Falls der durch die PID-Nummer bezeichnete Prozeß auf einem fremden Rechner läuft (s. Abfrage 225 in Fig.27), wird der Strategiemanager von PID aktiviert, um das Signal an den Agenten auf dem fremden Rechner weiterzuleiten (Block 226; Prozedur "Signal-Schicken"; s. nachfolgend zu Fig.38), der es dort an den entsprechenden Prozeß schicken wird. Die Zuverlässigkeit des Weiterleitens hängt von der Verteilungsstrategie ab ("RELIABLE" oder "UNRELIABLE") . Im übrigen werden gemäß Fig.27 bei 227, 228, 229 bzw. 230 die jeweiligen Signale auf ihren Gegenstand ("ABORT", "COMMIT", "CANCEL" etc.) abgefragt, und zutreffendenfalls wird das zugehörige "Prozeß-Ende" mit dem entsprechenden Exit-Wert ("ABORT" bzw. "COMMIT" bzw. "CANCEL"), Block 191, aufgerufen, das nachfolgend unter Bezugnahme auf Fig.28 erläutert wird.

### - Beenden eines Prozesses mit Erlaubnis-Überprüfung (Schwaches Prozeß-Ende) : coke_try_exit (ExitValue) (s.Fig.28)

Dieser Befehl dient zum Beenden eines aktuellen Prozesses, wobei der "Exit-Wert" ("ExitValue") analoge Werte wie Signal-Typen annehmen kann. Der erreichte Ausführungszustand wird in die PID geschrieben. Ist der gewünschte Zustand nicht erreichbar, so retourniert "coke_try_exit" eine Fehlermeldung.

Es wird also - nach einem "Atomaren Schritt START" 231 - einleitend überprüft, ob der "Exit-Wert" erlaubt ist (Abfrage 232) - das hängt davon ab, ob "coke_try_exit" vom Benutzer oder vom System aufgerufen wurde. Letzteres ist z.B. der Fall, wenn intern ein Signal "ABORT" oder ein Signal "COMMIT" an einen Prozeß geschickt wird.
Erlaubt ist: "Exit-Wert" - von wem - in Prozeß welchen Typs (bei dem der Ausführungszustand entweder noch nicht gesetzt ist oder den explizit angegebenen Wert hat) :
z.B. "PREPARE" von Benützer in einem unabhängigen oder abhängigen Prozeß; oder:
"COMMIT" von Benützer an INDEP-Prozeß (nicht gesetzt oder SUCCEEDED) oder von SYSTEM an DEP-Prozeß (PREPARED); oder:
"ABORT" von Benützer an INDEP-Prozeß (nicht gesetzt oder SUCCEEDED) oder an DEP-Prozeß oder von SYSTEM an DEP-Prozeß (nicht gesetzt oder PREPARED); oder:
"CANCEL" von Benützer an DEP-Prozeß (nicht gesetzt oder PREPARED).
Danach wird am Prozeß vermerkt, daß er am Terminieren ist (Block 233).
Wenn der Exit-Wert "ABORT" ist (s. Abfrage 234 in Fig.28), wird nach Beschreiben der PID (Block 235) die atomare "coke_try_exit"-Prozedur wie folgt beendet (im folgenden Prozedur A genannt) : alle schlafenden Anfragen an PID sowie ein mögliches Prozeßende eines Vaterprozesses werden aufgeweckt (Block 121): nicht mehr benötigte Transaktionsstrukturen von fehlgeschlagenen Top-Level-Transaktionen dieses Prozesses werden nach Überprüfen, ob ein endgültiger Prozeßzustand vorliegt (Schritt 236), entfernt (Block 237); die Referenzzähler aller Objekte, auf die der terminierende Prozeß zugreifen durfte, werden zwecks Garbage-Collection, Block 238 (s. auch Fig.40) (abhängig vom Protokoll der PID des Prozesses), dekrementiert; die Prozeßstruktur wird entfernt (Schritt 239), wonach der Atomare-Schritt ENDE
(Recoverymanager) folgt (Block 240). Wenn es sich um einen unabhängigen Prozeß ("indep_process") handelt (s. Abfrage 241, Ausgang J), wird nach einer Zustandsabfrage bei 242, wenn der Zustand der Hilfstransaktion "gestartet" ("STARTED") ist, das schwache Transaktions-Kommit "trans_try_commit" von seiner Hilfstransaktion aufgerufen (Block 73).
Falls der Zustand der Hilfstransaktion "COMMITTED" ist (Abfrage 243), wird (falls der Exit-Wert "PREPARE" ist) der Ausführungszustand des Prozesses im Block 235 auf "SUCCEEDED" gesetzt (hier kann gegebenenfalls auch "PREPARED" verwendet werden), und falls der Exit-Wert "COMMIT" ist, wird der Ausführungszustand des Prozesses auf "COMMITTED" gesetzt, und die vorstehend erläuterte Prozedur A wird angewendet. Falls bei der Abfrage 243 der Zustand nicht "COMMITTED" ist, erfolgt eine Fehlermeldung (Schritt 244).
Wenn es sich um einen abhängigen Prozeß ("dep_process") handelt (negatives Ergebnis bei der Abfrage 241), wird:
- falls der "Exit-Wert" "PREPARE" ist (Abfrage 245), der Ausführungszustand seiner Hilfstransaktion berechnet (dieser ist noch nicht bestimmbar, wenn eine Untertransaktion oder ein abhängiger Prozeß der Hilfstransaktion noch nicht terminiert hat; dies geht in Ordnung, wenn alle Untertransaktionen und jeder abhängige Prozeß gutgegangen sind, sonst nicht) ; mit dem schwachen Transaktions-Kommit wird gewartet (s. Abfrage 246), bis sich der Zustand bestimmen läßt; ist dieser nicht in Ordnung, wird eine Fehlermeldung retourniert; ansonst werden alle transaktionalen Anfragen der Hilfstransaktion des Prozesses an die Transaktion des abhängigen Prozesses transferiert (Block 248); ist diese Transaktion nicht lokal (s. Abfrage 247), so muß der Transfer vom Strategiemanager (entsprechend der PID des Prozesses) durchgeführt werden (s. Block 249; vgl. auch Fig.39); erst danach wird der Ausgangszustand des Prozesses auf "PREPARED" gesetzt (Block 235), und es folgt die Prozedur A.
   Haben alle Unterprozesse der Hilfstransaktion terminiert (s. Abfrage 250), nachdem ein Kommit der Hilfstransaktion als nicht möglich festgestellt wurde (Abfrage 246), so erfolgt eine Fehlermeldung (Schritt 251); ansonsten folgt die Prozedur A.
- falls der "Exit-Wert" nicht "PREPARE" ist (s. Abfrage 245), muß er "ABORT" sein, d.h. der Ausgangszustand des Prozesses wird auf "ABORTED" (Block 235) gesetzt und die Prozedur A angewendet.

### - Beenden eines Prozesses: coke_exit (ExitValue) (s. Fig.29)

Der Ablauf ist hier wie beim "Schwachen Prozeß-Ende" (s. oben bzw. Block 191 in Fig.28), nur daß im Fehlerfall der Prozeß (s. Abfrage 252) automatisch abgebrochen wird, d.h. es wird automatisch das Signal "ABORT" an den aktuellen Prozeß geschickt (Block 219 "Signal-Schicken", "Abort" an Prozeß).

### - Prozeß-Kreieren: create_process (s. Fig.30)

Nach einem einleitenden Aufruf des Recoverymanagers betreffend "Atomarer Schritt START" bei 253 wird gemäß Schritt 254 getestet, ob für den Prozeß mit der angegebenen Nummer bereits eine Prozeß-Struktur existiert; wenn ja, wird sofort zum Prozeß-Ende übergegangen; wenn nicht, wird der Strategiemanager aufgerufen, um festzustellen, ob das Objekt exklusiv gesperrt ist, s. Block 205 sowie die nachfolgend zu erläuternde Fig.36. Falls nein, wird der Strategiemanager aufgerufen, um gemäß Block 206 (s. auch Fig.35) eine exklusive Objekt-Sperre für den betreffenden Prozeß zu besorgen, und es wird zum Schritt 205 in Fig.30 zurückgekehrt, wobei dann, da nun das Objekt exklusiv gesperrt ist, in der Prozedur weitergegangen und bei 255 abgefragt werden kann, ob die angegebene Prozeßidentifikationsnummer PID bereits zur Identifizierung eines Prozesses in Verwendung ist. Sollte dies zutreffen, so wird bei 256 eine Fehlermeldung abgegeben, und das Ende des Prozesses ist erreicht. Wenn die PID-Nummer noch nicht verwendet wird, wird nun im Schritt 257 am PID-Objekt vermerkt, daß es eine PID darstellt, d.h. es dient ab nun zur Identifizierung dieses Prozesses. Danach wird abhängig davon, ob der Prozeß am lokalen Rechner durchgeführt werden soll (Abfrage 258), dann, wenn der lokale Rechner zuständig ist, die gewünschte neue Prozeß-Struktur angelegt, Block 259, und der Transaktionsmanager wird zum Start einer Top-Level-Transaktion gemäß Block 69 (s. auch Fig.10) aufgerufen, wonach die neue Transaktion im Schritt 260 als Hilfstransaktion des betroffenen Prozesses eingetragen wird; danach wird "Prozeß-Aufspannen" 29 (s. auch Fig.31) aufgerufen; abschließend wird der Recoverymanager zur Durchführung des "Atomaren Schritts-ENDE" aufgerufen, s. Block 261 in Fig.30. Wenn sich bei der Abfrage 258 ergibt, daß der Prozeß nicht am lokalen Rechner durchzuführen ist, wird der Strategiemanager zur Durchführung der Prozedur "Prozeß-Schicken" gemäß Block 262 aufgerufen, wonach ebenfalls der Ende-Schritt 261 folgt. Die Prozedur 262 "Prozeß-Schicken" wird nachfolgend anhand der Fig.37 näher erläutert.

### - Prozeß-Aufspannen: (s. Fig.31)

Beim Prozeß-Aufspannen wird abhängig davon, ob das lokale Softwaresystem als vorübergehend oder als permanent auftritt (Abfragen 263 - "Softwaresystem ist X-transient ?", 264 - "Softwaresystem ist transient ?" und 265 - "Softwaresystem ist permanent ?") sowie abhängig davon, ob der lokale Server läuft (Abfragen 266, 267) entweder der lokale Server im Schritt 268 angestartet, um gemäß Schritt 269 die Entry-Angaben an den Server zu schicken und den Prozeß zu starten, oder aber der letztere Vorgang 269 wird - im Fall eines permanenten lokalen Softwaresystems, wenn der Server bereits läuft, unmittelbar durchgeführt. Im Fall eines X-transienten lokalen Softwaresystems (Abfrage 263 ) wird im Falle, daß der Server bereits läuft (s. Abfrage 266), die Triggerung der gewünschten Arbeit bewirkt, wenn der Server frei ist, und zu diesem Zweck wird in einer Schleife erneut der Vorgang "Prozeß-Aufspannen" gemäß Block 29' aufgerufen. Im Falle daß das lokale Softwaresystem weder X-transient noch transient noch permanent ist, wird gemäß Schritt 270 eine Fehlermeldung abgegeben.

Abschließend soll noch anhand der Fig.32 bis 40 der Strategiemanager erläutert werden, der für die Festlegung der Verteilungsstrategie, auch Kommunikationsprotokoll genannt, verantwortlich ist.

### - Befehl ausführen: (s. Fig.32)

Bei der Ausführung des Befehls können Nachrichten an andere Koordinations-Server geschickt werden, was von der jeweiligen Verteilungsstrategie kontrolliert wird. Im Ablauf gemäß Fig.32 wird nach dem "Atomaren Schritt START" des Recoverymanagers bei 271 der Strategiemanager der betroffenen Strategie zur Ausführung des Befehl aufgerufen (Block 272), und es wird sodann im Schritt 273 0 als das nächste Objekt definiert, das in der Bearbeitung vorkam, und im Schritt 274 abgefragt, ob O leer ist. Solange O nicht leer ist, wird für den Fall, daß eine exklusive Sperre für das Objekt gesetzt bzw. ein neuer Objekt-Wert erhalten worden ist (Abfrage 275), der Transaktionsmanager zwecks Aufwecken des Objekts, Block 121 (s. auch Fig.22), aufgerufen. Je nach Verteilungsstrategie (SM) kann nach Block 274 noch abgefragt werden, ob es eine Verlustnachricht für das Objekt gab (wegen eines fatalen Fehlers) und dann Transaktions-Abort im Transaktionsmanager aufgerufen werden (ist in Fig.32 zwecks Vereinfachung nicht dargestellt). Wenn gemäß Abfrage 274 kein Objekt mehr vorhanden ist, wird vom Recoverymanager der "Atomare Schritt ENDE" bei Block 276 durchgeführt.

### - Behandle Nachricht von anderem Koordinations-Server: (CoKe) (s. Fig.33)

Hier wird einleitend im Schritt 277 die Strategie der erhaltenen Nachricht festgehalten, und es wird sodann gemäß Block 278 die Prozedur "Befehl-Ausführen" (gemäß Fig.32) hinsichtlich der Behandlung der Nachricht, die von einem CoKe kommt, aufgerufen.

### - Objekt soll gelesen werden: (s. Fig.34)

Hier wird einleitend die Strategie des zu lesenden Objekts im Schritt 279 festgehalten, und dann wird wiederum im Block 278 die Prozedur "Befehl-Ausführen", hier hinsichtlich "Objekt soll gelesen werden", aufgerufen.

### - Exklusive Objekt-Sperre besorgen: (s. Fig.35)

Nachdem hier einleitend die Strategie des Objekts, für das die exklusive Sperre besorgt werden soll, festgehalten wurde (Schritt 280), wird im Block 278 die Prozedur "Befehl-Ausführen": Exklusive Objekt-Sperre besorgen aufgerufen.

### - Ist Objekt exklusiv gesperrt: (s. Fig.36)

Nach Festhalten der Strategie des Objekts, für das getestet werden soll, ob eine exklusive Sperre vorhanden ist, gemäß Schritt 281, folgt wieder die Prozedur "Befehl-Ausführen" (Block 278), nun hinsichtlich der Abfrage, ob das Objekt exklusiv gesperrt ist.

### - Prozeß-Schicken: (s. Fig.37)

Einleitend wird hier im Schritt 282 die Strategie des PID-Objekts des zu schickenden Prozesses festgehalten, wonach im Schritt "Befehl-Ausführen" 278 der Prozeß geschickt wird.

### - Signal-Schicken: (s. Fig.38)

Hier wird die Strategie des PID-Objekts des Prozesses festgehalten, an den das Signal zu schicken ist (Schritt 283), bevor gemäß Block 278 das Signal geschickt wird.

### - Transferieren transaktionaler Requests: (s. Fig.39)

Bevor gemäß Schritt 278 der Befehl ausgeführt und transaktionale Requests transferiert werden, wird die Strategie der PID der Hilfstransaktion festgehalten, deren Requests transferiert werden sollen, s. Schritt 284 in Fig.39.

### - Aufräumen: (Garbage Collection) (s. Fig.40, Prozedur 238 in Fig.28)

Hier wird die Strategie des aufzuräumenden Objekts festgehalten (Schritt 285), bevor die Aufräumarbeit (Garbage Collection) unter Ausführung des Befehls, Block 278, erfolgt.

Was die verwendbaren Strategien betrifft, so wird bevorzugt eine Basis-Strategie festgelegt und in der Regel verwendet. Basis-Strategien können z.B. PR_DEEP und AR_FLAT sein; dabei bedeutet PR_DEEP ("passive replication with deep object tree") eine passive Replikation bei einem in die Tiefe gehenden Objektbaum; AR_FLAT ("active replication with flat object tree") bedeutet eine aktive Replikation bei einem flachen Objektbaum und bietet noch mehr Zuverlässigkeit und Verfügbarkeit als PR_DEEP. Als Strategie-Flags (Protokollflags) können unter anderem die Flags RELIABLE/UNRELIABLE; MOBILE/NON_MOBILE; GARBAGE_COLLECTION/NO_GARBAGE_COLLECTION; SECURITY/NO_SECURITY; TOPOLOGY_GRAPH/NO_TOPOLOGY_GRAPH eingesetzt werden. Hierbei bedeuten:
RELIABLE/UNRELIABLE: ob kritische Zustandsänderungen im Datenund Logfile gespeichert werden sollen, um Recovery zu ermöglichen;
MOBILE/NON_MOBILE: ob ein Rechner im laufenden Betrieb intentional vom Netzwerk abgesteckt werden kann;
GARBAGE_COLLECTION/NO_GARBAGE_COLLECTION: ob das Objekt automatisch aufgeräumt werden soll, wenn es nicht mehr benötigt wird;
SECURITY/NO_SECURITY: ob überprüft werden soll, ob ein Prozeß autorisiert ist, auf ein Objekt zuzugreifen;
TOPOLOGY_GRAPH/NO_TOPOLOGY_GRAPH: ob ein Topologie-Graph als Hilfststruktur verwaltet werden soll, der Information speichert, auf welchen Rechner sich Kopien des Objektes befinden, und damit das Replikationsverhalten für sehr große Objekte optimiert.

Die Anwendung des vorliegenden Systems soll nun nachfolgend zusammen mit dabei erzielbaren Vorteilen anhand von zwei Anwendungsbeispielen noch näher erläutert werden.

### Beispiel 1: Produzent-Konsument

Ein klassisches Beispiel für die Verwaltung gemeinsamer Ressourcen ist das "Produzent-Konsument" Problem, bei dem eine beliebige Anzahl von verteilten, parallel laufenden Prozessen existiert, die entweder Daten produzieren oder Daten verarbeiten (= konsumieren). Alle produzierten Daten sollen gleichberechtigt von jedem Konsumenten bezogen werden können (d.h. ohne Bevorzugung), und sobald ein Datum konsumiert wurde, darf es kein weiteres Mal konsumiert werden.

Eine auf "write-once"-Kommunikationsobjekten basierende Lösung mit Hilfe des beschriebenen Koordinations-Systems sieht als gemeinsame Datenorganisationsstruktur eine unendlich groß werdende Liste vor, in die der Reihe nach die produzierten Daten geschrieben werden (eine solche Liste wird "Stream" genannt). Der Anfang der Liste wird durch ein Kommunikationsobjekt, "Wurzel" genannt, dargestellt, in das der erste Produzent in einer Transaktion eine Listenzelle schreibt, die aus zwei Elementen besteht, nämlich einem Kopf und einem Rumpf. In den Kopf schreibt der Produzent in derselben Transaktion sein Datum sowie ein neu angelegtes Kommunikationsobjekt, genannt "Flag", dessen Bedeutung weiter unten erklärt wird. In den Rumpf schreibt der Produzent in derselben Transaktion ein weiteres neu angelegtes Kommunikationsobjekt, genannt "ListenRumpf.

"ListenRumpf" stellt den Rest der Liste dar, d.h. in diesen "ListenRumpf" wird der nächste Produzent wiederum in einer Transaktion eine Listenzelle hineinschreiben, die sein Datum, sowie ein neues Flag und einen neuen "ListenRumpf" enthält u.s.w., vgl. auch die nachfolgende Tabelle 1:

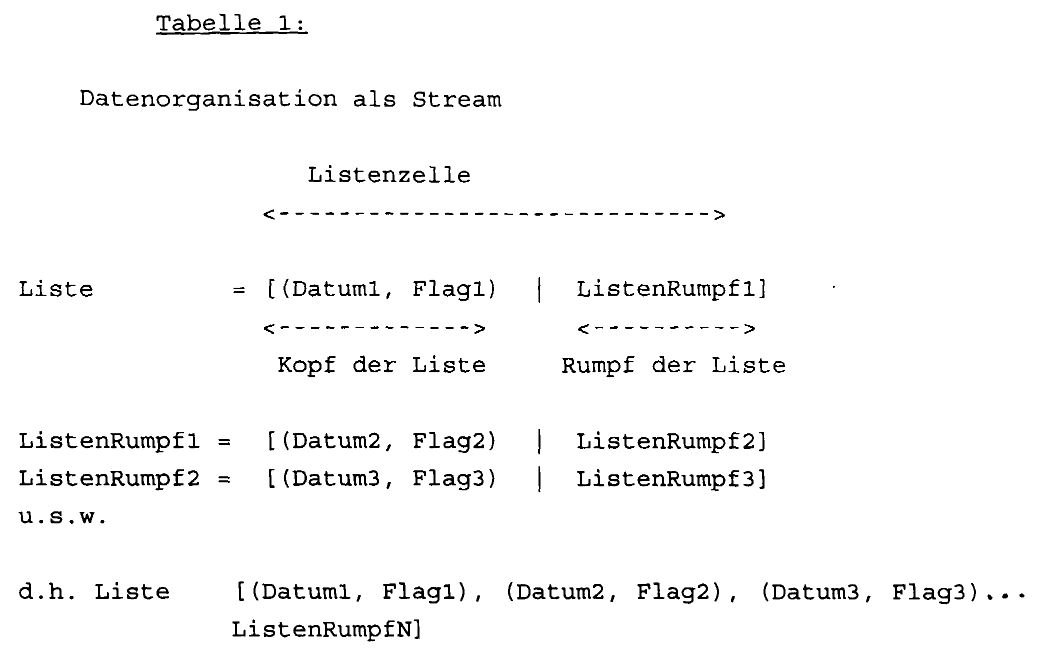

Die Synchronisation bei gleichzeitigem Schreibzugriff mehrerer Produzenten PR1,..., PRk auf denselben ListenRumpf funktioniert folgendermaßen: da jeder Produzent PRi (i = 1, ..., k) in einer Transaktion T1, ..., Tk auf das Kommunikationsobjekt, das den ListenRumpf darstellt, zu schreiben versucht, kann nur eine dieser Transaktionen gutgehen ("kommitten"). Wenn angenommen die j-te Transaktion Tj erfolgreich war, d.h. der Produzent PRj sein Datum erfolgreich in den Stream geschrieben hat, dann müssen alle anderen Produzenten PRi (i = 1, ..., k und i <> j) die Schreibanforderung auf den ListenRumpf in ihrer jeweiligen Transaktion Tj zurücknehmen ("cancel"-Befehl), den neuen Inhalt des ListenRumpfes auslesen, diesem den neuen ListenRumpf entnehmen und nun versuchen, die gewünschte Listenzelle mit dem produzierten Datum in den neuen ListenRumpf zu schreiben (als neu angemeldete Schreiboperation in der Transaktion Tj). Unter der Annahme, daß nicht immer zwei Produzenten existieren, die gleichzeitig auf denselben ListenRumpf zu schreiben versuchen, ist garantiert, daß jeder Produzent seine Daten im gemeinsamen Stream zur Verfügung stellen kann.

Um ein Datum zu konsumieren, liest der jeweilige Konsument Ki den Stream soweit durch, bis er einen Eintrag findet, in dem das "Flag" noch undefiniert ist, was bedeutet, daß noch kein Konsument dieses Datum verarbeitet hat. Der Konsument Ki startet eine Transaktion und versucht in "Flag" den Wert "verarbeitet" hineinzuschreiben. Geht das Kommit der Transaktion gut, so kann der Konsument Ki nun das Datum verarbeiten. Geht das Transaktions-Kommit nicht gut, bedeutet dies, daß gerade ein anderer Konsument dieses Datum konsumiert hat, und der Konsument Ki muß die Schreiboperation auf "Flag" zurücknehmen, die nächste Listenzelle aus dem aktuellen ListenRumpf lesen und - falls dort das Kommunikationsobjekt "Flag" noch undefiniert ist - nun neuerlich versuchen, in der Transaktion "Flag" auf "verarbeitet" zu setzen. Damit werden gleichzeitige Konsumentenzugriffe auf dasselbe Datum synchronisiert, und es ist garantiert, daß jedes Datum von maximal einem Konsumenten verarbeitet wird.

Jeder Produzenten- und Konsumentenprozeß wird als unabhängiger Prozeß angestartet, der als Argument das Wurzel-Kommunikationsobjekt der Liste (Anfang der Liste) mitbekommt. Damit hat jeder dieser Prozesse Zugriff auf alle produzierten/konsumierten Daten.

Die Fehlertoleranz kann beim Anlegen aller verwendeten Kommunikationsobjekte gesteuert werden: Es sei angenommen, daß für diese Kommunikationsobjekte eine Verteilungsstrategie (siehe Tabellen 2, 3 und 4, Strategie PRX) gewählt wurde, für das die Option "RELIABLE" gesetzt ist. Dann ist das beschriebene Produzenten-Konsumenten-System sowohl gegen Systemfehler als auch gegen Netzwerkfehler resistent. Beim Absturz eines Rechners wird der lokale Koordinations-Server wieder angestartet, dieser stellt alle Kommunikationsobjekte sowie alle Produzenten- und Konsumentenprozesse wieder her und startet letztere mit dem ursprünglichen Wurzel-Kommunikationsobjekt als Parameter wieder an. Damit kann jeder dieser Prozesse wieder Zugang zu allen produzierten Daten im Stream erlangen und seine Arbeit wieder aufnehmen. Ein Konsument liest nun den Stream bis zum ersten Datum, dessen zugeordnetes Flag noch undefiniert ist; ein Produzent versucht, vom Wurzel-Kommunikationsobjekt ausgehend, beim ersten ListenRumpf, beim zweiten ListenRumpf, u.s.w. in den Stream zu schreiben; dabei wird es bei jedem schon beschriebenen Kommunikationsobjekt zu einem Transaktions-Kommit-Fehler kommen, der Produzent nimmt daher die Schreiboperation zurück, überliest das beschriebene Kommunikationsobjekt und probiert beim nächsten ListenRumpf weiter, bis er am Ende der Liste angelangt ist und dort sein Datum abstellen kann. Eine sinngemäße Optimierung kann noch für diesen "Recovery"-Fall angebracht werden, in der die Logik des Produzenten so erweitert wird, daß er immer testet (mit Hilfe von blockierendem Lesen), ob ein ListenRumpf bereits definiert ist, bevor er seine Schreiboperation darauf ansetzt, und daß er, falls der ListenRumpf schon definiert ist, diesen sofort überliest. Netzwerkfehler werden sowohl bei "RELIABLE"-als auch bei "UNRELIABLE"-Strategien maskiert, wobei letztere aber nur solange dafür garantieren können, solange keine Systemfehler (Rechnerausfälle) auftreten. Dafür ist üblicherweise bei "UNRELIABLE"-Strategien mit einer besseren Performance zu rechnen; d.h. der Benutzer kann je nach Anwendungsbedürfnis die Fehlertoleranz-Performance am Kommunikationsobjekt einstellen: das die Produzenten bzw. Konsumenten darstellende Programmsystem bleibt immer identisch. Weitere Abstimm-Möglichkeiten bestehen z.B. hinsichtlich der Verfügbarkeit und des Replikationsverhaltens (d.h. auf welchem Rechner Kommunikationsobjekte tatsächlich Plattenplatz beanspruchen).

In der nachfolgenden Tabelle 2 ist die Logik des Produzenten, dem das Kommunikationsobjekt WURZEL übergeben wurde, in prozeduraler Pseudonotation veranschaulicht, wobei nur hier beispielshalber (in den nachfolgenden Tabellen nicht) auch die vorstehend angegebenen Namen für die einzelnen Funktionen zusätzlich angeführt sind.

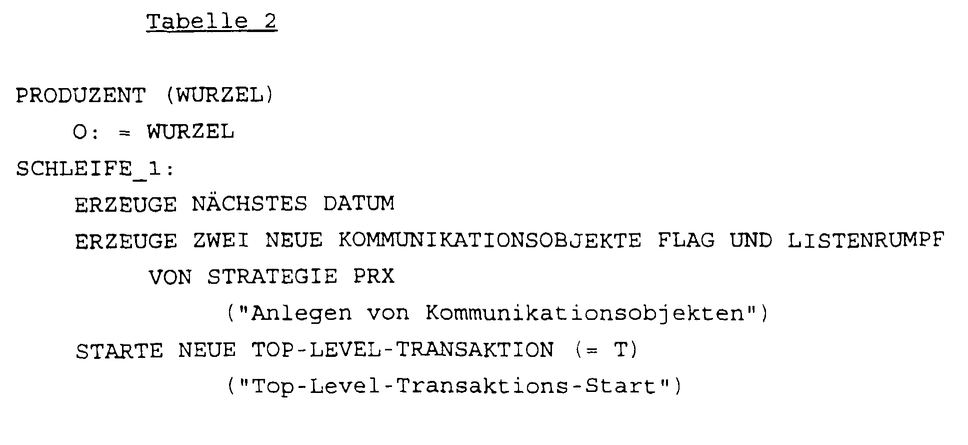

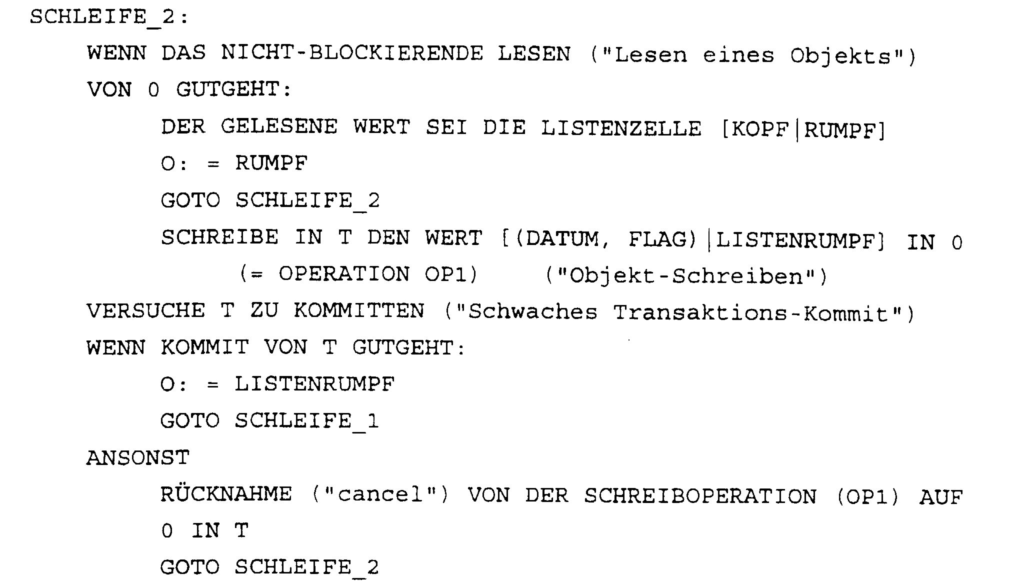

In Tabelle 3 ist die Logik des Konsumenten, dem das Kommunikationsobjekt WURZEL übergeben wurde, in prozeduraler Pseudonotation veranschaulicht:

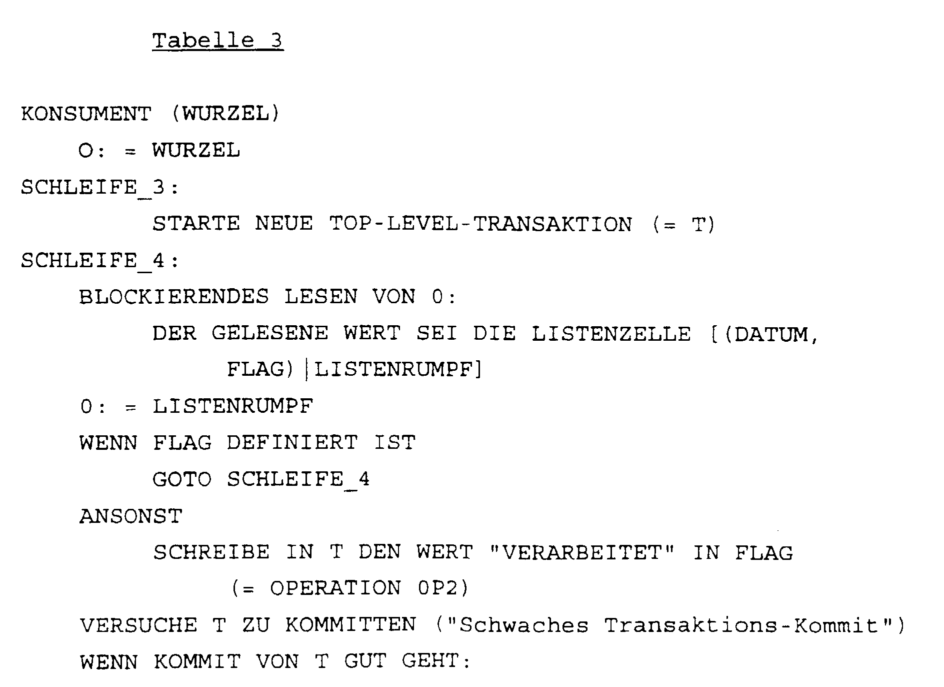

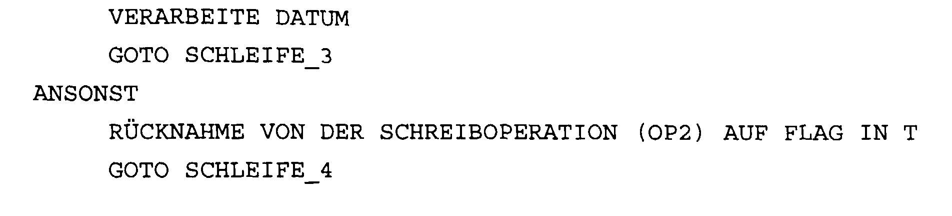

Die nachfolgende Tabelle 4 zeigt das Anstarten von N Produzentenprozessen und M Konsumentenprozessen auf den Rechnern R1...RN bzw. R1...RM:

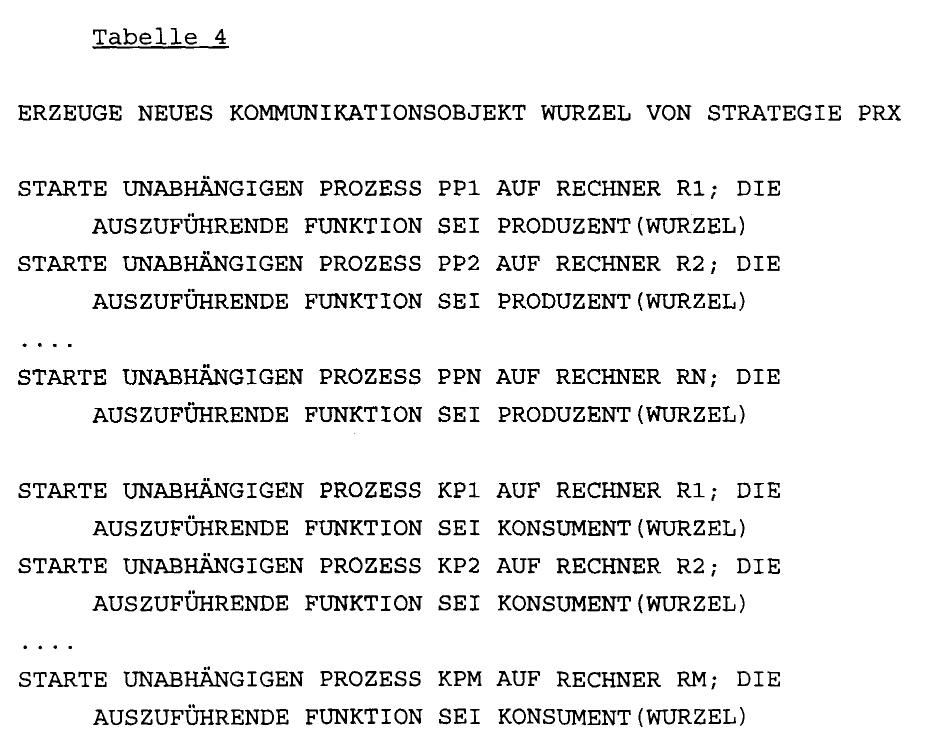

Dieses Beispiel demonstriert auch die Möglichkeit, unendlich lang laufende Prozesse zu spezifizieren: sowohl die Produzentenals auch die Konsumentenprozesse laufen unendlich und überleben sowohl System- als auch Netzwerkfehler, sofern eine "RELIABLE"-Verteilungsstrategie gewählt wurde.

Das Hinzunehmen neuer Produzenten und Konsumenten (auf verteilten Rechnern) erfolgt dynamisch ("dynamic scale-up") durch Anstarten eines Prozesses auf dem entsprechenden Rechner, dem das Wurzel-Kommunikationsobjekt als Parameter übergeben wird.

Eine Autorisierung ist abhängig von der gewählten Verteilungsstrategie gegeben, indem nur ein dezidiert als Konsument resp. als Produzent angestarteter Prozeß auf die Daten des Streams zugreifen darf. Wenn angenommen in der verteilten Umgebung noch weitere parallel laufende Prozesse existieren, dann darf keiner dieser Prozesse auf die Stream-Daten zugreifen, selbst wenn er zufällig die Objektidentifikationsnummer eines im Stream enthaltenen Kommunikationsobjekts "errät", wobei davon ausgegangen wird, daß dieses Kommunikationsobjekt weder in der ihm übergebenen Parameterliste aufscheint, noch als Unter-Kommunikationsobjekt in ein für diesen Prozeß zugängliches Kommunikationsobjekt geschrieben wurde, noch von diesem Prozeß angelegt wurde.

Bekannte Werkzeuge für verteiltes Programmieren erlaubten eine dermaßen einfache und kurze Spezifikation dieses klassischen Problems nicht, bei der der Programmierer völlig von Hardware- und Netzwerkaspekten befreit wird und trotzdem die Möglichkeit hat, die Performance etc. des Programms völlig seinen Anwendungsbedürfnissen anzupassen.

Das Produzenten-Konsumenten-Problem findet sich als Grundschema in einer breiten Klasse von verteilten Anwendungsproblemen wieder, wie zum Beispiel im verteilten Banking, wo die gemeinsamen Tresorreserven verteilter Bankschalter als Stream verwaltet werden, oder die Verwaltung von Workflow Daten.

### Beispiel 2: Reisebuchung

Es soll eine Reise arrangiert werden, zu der folgende Buchungen benötigt werden: ein Flug von Wien nach Paris, ein Hotelzimmer in Paris und ein Auto in Paris. Der Flug kann bei einer von drei Fluglinien A, B oder C gebucht werden. Das Hotelzimmer kann entweder im Hotel H oder im Hotel I gebucht werden. Das Auto kann bei einem Autoverleih V oder W gemietet werden. Es wird angenommen, daß der Kunde keine Buchungspräferenzen vorgibt. Weiters gilt, daß eine Flugbuchung storniert werden kann. Es ist dann "STORNO der Buchung" als Kompensations-aktion in der entsprechenden Flugliniendatenbank aufzurufen. Daher braucht man nicht zu fordern, daß das lokale Datenbanksystem der Fluglinie ein 2-Phasen-Kommit bietet, d.h. die Flugbuchungstransaktion kann dort ehestmöglich abgeschlossen werden, damit die lokale Flugliniendatenbank nicht zu lange von der globalen Reisebuchungstransaktion blockiert wird.

Hotelbuchungs- und Autovermietungstransaktionen sollen nicht kompensierbar sein, d.h. hier muß gefordert werden, daß die jeweiligen Datenbanken ein 2-Phasen-Kommit vorsehen und in der Lage sind, die Sperren auf die betroffenen Daten bis zum Kommit der globalen Reisebuchungstransaktion zu halten.

Es gibt im vorliegenden Koordinations-System mehrere Möglichkeiten, dieses Problem zu lösen, die einen unterschiedlichen Grad an Parallelität garantieren. Die im folgenden gezeigte Lösung bietet eine maximale Parallelität.

Die gesamte Reisebuchung ist als Transaktion T dargestellt. Alle Flugbuchungen werden parallel als unabhängige Prozesse (die selbständig kommitten) angestartet, die die Hilfsfunktion K_BUCHEN ausführen. K_BUCHEN steht für "kompensierbares Buchen". Zu beachten ist, daß unabhängige Prozesse implizit eine neue Top-Level-Transaktion starten, die als "Hilfstransaktion des unabhängigen Prozesses" bezeichnet wird und abhängig vom spezifizierten Exit-Wert des Prozesses automatisch entweder abgebrochen oder kommitted wird. Die Funktion K_BUCHEN startet die Transaktion "Buchen" in der Datenbank der entsprechenden Institution. Wenn die Buchung im Datenbanksystem DBS durchgeführt (und sofort kommitted) wurde, meldet K_BUCHEN die Aktion "STORNO der Buchung" als Kompensationsaktion in der Transaktion des unabhängigen Prozesses an (d.h. wenn dieser Prozeß zurückgenommen ("cancel") oder abgebrochen ("abort") wird, nachdem er schon erfolgreich terminiert hatte, wird automatisch diese Aktion durchgeführt) und terminiert den Prozeß mit dem Exit-Wert "PREPARE". Dies bedeutet, daß der Prozeß noch auf eines der Signale "ABORT", "CANCEL" oder "COMMIT" wartet. Das Verhalten des Prozesses im Fall der ersten beiden Signale ist wie schon erwähnt das Abbrechen seiner Transaktion, die die Ausführung der Kompensationsaktion "STORNO von Buchung im DBS" triggert. Ein Signal "COMMIT" schließt die Arbeit des Prozesses ab, so daß dieser ab nun keine Signale mehr akzeptiert; die Buchung ist dann endgültig abgeschlossen.

Die Hotel- und Autobuchungen werden ebenfalls parallel, aber als abhängige Prozesse angestartet, die die Funktion NK_BUCHEN ("nicht kompensierbares Buchen") ausführen. Diese Funktion startet die Transaktion "Buchen" in der Datenbank der entsprechenden Institution. Wenn die Buchung im Datenbanksystem DBS erfolgreich ist, meldet das DBS "DB_READY" zurück, d.h. das DBS wartet nun solange, bis ihm ein "DB_COMMIT" oder ein "DB_ABORT" geschickt wird. Erst nach einem "DB_COMMIT" werden die Änderungen im DBS sichtbar. Wenn das DBS ein "DB_READY" retourniert, meldet NK_BUCHEN "DB_COMMIT" im DBS als Kommitaktion im aktuellen Prozeß an, d.h. diese Kommit-Aktion bezieht sich auf die Transaktion des aktuellen Prozesses, die im Fall eines abhängigen Prozesses jene Transaktion ist, von der der Prozeß aufgerufen wurde, im vorliegenden Beispiel daher die Transaktion T. Diese Kommit-Aktion wird daher genau dann angestartet, wenn die Transaktion gutgeht.

Nachdem alle Buchungen als parallel laufende Prozesse angestartet worden sind, synchronisiert die Transaktion T diese Prozesse. Dazu werden zwei Hilfsfunktionen WARTE_AUF_UNABHÄNGIGEN_PROZESS und WARTE_AUF_ABHÄNGIGEN_PROZESS verwendet. Beide Funktionen verwenden das blockierende "Alternative Warten" (ALT_WAIT)-Konstrukt, um auf alle übergebenen Prozeßidentifizierer (PIDs) zu warten, die ja Kommunikationsobjekte sind. Sobald ein Prozeß terminiert, setzt er automatisch seine PID auf den Ausgangszustand, der über den Exit-Wert des Prozesses spezifiziert wurde. Wenn also der gewünschte Exit-Wert "PREPARE" und der Prozeß ein unabhängiger (oder aber abhängiger) Prozeß ist, dann wird die PID auf "SUCCEEDED" (oder aber "PREPARED") gesetzt, falls die Hilfstransaktion des unabhängigen Prozesses erfolgreich terminieren konnte (bzw. falls die Hilfstransaktion des abhängigen Prozesses noch Chancen hat zu kommitten). Der Wert der PID wird nun getestet, wenn das ALT_WAIT aktiv wird.

War der beendete Prozeß erfolgreich, dann schickt die Hilfsfunktion WARTE_AUF_UNABHÄNGIGEN_PROZESS das Signal "ABORT" an alle anderen Prozesse, meldet das Schicken des Signals "COMMIT" an den erfolgreichen Prozeß als Kommit-Aktion der Transaktion T an (d.h. das Triggern des "DB_COMMIT" wird an die Transaktion T delegiert) und gibt "0K" zurück. Ansonst schickt die Hilfsfunktion WARTE_AUF_UNABHÄNGIGEN_PROZESS das Signal "ABORT" an den Prozeß, der zwar das ALT_WAIT aktiviert hat, aber nicht erfolgreich terminierte, und startet erneut ein ALT_WAIT auf alle anderen Prozesse an.

Die Hilfsfunktion WARTE_AUF_ABHÄNGIGEN_PROZESS verhält sich folgendermaßen: War der beendete Prozeß erfolgreich, dann nimmt die Hilfsfunktion WARTE_AUF_ABHÄNGIGEN_PROZESS alle anderen abhängigen Prozesse in Bezug auf T zurück ("cancel") und gibt "0K" zurück. Dieses Rücksetzen ("cancel") entfernt einerseits den abhängigen Prozeß aus den Aktionen, die T ausführen muß (so als ob dieser abhängige Prozeß nie von T aufgerufen worden wäre
- das demonstriert die Eigenschaft des Zurücknehmens ("Transaktions-Backtracking") des Koordinations-System) und schickt andererseits auch das Signal "ABORT" an den Prozeß, was wiederum den Abbruch aller direkten Untertransaktionen von T bewirkt, in vorliegendem Fall von Ti, d.h. die Kompensationsaktion (= DB_ABORT im DBS, das noch immer im 2-Phasen-Kommit wartet) der Transaktion T1 wird ausgeführt, da T1 schon erfolgreich terminiert hatte. War der beendete Prozeß nicht erfolgreich, nimmt die Hilfsfunktion WARTE_AUF_ABHAENGIGEN_PROZESS den abhängigen Prozeß (das ist wieder eine Anwendung von "Transaktions-Backtracking") in Bezug auf T zurück und startet erneut ein ALT_WAIT auf alle anderen Prozesse.

Dieses Beispiel demonstriert, wie das Koordinationssystem als Steuerung für echte Datenbanktransaktionen dienen kann, wobei die Datenbanken autonom, d.h. unterschiedlich, sein können in Hinblick auf den unterstützten Transaktionsmechanismus. Speziell wurde gezeigt, daß Datenbanken, die ein herkömmliches 2-Phasen-Kommit unterstützen, und Datenbanken, die diese Eigenschaft nicht aufweisen, in einer einzigen globalen Transaktion koordiniert werden können, wobei die Eigenschaft der Aufhebung der Isolation von Transaktionen des Koordinationsmodells ausgenutzt wurde.

Weiters wird demonstriert, daß es mit Hilfe des Koordinations-System möglich ist, eine globale Transaktion zu koordinieren, für deren Untertransaktionen alternative Lösungsmöglichkeiten existieren, und daß auch die Kombination von "2-Phasen-Kommit"/"kein 2-Phasen-Kommit" möglich ist. Es wird garantiert, daß nur genau die benötigten Datenbank-Transaktionen abgeschlossen werden, d.h. daß z.B. nicht zwei Flüge gebucht werden oder zwei Hotels. Wenn angenommen zwei Fluglinien-Datenbanken gleichzeitig einen Flug "kommitted" haben, dann wird im ALT_WAIT der Hilfsfunktion WARTE_AUF_UNABHÄNGIGEN_PROZESS indeterministisch ein Flug gewählt (das wird der Prozeß sein, dessen PID schneller gesetzt wurde), und alle anderen Flugbuchungsprozesse werden abgebrochen. Wenn angenommen zwei Hotelbuchungs-Datenbank-Transaktionen gleichzeitig "DB_READY" gemeldet haben, dann wird die Hilfsfunktion WARTE_AUF_EINEN_ABHÄNGIGEN_PROZESS in ihrem ALT_WAIT auch einen der Prozesse, die diese Buchung reflektieren, indeterministisch auswählen und den anderen Prozeß zurücknehmen ("cancel"), was das Schicken des "DB_ABORT" an die entsprechende Hoteldatenbank triggert.

Wird für eine Buchungsgruppe (Flug/Hotel/Auto) keine Lösung gefunden, dann wird ein Abbruch der globalen Transaktion aufgerufen, was wiederum ein "Abort" aller bisher erfolgreichen Buchungen bewirkt, so daß zum Schluß keine Buchung durchgeführt wurde.

Trotz all dieser Eigenschaften garantiert die Transaktion T die Atomizität der globalen Transaktion auch im Fall von Netzwerkfehlern. Ob im Fall von Systemfehlern auch Atomizität garantiert wird, hängt von der Verteilungsstrategie ab, die beim Anlegen der Prozeßidentifizierer (PID) nach dem Start von T gewählt wurde. Ist die Strategie ein zuverlässiges Protokoll ("RELIABLE"), so wird auch im Fall eines Systemfehlers Atomizität bewahrt. Wenn angenommen der Rechner, auf dem die Transaktion T läuft, nachdem alle Prozesse parallel angestartet wurden, abstürzt, und weiters angenommen wird, daß alle Prozesse auf anderen Rechnern laufen als jenem, auf dem T läuft, und daß z.B ein Hotelbuchungsprozeß (z.B. bei Hotel I) bereits erfolgreich terminiert hat, muß nun, da die globale Transaktion durch den Absturz abgebrochen wurde, garantiert werden, daß die Hotelbuchung nicht durchgeführt wird. Beim Wiederanstart des Koordinations-Servers auf dem Rechner von T wird der Prozeßidentifizierer PID_Hotel I gefunden und erkannt, daß es sich um die PID eines abhängigen Prozesses handelt, dessen Transaktion abgebrochen wurde. Daher wird automatisch das Signal "ABORT" an diesen Prozeß geschickt, was das "DB_ABORT" der Hotelbuchung triggert. Wenn jetzt angenommen wird, daß auch eine Flugbuchung gutgegangen ist, so ist im gezeigten Beispiel kein Mechanismus vorgesehen, der wie bei der Hotelbuchung automatisch das Storno triggert. Da aber Flugbuchungen kompensierbar sind, wird davon ausgegangen, daß der Benutzer, wenn die Rechnung für den Flug kommt, ein Storno an die Fluglinie schickt. Es ist aber nicht kompliziert, die Transaktion T so zu ändern, daß auch im Fall einer Flugbuchung (d.h. der mittels eines unabhängigen Prozesses gesteuerten Datenbank-Transaktion) ein Abbruch automatisch erfolgt, wenn T abgebrochen wurde. Die notwendige Abänderung des Beispiels dahingehend besteht ausschließlich darin, Flugbuchungen auch als abhängige Prozesse anzustarten (und diese auch mit der Funktion WARTE_AUF_EINEN_ABHÄNGIGEN_PROZESS zu synchronisieren), wobei unverändert die Funktion K_BUCHEN aufgerufen wird.

Die Einstellbarkeit hinsichtlich Fehlertoleranz ist somit leicht über die Auswahl der verwendeten Verteilungsstrategie steuerbar. Weiters ist es sehr leicht, die Semantik des Beispiels abhängig von anderen Anforderungen abzuändern. Meist reicht die Modifikation weniger Zeilen; dies ist durch die Mächtigkeit der vom Koordinations-System unterstützten Kontrollmechanismen erklärbar.

Die gezeigte Transaktion T kann als Komponente (d.h. als Untertransaktion) in anderen Transaktionen verwendet werden. Sie demonstriert die Eigenschaft des nicht-kaskadierenden Kompensierens: wenn T kommitted hat, kann T nur noch als gesamtes Arrangement storniert werden, d.h. sollte die T umschließende Transaktion, nachdem T bereits gutgegangen ist, abgebrochen werden, dann wird für T die Kompensationsaktion "STORNO der Parisreise" aufgerufen; damit kann die Reise, deren Hotel- und Autobuchungsunterkomponenten nicht kompensierbar waren, kompensiert werden.

Nachfolgend wird in Tabelle 5 dieses Buchungsbeispiel in prozeduraler Pseudonotation veranschaulicht.

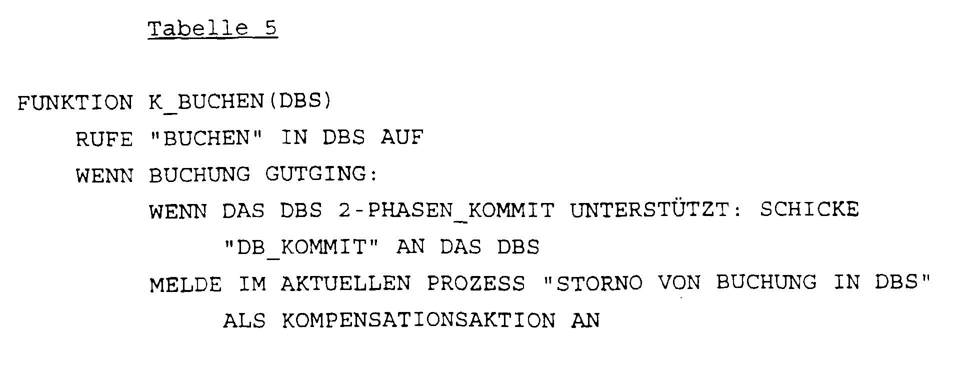

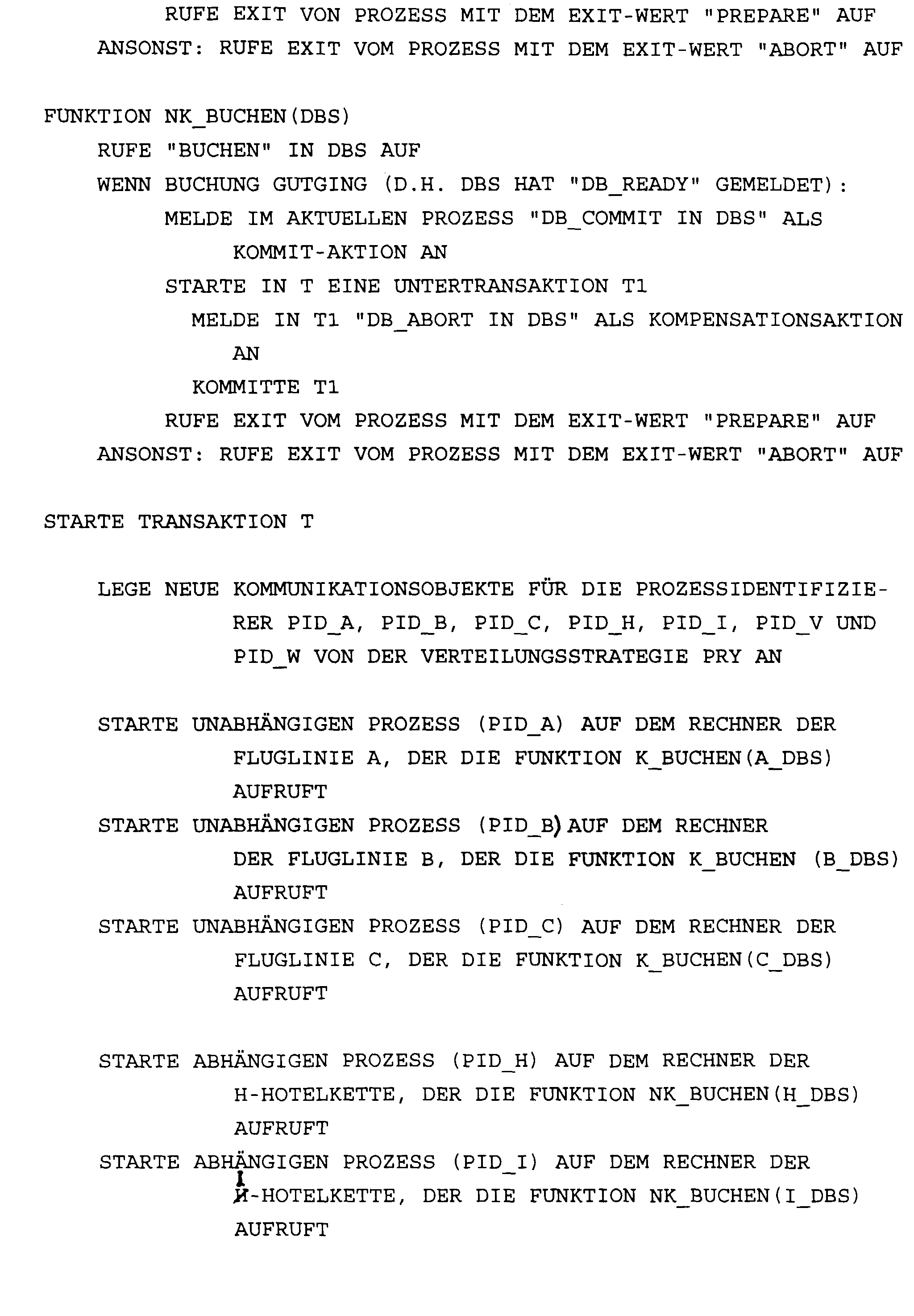

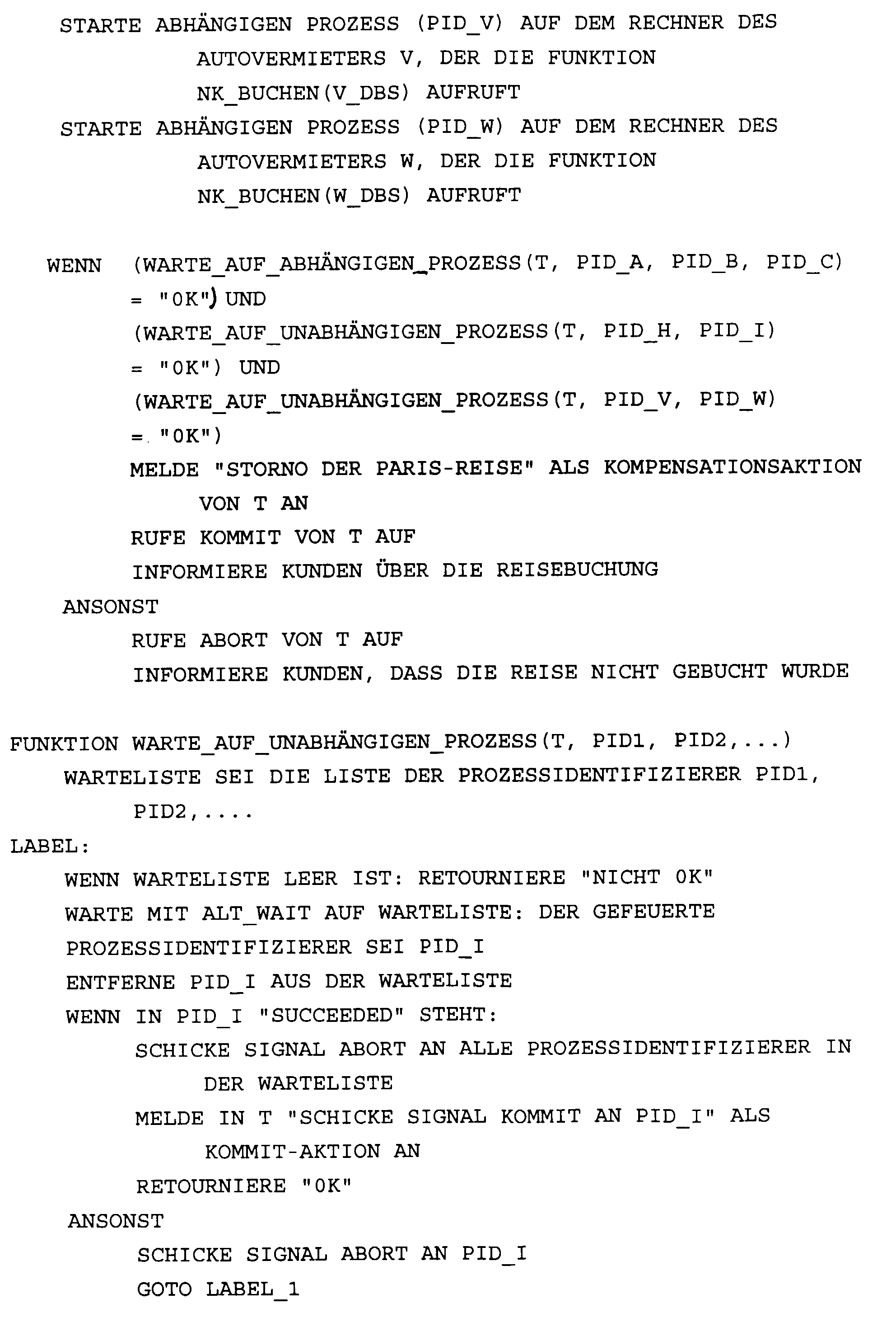

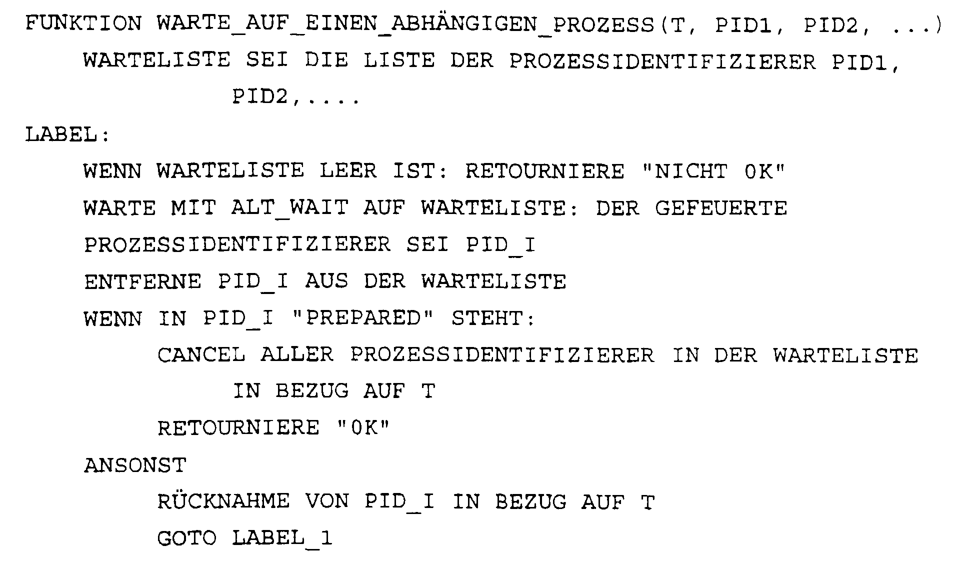

Wenn die Erfindung vorstehend anhand von detaillierten bevorzugten Ausführungsbeispielen näher erläutert wurde, so sind doch selbstverständlich Abwandlungen und Modifikationen im Rahmen der Erfindung, wie sie in den Ansprüchen definiert ist, moglich. So sind selbstverständlich die angegebenen Funktionsbezeichnungen beliebig, und die Funktionen können auch im Ablauf getauscht werden.

## Patentansprüche

1. System zur Koordination verteilter Programme, Dienstleistungen und Daten mit Hilfe von Anwendungsprogrammen in einem Netzwerk mit Rechnern, auf denen lokale Softwaresysteme (LSYS) (18, 19, 20) bedienende Koordinations-Server (CoKe) (21, 22, 23) laufen, wobei gemeinsame Objekte (9) als Kommunikationsobjekte zum Austausch von Nachrichten eingesetzt und Transaktionen zur Realisierung von Kommunikation verwendet werden, und die Kommunikationsobjekte (9) durch Objektidentifikationsnummern (OID) eindeutig identifiziert werden und nur Prozesse mit einer Referenz auf ein Kommunikationsobjekt auf dieses über den jeweiligen lokalen Koordinations-Server zugreifen dürfen, wobei die lokalen Software-Systeme (18, 19, 20) zumindest durch Funktionen zur Kontrolle von Transaktionen, zum Anlegen, Schreiben und Lesen von Kommunikationsobjekten, sowie zur Erzeugung und Überwachung von eindeutig identifizierten Prozessen erweitert sind, und wobei die Kommunikationsobjekte (9) mit Hilfe von Replikationsstrategien verwaltet werden,
dadurch gekennzeichnet,
dass alle Koordinations-Server (21, 22, 23) hinsichtlich der Grundfunktionalität eines verteilten Objekt-, Transaktions- und Prozessmanagements ident sind und zusammen ein globales Betriebssystem (24) festlegen,
dass zumindest einige der Objekte aktualisierbare Objekte sind und die zur Erweiterung der lokalen Softwaresysteme (18, 19, 20) vorgesehenen Funktionen ein transaktionales blockierendes Lesen der aktualisierbaren Objekte vorsehen und die Prozesse zum Zugreifen auf übergebene Kommunikationsobjekte autorisiert sind,
und dass zur Verwaltung der Kommunikationsobjekte (9) Verteilungsstrategien vorgesehen sind, von denen Anwendungsprogramme unabhängig sind, und die zumindest hinsichtlich der Wiederherstellbarkeit oder Nicht-Wiederherstellbarkeit von Kommunikationsobjekten (9) und Prozessen wählbar sind.

2. System nach Anspruch 1, dadurch gekennzeichnet, dass bei der Wahl der jeweiligen Verteilungsstrategie eine Basis-Strategie in Verbindung mit zusätzlichen, optionalen Strategieflags gewählt wird.

3. System nach Anspruch 1 oder 2, dadurch gekennzeichnet, dass die lokalen Softwaresysteme vom jeweiligen Koordinations-Server (21, 22, 23) startbar sind.

4. System nach einem der Ansprüche 1 bis 3, dadurch gekennzeichnet, dass Kommunikationsobjekte (9), auf die kein lokal laufender Prozess mehr eine Referenz hat, vom jeweiligen Koordinations-Server (21, 22, 23) automatisch gelöscht oder ausdrücklich freigebbar sind.

5. System nach einem der Ansprüche 1 bis 4, dadurch gekennzeichnet, dass über die sich in ihrer Gesamtheit als globales Betriebssystem (24) verhaltenden Koordinations-Server (21, 22, 23) heterogene Transaktionen bzw. Unter-Transaktionen auf verschiedene Rechner (X, Y, Z) verteilt werden.

6. System nach einem der Ansprüche 1 bis 5, dadurch gekennzeichnet, dass ein nicht-blockierendes transaktionales Lesen von aktualisierbaren Objekten vorgesehen ist.

7. System nach einem der Ansprüche 1 bis 5, dadurch gekennzeichnet, dass als transaktionales Prädikat das Schreiben in ein Objekt, das Starten einer Untertransaktion, das Verteilen eines Teils einer Transaktion auf einen anderen Rechner, das Spezifizieren einer Kompensationsaktion bzw. einer Kommit-Aktion vorgesehen sind.

8. System nach einem der Ansprüche 1 bis 7, dadurch gekennzeichnet, dass dann, wenn sicher ist, dass eine jeweilige Transaktion eine Vollzugsmeldung abgeben (kommitten) wird, eine Kommit-Aktion als Berechnung angestartet wird.

9. System nach einem der Ansprüche 1 bis 8, dadurch gekennzeichnet, dass unter den Funktionen für Transaktionen ein programmierbares Rücksetzen von transaktionalen Operationen, wie z.B. das Lesen oder Schreiben von Kommunikationsobjekten (9), für den Fall, Fehler bzw. Ausfälle in den Transaktionen dynamisch reparieren zu können, vorgesehen ist.

## Claims

1. A system for the coordination of distributed programs, services and data by using application programs in a network of computers where coordination servers (CoKe) (21,22,23) are running which serve local software systems (LSYS) (18,19,20), where shared objects (9) are used as communication objects to exchange messages and transactions are used to realize communication, said communication objects (9) being uniquely identified by object identification numbers (OID), and only processes possessing a reference to a communication object are granted access to it via the corresponding local coordination server, with the local software systems (18,19,20) being at least extended by functions for the control of transactions, for the creation, writing and reading of communication objects, and for the creation and supervision of uniquely identified processes, and with the communication objects (9) being administrated by means of replication strategies,
characterized in that
all coordination servers (21,22,23) are identical regarding their basic functionality for distributed object, transaction and process management, and taken together, form a global operating system (24),
at least some of the objects are updateable objects, and the functions provided for the extension of the local software systems (18,19,20) provide a transactional blocking reading of the updatable objects, and the processes are granted access to passed communication objects, and
distribution strategies are provided for the administration of communication objects (9), with the application programs not depending on said distribution strategies, and which distribution strategies are selectable at least with respect to the recoverability or non-recoverability of communication objects (9) and processes.

2. A system according to claim 1, characterized in that when choosing the respective distribution strategy, a basic strategy is selected in combination with additional, optional strategy flags.

3. A system according to claims 1 or 2, characterized in that the local software systems can be started by the corresponding coordination server (21,22,23).

4. A system according to any one of claims 1 to 3, characterized in that communication objects (9), to which no locally running process possesses a reference any more, are automatically cleared by the corresponding coordination server (21,22,23) or can be explicitly freed.

5. A system according to any one of claims 1 to 4, characterized in that heterogeneous transactions or subtransactions are distributed to different computers (X,Y,Z) via the coordination servers (21,22,23) which, taken together, behave as a global operating system (24).

6. A system according to any one of claims 1 to 5, characterized in that a non-blocking transactional read is provided for updateable objects.

7. A system according to any one of claims 1 to 5, characterized in that the writing into an object, the starting of a subtransaction, the distribution of part of a transaction to another computer, the specification of a compensation action or of an on-commitment action are provided as transactional predicate.

8. A system according to any one of claims 1 to 7, characterized in that an on-commitment action is started as a computation if it is sure that a transaction will commit.

9. A system according to any one of claims 1 to 8, characterized in that among the functions for transactions a programmable backtracking of transactional operations, e.g. reading or writing of communication objects (9), is provided to be able to dynamically repair faults or failures in the transactions.

## Revendications

1. Système pour coordonner des programmes distribués, des prestations de services et des données à l'aide de programmes d'application dans un réseau comportant des ordinateurs, sur lesquels fonctionnent des serveurs de coordination (CoKe) (21,22,23), qui commandent des systèmes logiciels locaux (LSYS) (18,19,20), dans lequel des objets communs (19) sont utilisés en tant qu'objets de communication pour l'échange d'informations, et des transactions sont utilisées pour réaliser une communication, et les objets de communication (9) sont identifiés de façon unique par des numéros (OID) d'identification d'objets et seuls des processus ayant une référence à un objet de communication peuvent accéder à cet objet par l'intermédiaire du serveur local respectif de coordination, les systèmes logiciels (18,19,20) étant étendus au moins à l'aide de fonctions pour le contrôle de transactions, pour la création, l'écriture et la lecture d'objets de communication ainsi que pour la production et le contrôle de processus identifiés de façon unique, et dans lequel les objets de communication (9) sont gérés à l'aide de stratégies de reproduction,
caractérisé en ce
que tous les serveurs de coordination (21,22,23) sont identiques en ce qui concerne la fonctionnalité de base d'une unité de gestion distribuée d'objets, de transactions et de processus et fixent conjointement un système global de fonctionnement (24),
qu'au moins quelques-uns des objets sont des objets pouvant être actualisés et les fonctions prévues pour l'élargissement des systèmes logiciels (18,19,20) prévoient une lecture transactionnelle bloquante des objets pouvant être actualisés, et les processus pour l'accès à des objets de communication transférés sont autorisés, et
que pour la gestion des objets de communication (9), il est prévu des stratégies de distribution, dont des programmes d'application sont indépendants et qui peuvent être sélectionnées au moins en rapport avec la possibilité de rétablissement ou la non-possibilité de rétablissement d'objets de communication (9) ou de processus.

2. Système selon la revendication 1, caractérisé en ce que lors du choix de la stratégie respective de distribution, une stratégie de base est sélectionnée en liaison à des indicateurs supplémentaires facultatifs de stratégie.

3. Système selon la revendication 1 ou 2, caractérisé en ce que les serveurs respectifs de coordination (21,22,23) peuvent faire démarrer les systèmes logiciels locaux.

4. Système selon l'une des revendications 1 à 3, caractérisé en ce que des objets de communication (9), auxquels plus aucun processus local en cours ne se réfère, peuvent être effacés automatiquement ou peuvent être libérés expressément par le serveur respectif de coordination (21,22,23).

5. Système selon l'une des revendications 1 à 4, caractérisé en ce que des transactions hétérogènes ou des sous-transactions sont réparties entre différents ordinateurs (X,Y,Z) par des serveurs de coordination (21,22,23), qui se comportent dans leur ensemble à la manière d'un système global d'exploitation (24).

6. Système selon l'une des revendications 1 à 5, caractérisé en ce qu'il est prévu une lecture transactionnelle non bloquante d'objets pouvant être actualisés.

7. Système selon l'une des revendications 1 à 5, caractérisé en ce qu'il est prévu, comme titre transactionnelle, l'écriture dans un objet, le démarrage d'une sous-transaction, la distribution d'une partie d'une transaction à un autre ordinateur, la spécification d'une action de compensation ou une action de délivrance d'ordre d'exécution.

8. Système selon l'une des revendications 1 à 7, caractérisé en ce que, lorsque l'on est certain qu'une transaction respective délivre (commande) une signalisation d'exécution, une action de délivrance d'ordre d'exécution est déclenchée en tant que calcul.

9. Système selon l'une des revendications 1 à 8, caractérisé en ce que dans le cadre des fonctions pour des transactions, il est prévu une remise à l'état initial programmable d'opérations transactionnelles, comme par exemple la lecture ou l'écriture d'objets de communication (9) dans le cas où des erreurs ou des défaillances dans les transactions peuvent être réparées de façon dynamique.
